# EUROPEAN PATENT APPLICATION

(11) **EP 0 990 983 A1**
(43) Date of publication of application: **05.04.2000**
(21) Application number: 98309216.4
(22) Date of filing: 11.11.1998
(51) Int. Cl.: G06F 9/44

(54) **Automation of the design recovery and forward engineering of legacy applications**

(30) Priority: 30.09.1998 CA 2249252
(71) Applicant: 3534421 Canada Corporation, Nepean, Ontario, K2E 7V7 (CA)
(72) Inventor: Whitworth, Gary David, Stittsville, Ontario K2S 1M4 (CA); Christensen, Rolf Christopher, Aylmer, Quebec J9J 2G5 (CA)
(74) Representative: Foster, Mark Charles

(57) **Abstract**

A method of recovering design information of a legacy application program 3A comprising translating the legacy application program into tokens representing elements of the program, and automatically rewriting the legacy application program using the tokens to define elements to be included in the rewritten program.

## Description

### FIELD OF THE INVENTION

This invention relates to methods of operating computers, and in particular to a method of recovering design information of a legacy application program.

### BACKGROUND TO THE INVENTION

As time passes, new computer program languages are created, and old ones fall out of favor. The number of programmers who are sufficiently knowledgeable to maintain an old program gradually decreases. Background documentation concerning the structure of such programs is lost. Indeed, many existing (legacy) programs have been in use for decades, with few, if any programmers left who can modify them, and with little or no documentation which can be used as a base from which modification can be made.

The above problems have become very clear with the onset of the "year 2000 problem", by which programs which had been written designating the year using the last two numerical digits instead of four will create errors with the turn of the century. These legacy programs must be modified to correct the year to four digits and to be able to handle four digits, but due to insufficient programmers who know these legacy programs, learning and correction of the programs is generally time consuming and therefore is costly.

In order to avoid the above problems, it is sometimes desirable to substitute a new program written in a more modern and widely used language. However, to do this, the business rules processed by the legacy program must be uncovered, and the program completely rewritten in the new language. Both the uncovering and rewriting processes are generally very time consuming and therefore costly.

### SUMMARY OF THE INVENTION

The present invention is a method of automating the recovery of design information of a legacy application program, and which can be used to provide a modified representative of the legacy application program in the previous language or to provide a new application program in a different computer language, or can be used for display of various aspects of the design information of the legacy application. Since the process is automated both in the analysis and program creation, it takes considerably less time and cost than in the past.

Further, documentation of the legacy application, modified legacy application or new application can be automated, thus making analysis of the application easier.

In accordance with an embodiment of the present invention, a method of recovering design information of a legacy application program comprises using a common set of tokens to represent corresponding elements of a plurality of different application programs which are in the same or in different languages, and using a set of the tokens relating to a particular legacy application program to display aspects of the legacy application program or to construct another application program in the same or in a different language which is similar to or is modified from the legacy application program.

In accordance with another embodiment, a method of recovering design information of a legacy application program is comprised of translating the legacy application program into tokens representing elements of the program, and automatically rewriting the legacy application program using the tokens to define elements to be included in the rewritten program.

In accordance with another embodiment, a method of recovering design information of a legacy application program comprises:
(a) parsing an application program to obtain plural parsed program parts,
(b) storing plural tokens which are common to similar functioning program parts of various computer languages in a database,
(c) mapping the parsed program parts to corresponding ones of the common tokens in the database, and storing the map in the database, and
(d) using the mapped tokens to generate a modified legacy application, a new application in a same language as the legacy application, a new application in a language different from the legacy application, or for display of aspects of the legacy or new application via a user interface.

### BRIEF DESCRIPTION OF THE DRAWINGS

A better understanding of the invention will be obtained by a consideration of the detailed description below, in conjunction with the following drawings, in which:
Figure 1 is a block diagram of the preferred embodiment of the invention,
Figure 2 is a block diagram of a preferred embodiment of an engineering interface which is used in the embodiment of Figure 1,
Figure 3 is a representation of a portion of a data model,
Figure 4 is a representation of portions of the data model that represents navigator data structures in more detail, and
Figure 5 is a screenshot of a tree view for the preferred embodiment of the invention.

### DETAILED DESCRIPTION OF A PREFERRED EMBODIMENT

A glossary of terms used in the description below follows:
- ANSI: American National Standards Institute
- API: Application Programmatic Interface
- Application: A series of inter-related programs which, when used together, automate a solution for a business problem
- Application Metadata: Data which describes the objects and methods of an application
- Borland Interbase: A Commercial Relational Database Management System owned by the company currently known as Borland
- COBOL: Common Business Oriented Language
- Data Model: A representation of the data structures and relationships between these data structures which describe a business application
- Data Structure: One or more data elements in a particular data relationship usually used to describe some entity
- Grammar: A syntactical representation of a programming language
- Legacy Application Program: An older application (usually written in a third generation language which automates a business function or functions
- LEX: A commercially available software application which is used to tokenize strings in a human readable text file(s) (Lexical Analyzer)
- Metadata: Data which describes the structures in a database
- ODBC: Open Database Connectivity
- Oracle RDBMS: A Commercial Relational Database Management System owned by the company currently known as Oracle Corporation
- Parser: A computer program which is used to break down the grammar of a particular computer programming language
- PL/SQL: A computer programming language known as Procedure Language Structures Query Language commercially owned by Oracle Corporation
- PowerHouse: A fourth generation programming language owned by Cognos Corporation
- RDBMS: Relational Database Management System
- Relational Database: A data base constructed out of normalized data structures
- Repository: A relational database used to store the metadata and application metadata of a business computer application
- Reverse Engineering: The process of decomposing the objects and methods which make up a computer program into a format easily understandable by a person
- SQL: Structures Query Language
- Symbol: A numeric representation of an entity
- Token: An individual object in a repository
- Transaction: The logical grouping of objections on a database that can be performed or undone against a relational database
- Tree View: A user interface which operates on the same principals as Microsoft Explorer™ interface
- User Interface: A computer display operated by the user of an application to facilitate the usage of the application
- Visual Basic: A computer language owned by Microsoft Corporation that is used to build Windows Based Applications
- YACC: Yet another Compiler Compiler. A program which aides in the development of computer parsers usually coupled with the grammar of a computer language.

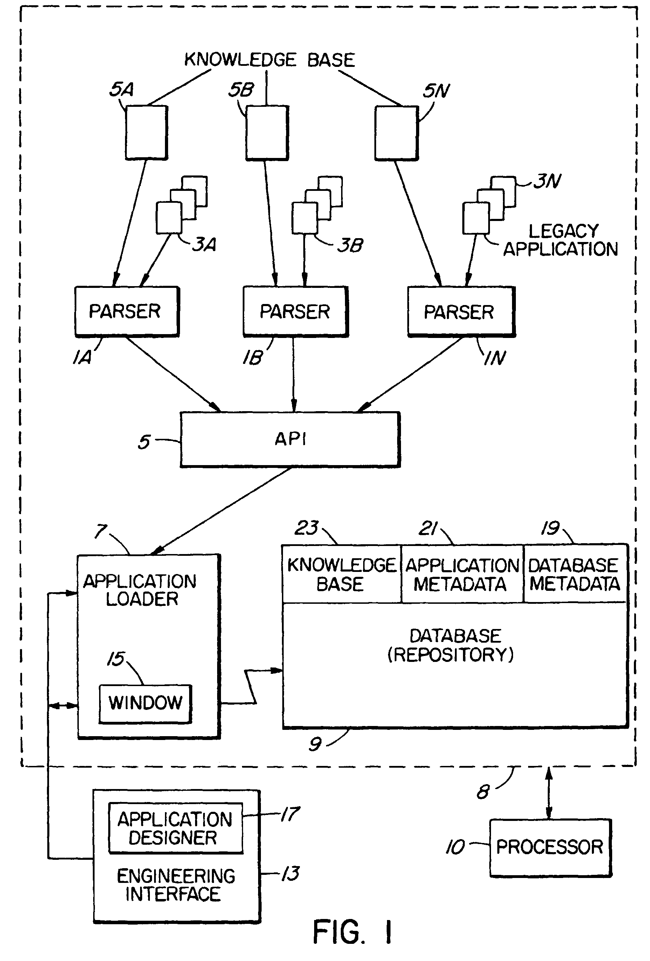

Turning to Figure 1, a parser 1A is used to break out the various parts of a legacy application program 3A. Indeed, it is preferred that plural parsers 1A - 1N should be used in the invention, each one corresponding to a different program language, e.g. COBOL, PowerHouse, Interbase, ANSI SQL, etc. Thus programs 3A - 3N written in any source legacy language may be parsed by a corresponding parser.

Each parser scans the legacy application program, and accesses a corresponding knowledge base 5A - 5M specific to its language, which stores representations of every command and option available in the source program language, i.e. its "grammar", to enable it to parse a program having source code written in its language. The legacy code is thus decomposed into individual objects and their associated methods, based on the knowledge base.

The objects, methods and business rules generated by the parser are in the form of standard tokens for all parsers, which can be also considered intermediate files which are readable by the application interface API, and which has a "front end" 7 which interfaces a preferably relational database 9 (i.e. repository). The repository stores the standard tokens in a record or in a separate database for the particular legacy program which has been parsed. The parsed program parts are thus mapped to corresponding ones of plural common tokens in the repository.

While the above is a preferred way of mapping the program parts to corresponding common tokens, alternatively the parsers can generate files or words which, when applied to the database, are stored as pointers to specific standard tokens which have already been prestored.

It is an important aspect of the invention that common tokens are used for all legacy languages. These common tokens can then be looked up and used for reverse engineering of a legacy program, for documentation, for recreation of the legacy program with modification, and for creation of a new program in the same language as the legacy program or in a different language than the legacy program, to provide the same tasks the legacy application was developed to perform. All of the above programs can be stored in a memory 8 coupled to a processor of a server, for operating the method described herein.

An engineering interface 13 stored on another computer (or on the same server) is coupled to the database 9 via a user window 15 provided by the application front end 7. This allows a user to access the records specific to a program, to modify it, to obtain the stored data to provide to another application design program 17 (e.g. Oracle Designer/2000) to create a modified legacy application program or to create a new application program in a different language.

Thus under control of a user, the engineering interface accesses the desired legacy application program records from the database 9 via window 15, sends its tokens to forward engineering program 17 and commands it to translate the tokens to a new program in a different language. It can be instructed by the application designer to modify all of a particular parameter (such as a two digit date indicator token to four digits), while creating a new application program using the same design rules indicated by the common tokens used in the translated legacy application. The new application program can be in the legacy language, resulting in the automatic correction of the date in the legacy application program to avoid the "year 2000" problem described earlier. As the newly reconstituted program is being created, routines thereof are used by the engineering interface 13 for checking the recreated tokens against those designated in the stored database or record relating to the legacy application, so that errors in the recreated program can be corrected.

Thus the common tokens are used in a relational database where the tokens represent common elements used in all or at least a large number of programs. The database 9 (repository) memory 8 not only stores the tokens, but also preferably stores all of the knowledge databases, the application program interface 5 functions, and the objects methods and business rules of a legacy or new program.

The application front end can also access the record or database related to a particular legacy program, and document it, e.g. by providing a display or printout of menu-related hierarchy of programs, etc.

In respect of parsers relating to particular languages:

Preferably the PowerHouse parser is comprised of four sub-parsers, including the PowerHouse Dictionary Language (PDL), the PowerHouse Reporting language (QUIZ), the PowerHouse batch update language (QTP) and the PowerHouse Forms Language (QDESIGN). Each of these sub-languages includes a separate knowledge base that is used to map the PowerHouse language to the API 5.

The COBOL parser should reverse engineer ANSI COBOL code including (but not limited to) the Working Storage, Data Division and Procedure Divisions as well as the application logic coded in the legacy application.

For legacy based applications that use Borland Interbase as a database manager, the Borland Interbase GDML Parser is preferred to be used to recover the design from databases using this technology. The parser is capable of parsing all relational objects that can be defined in a Borland Interbase schema including (but not limited to) Relational tables, Relational Fields, Indexes, Index Segments, Triggers, Procedures as well as Database Views.

For legacy applications that use ANSI SQL data definition language to create their legacy RDBMS, an ANSI SQL Parser should be used to recover the design from databases using this technology. The parser should parse all relational objects that can be defined in a ANSI SQL schema including Relational tables, Relational Fields, Indexes, Index Segments, Triggers, Procedures as well as Database Views.

The common dialect of the present embodiment is a language referred to herein as the Chameleon API. The primary purpose of each language parser is to read the legacy source application file and to re-write the legacy code into the Chameleon API language. Once this has been completed, the re-written module is then loaded into the repository using the front end (loader) 7.

The heart of this embodiment is the database 9 repository. This is the area in which all the application and database objects, methods and business rules generated is physically housed.

The database 9 repository stores information and business rules for business and data services, as well as user interface and appearance control for user services. This environment independent information is preferably stored in an ODBC compliant design database and is intended to be used when building an application. The use of an open repository enables iterative design and reuse and meets multi-developer requirements. Code is generated from design information in the database 9 repository.

The results of the design activities include a data model, business rules and design information and application preferences which are stored in the database 9 repository.

A database metadata 19 section of the database 9 repository is used to store the data definition attributes of the legacy application. This area of the database 9 repository preferably stores information about the following objects:
Nodes
Database Roles
Databases
Domain Drop Downs
Domains
Element Drop Downs
Element Permissions
Elements
Index Segments
Indexes
Lookup Tables
Relation Elements
Relation Permissions
Relations
Sequences
Stores Procedures
Structures
Template Drop Downs
Templates
Trigger Elements
Triggers
User Roles
Users
View Sources

An application Metadata 21 section of the repository is used to store the objects, methods and business rules associated with the legacy application. This area of the database 9 repository stores information about the following objects:
Assignment
Blob
Block of Code
Called Module
Node
Node Element
Node List
Node Select
Node Sort
Comment
Condition
Condition Detail
Coordinate
Core Function
Core Function Xref
Core Message
Cross Reference
Cursor
Cursor Key
Database Update
Event
Event Detail
External
Field Property
Field Value
Function
Highlight
Highlight Detail
Index Segment
Legacy Source
Literal
Log File
Lookup
Message
Method
Module
Object
Panel
Panel Graph
Passing List
Procedure
Procedure Detail
Project
Project Directory
Receiving List
Relation
Relation Access Field
Relation Accesses
Relation Field
Relation Index
Report Section Table
Report Tables
Screen Property
Sort Option
Stack
Stack Detail
Stored Procedure
Suminto Operation
Transaction
Transaction Relation
User
Variable

A knowledge base 23 is a collection of tables that are used to document the grammar of the legacy-based application. This includes documenting the "command" keyword and all its options and the mapping of these to the API 5. This area of the repository should store information about the following objects:
API Functions
API Parameters
Element Usages
Functions
Function Inputs
Function Options
Function Results
General Terms
General Term Keywords
General Term Keyword Options
Keywords
Keyword Options
Keyword Option Defaults
Procedures
Procedure Options
Verbs
Verb Options
Table Types
Table Values

The primary responsibility of the API loader 7 is to load the intermediary files created by the parsers into the database 9 repository. Each API loader script that is read and parsed should be checked for correctness and validated against the data already loaded. If any conflicts arise, the entire transaction should be rolled back and an error written to a log file. Otherwise, the API loader creates the appropriate objects for the database 9 repository.

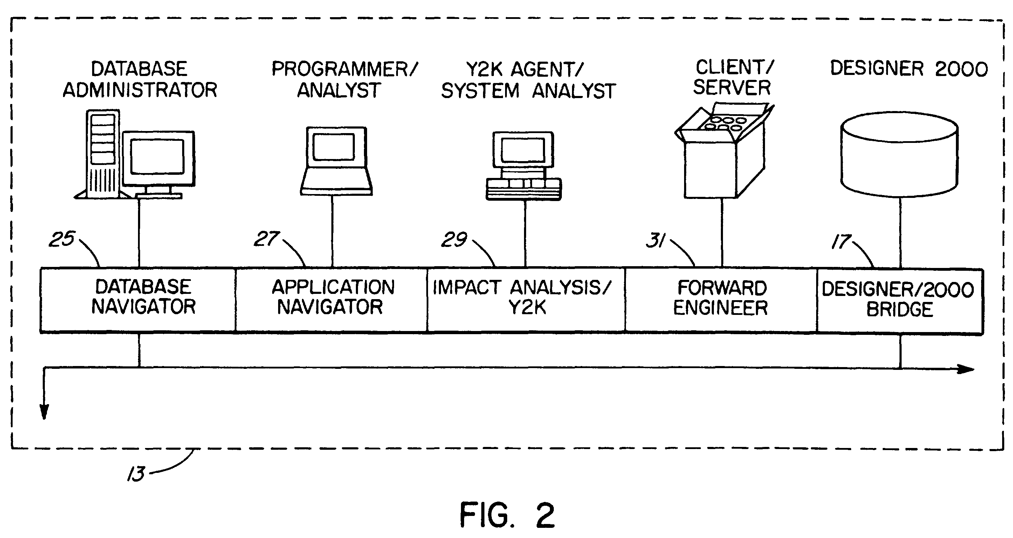

The engineering interface 13 is for use by application developers to navigate around the various objects and methods of the application; to report on, analyze as well as to refine the extracted business information housed by the database 9 repository. A more detailed block diagram of the preferred form of engineering interface is shown in Figure 2.

A database navigator 25 is preferably a Microsoft Explorer^{™} style interface to the objects that make up the data dictionary and physical database of the legacy application. This interface allows the developer to drill to detail on objects such as relational tables, database views, stored procedures as well as triggers. In addition to the navigational capabilities of this interface, it allows the developer to enhance and modify the underlying physical structure of the database by adding, deleting and modifying the attributes that make up the database component of the legacy application.

Similar to the database navigator, an application navigator 27 allows the developer to drill down on the functional modules that make up the application including Screens, Reports and Batch Processes. Using this interface the developer, analysts and end users can quickly pinpoint objects located within the module and make any adjustments necessary. This component also preferably includes an editor, which allows you to view the business rules expressed in your application in, for example, a Microsoft style notepad editor.

If the legacy application contains a menu style interface, the engineering interface preferably automatically recreates this system to display or print the hierarchy of the application. This allows IT developers and business users to quickly navigate to the module they need to see at the click of a button.

An impact analysis module 29 should provide features that allow assessment of the impacts of making changes to the existing and new application. This modules should include an impact analysis navigator as well as provide a number of standard reports that allow review of the impacts based on any object in the database repository. This should include for example the ability to assess the impact of removing database fields, the ability to determine any bottlenecks that may be present in the current application, etc.

Because the design recovery process has been automated, the speed at which the information is loaded into the repository is only limited by the speed of the hardware on which this invention operates. In addition, because language specific parsers are used, they must understand the complete grammar of the legacy source language in order for the process to be successful. Because of this, all the important objects, methods and business rules coded in the legacy application should be captured.

A forward engineering application 31 is preferably used to rebuild the legacy application, and forward engineer reports, screens and batch processes to a number of computing platforms including PL/SQL, Visual Basic and Dynamic C modules for batch processes.

An application designer 17 bridge is preferably also used to load the application directly into Oracle's Designer 2000, once the legacy application has been loaded into the database repository 9.

All of the elements 25, 27, 29, 31 and 13 interface the application front end 7 and its window 17, to access the database 9 depository.

The invention can be operated on a server preferably comprised of an IBM compatible computer which uses a Pentium I ™ or Pentium II ™ processor, to which 128 MB of random access memory is coupled, and to which a hard disk drive (or equivalent) is also coupled comprising at least 1 GB of memory space, and on which the programs Windows 95 ™ or Windows NT ™ and Oracle ™ 7 or 8 are resident. The repository containing the parsers, knowledge base, API application front end are stored on the hard disk drive. The engineering interface can be operated by a similar computer which is in communication with the server, the engineering interface being comprised preferably of at least a Pentium I ™ or Pentium II ™ processor to which 64 MB of random access memory is coupled, and a hard disk drive (or equivalent) with at least 1 GB of memory space. The latter computer preferably also should have Windows 95 or Windows NT 4.0 resident on its hard disk drive. However, other computers and programs can be used, as long as they are capable of carrying out the methods described herein.

### EXAMPLE

The following is a detailed example of processing of a typical PowerHouse source language program file. The example provided represents a typical, but simplified version of a PowerHouse QUIZ program.

This example provides four QUIZ commands. The first statement indicated that a table named ORDER in the SALES database is to be read. The second statement is the definition of a variable called D_DISCOUNT that is used to calculate a 7% discount on all orders over $10,000. The third statement is used to identify the information to be printed on the report while the last statement is used to identify the compiled name of the program.

### A. SAMPLE QUIZ SOURCE CODE

### ACCESS ORDER IN SALES ALIAS SALES_98

DEFINE D_DISCOUNT NUMERIC * 7 = &
(ORDER_AMT * (7/100)) &
IF ORDER_AMT > 10000 ELSE 0
REPORT ORDER_ID ORDER_AMT D_DISCOUNT
BUILD ORDERREP

The following follows the above example through the various processes that have been described above.

### B. KNOWLEDGE BASE DATA/STRUCTURES

Each parser is created preferably using Yet Another Compiler Compiler (YACC) and a Lexical Analyser (Lex). In addition to these two components, the parsers should incorporate a third component, a knowledge base (KB) to store the mapping of the keywords that make up the various commands in the source language as well as to map to the application programmatic interface (API) functions and parameters that are to be invoked once a grammar rule in YACC has been processed.

The following section describes four of the main tables that make up the KB.

### B.1 KBKEYWORD

The KBKEYWORD table is used to store all the command keywords in the PowerHouse source language. In this example, there are four command keywords present; **ACCESS, DEFINE, REPORT, BUILD.**

The KBKEYWORD table is used to store all the keywords available in Powerhouse and is made up of three fields; Yacc_Keyword_Symbol, Keyword_Name and Lookahead_Token. Each of these fields is described as follows:
- Yacc_Keyword_Symbol:: This field stores the actual command symbol used in the YACC grammar specification. These correspond to the %token commands specified in the grammar file.
- Keyword_Name:: This field stores contains the actual string found in the legacy source code of the keyword that will be mapped by the Lexical Analyser (Lex). This field is actually used to lookup the token returned by Lex against the KBKeyword table. Once a valid match is encountered, the Yacc_Keyword_Symbol is returned to Yacc by Lex.
- Lookahead_Token:: This field stores a symbol which represents whether the next token after the keyword is read is an identifier or not.

| **Yacc_Keyword_Symbol** | **Keyword_Name** | **Lookahead_Token** |
|---|---|---|
| K_ACCESS | Access | IDENTIFIER |

### B.2 KBKEYWORD OPTION

The KBKEYWORD_OPTION table is used to store all the keyword options available in the PowerHouse source language for a particular command keyword. In this example, the **ACCESS** statement contains a keyword option called **ALIAS.**
- Yacc_Keyword_Symbol:: This field stores the actual keyword symbol used in the YACC grammar specification.
- Yacc_Option_Symbol:: This field stores the actual keyword option symbol used in the YACC grammar specifications that represents an option on a command keyword.
- Keyword_Name:: This field contains a string representing the Powerhouse Keyword option that is read by Lex. This field is actually used to lookup the token returned by Lex against the KBKeyword_Option table. Once a valid match is encountered, the Yacc_Option_Symbol is returned to Yacc by Lex.
- Lookahead_Token:: This field stores a symbol which represents whether the next token after the keyword option is read is an identifier or not.

| **Yacc Keyword Symbol** | **Yacc Option Symbol** | **Keyword Option** | **Lookahead Token** |
|---|---|---|---|
| K_ACCESS | ALIAS | Alias | IDENTIFIER |
| K_ACCESS | ANDX | And | NOTIDENT |
| K_ACCESS | IN | In | NOTIDENT |
| K_ACCESS | LINK | Link | NOTIDENT |
| K_ACCESS | OF | Of | IDENTIFIER |
| K_ACCESS | OPTIONAL | Optional | NOTIDENT |
| K_ACCESS | RECORD | Record | NOTIDENT |
| K_ACCESS | TO | To | NOTIDENT |
| K_ACCESS | VIAINDEX | Viaindex | NOTIDENT |

### B.3 KBAPI_FUNCTION

The KBAPI_FUNCTION table is used to store a mapping of all the API functions that can be called by the Parser. This table is made up of two fields; Api_Function_Symbol and API_Function_Name. Each of these fields are described as follows:
- Api_Function_Symbol:: This field stores the actual function symbol used in the API specification. This is the actual field that is used to lookup against this table.
- Api_Function_Name:: This field stores the name of the API function that is to be invoked by the parser once a grammar rule has been processed.

| **Api_Function_Symbol** | **Api_Function_Name** |
|---|---|
| _RPACCESS | iu_rpaccess |

### B.4 KBAPI_PARAMETER

The KBAPI_PARAMETER table is used to store a mapping of all the API parameters that are available for a particular API function. This table is made up of four fields;
Api_Function_Symbol, API_Parameter_Symbol,
Api_Parameter_Name1 and Api_Parameter_Name2,

- Api_Function_Symbol:: This field stores the actual function symbol used in the YACC grammar specification that represents the function that is being specified.
- Api_Parameter_Symbol:: This field stores the actual parameter symbol used in the YACC grammar specification that represents the paramer that is being specified.
- Api_Parameter_Name1:: This field stores the 1^{st} actual parameter name that is to be returned to the YACC grammar.
- Api_Parameter_Name1:: This field stores the 2^{nd} actual parameter name that is to be returned to the YACC grammar.

| **Api Function Symbol** | **Api Parameter Symbol** | **Api Parameter Name1** | **Api Parameter Name2** |
|---|---|---|---|
| _RPACCESS | _ACCESS_NAME | p_access_name | p_access_name |
| _RPACCESS | _ALIAS_NAME | p_alias_name | p_alias_name |
| _RPACCESS | _AUTOCOMMIT_FLAG | p_autocommit flag | p_autocommit flag |
| _RPACCESS | _AUTOLINK_FLAG | p_autolink_flag | p_autolink_flag |
| _RPACCESS | _BACKWARDS_FLAG | p_backwards_ flag | p_backwards_ flag |
| _RPACCESS | _DATABASE | p_database_name | p_database_name |
| _RPACCESS | _GENERIC_FLAG | p_generic_flag | p_generic_flag |
| _RPACCESS | _INDEX_NAME | p_index_name | p_index_name |
| _RPACCESS | _LINKAGE_TYPE | p_linkage_type code | p_linkage_type code |
| _RPACCESS | _NAME | p_relation_name | p_relation_name |
| _RPACCESS | _OPTIONAL_FLAG | p_optional_flag | p_optional_flag |
| _RPACCESS | _ORDER_TYPE_CODE | p_order_type code | p_order_type code |
| _RPACCESS | _ORDERED_FLAG | p_ordered_flag | p_ordered_flag |
| _RPACCESS | _PHYSICAL_NAME | p_physical_name | p_physical_name |
| _RPACCESS | _SEQUENTIAL_FLAG | p_sequential flag | p_sequential flag |
| _RPACCESS | _UNIQUE_FLAG | p_unique_flag | p_unique_flag |
| _RPACCESS | _WARNING_FLAG | p_nowarn_flag | p_nowarn_flag |

### C. LANGUAGE GRAMMAR FOR THE QUIZ ACCESS STATEMENT

The following is a representation of a portion of the grammar that is used to parse and process the ACCESS statement in the source file of the example given above.

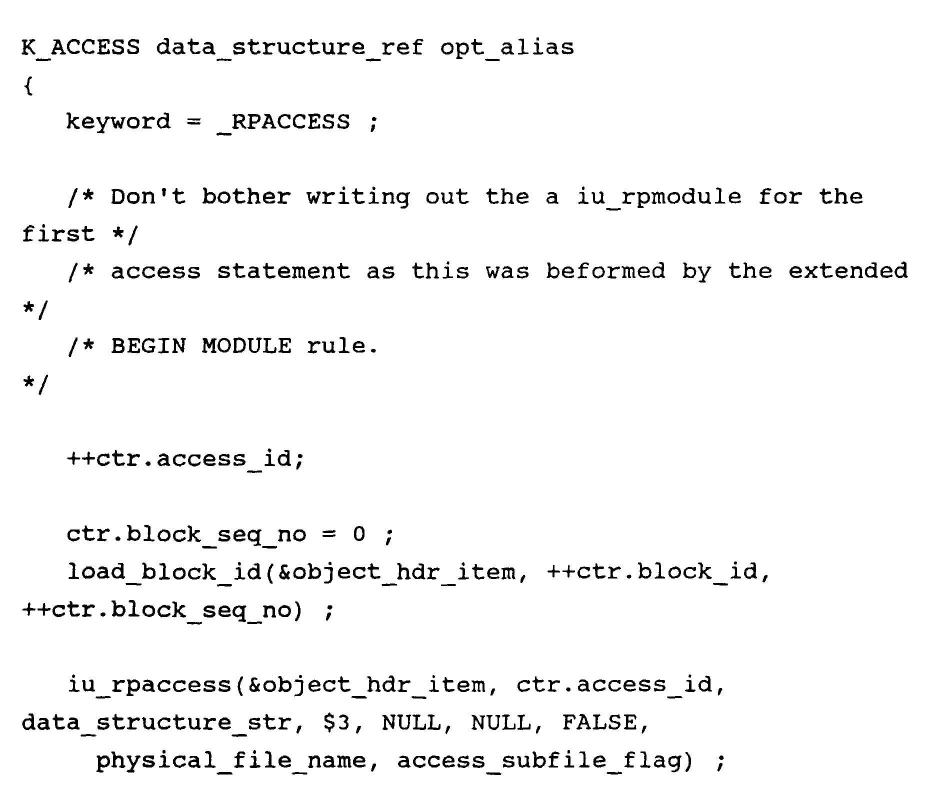

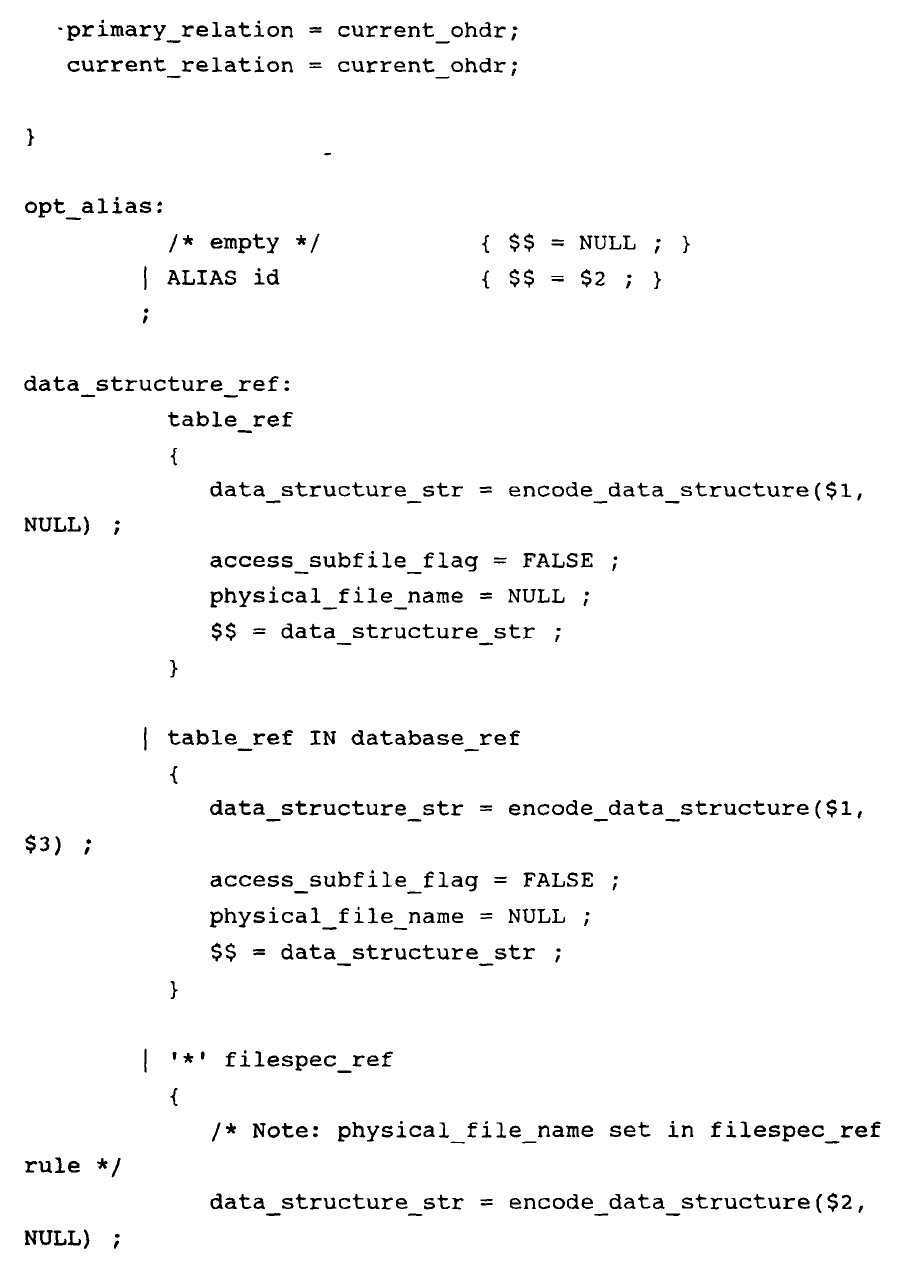

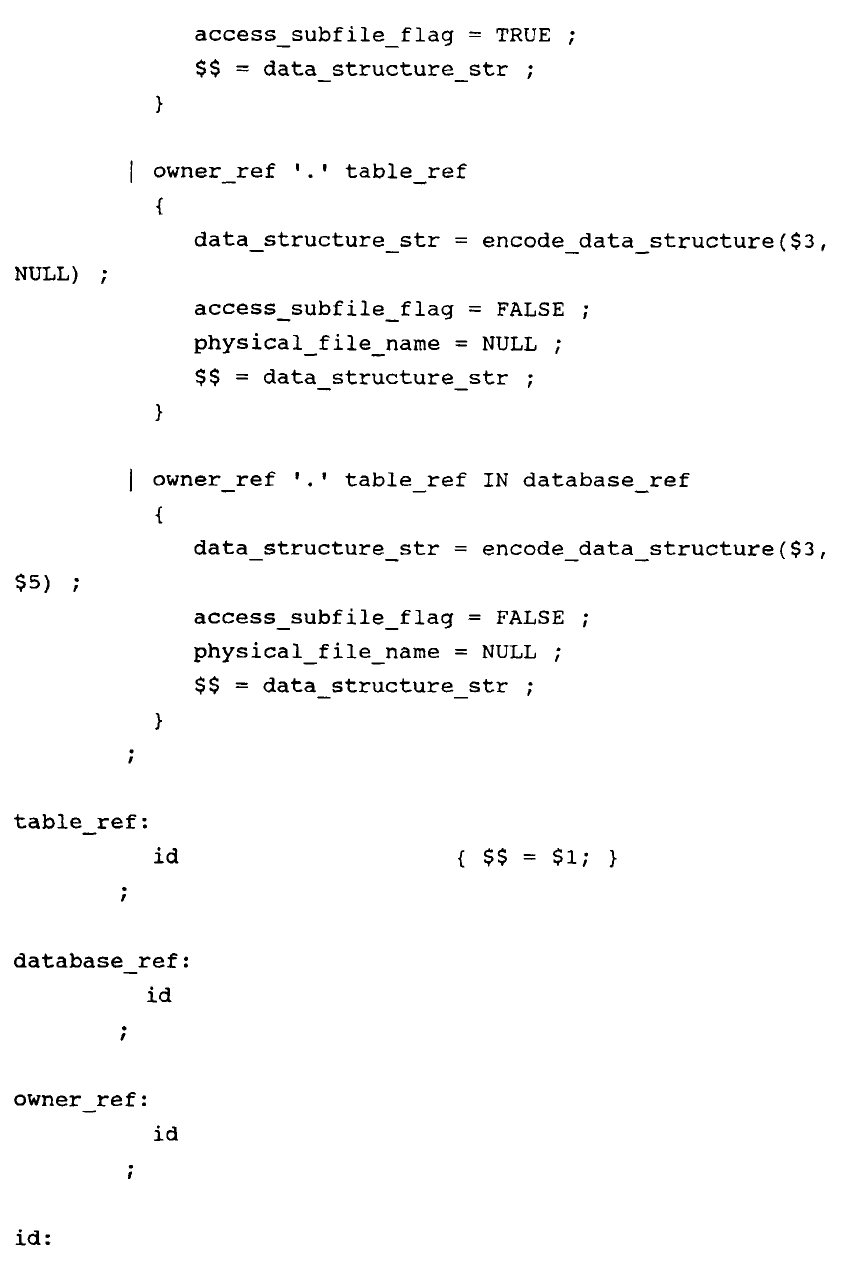

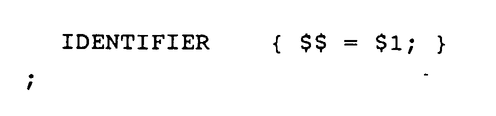

### D. 'C' API LIBRARY FOR THE IU_RPACCESS FUNCTION

The following represents examples of the the C API library that is called by the YACC grammar specification.

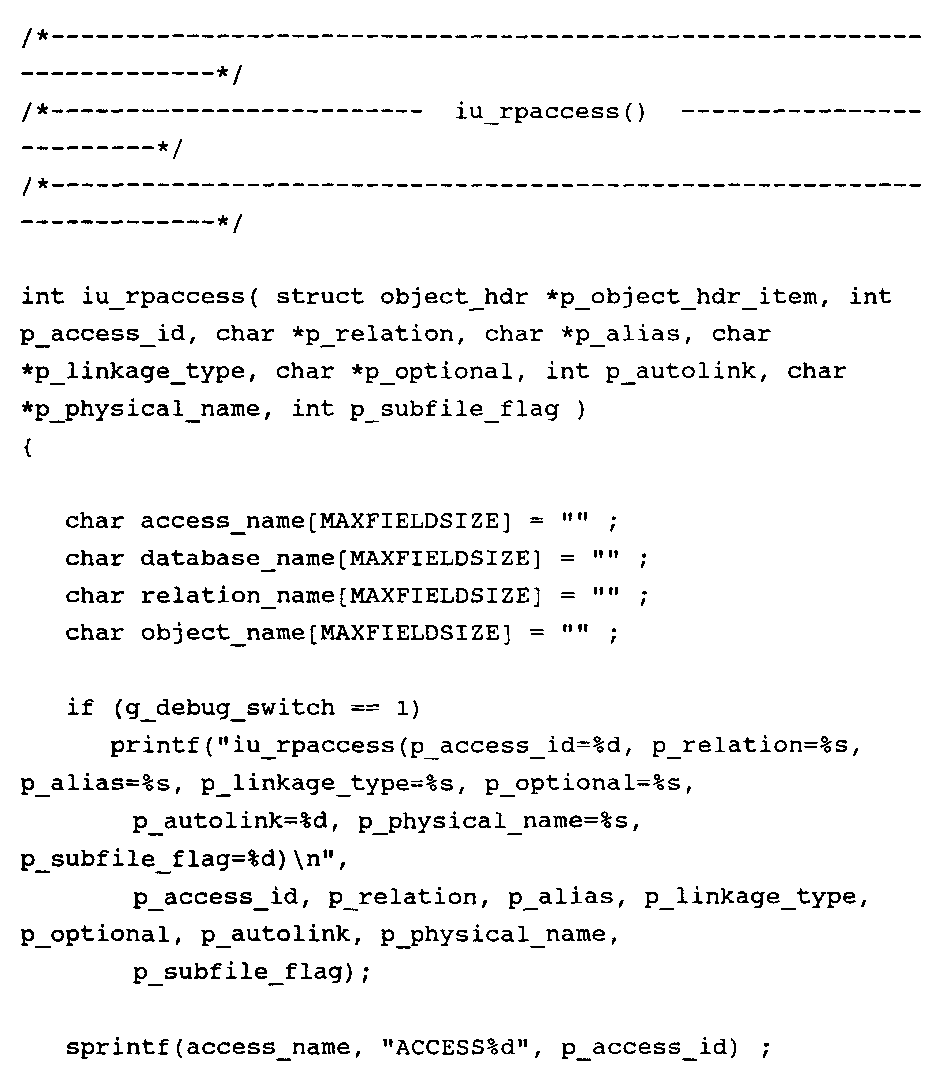

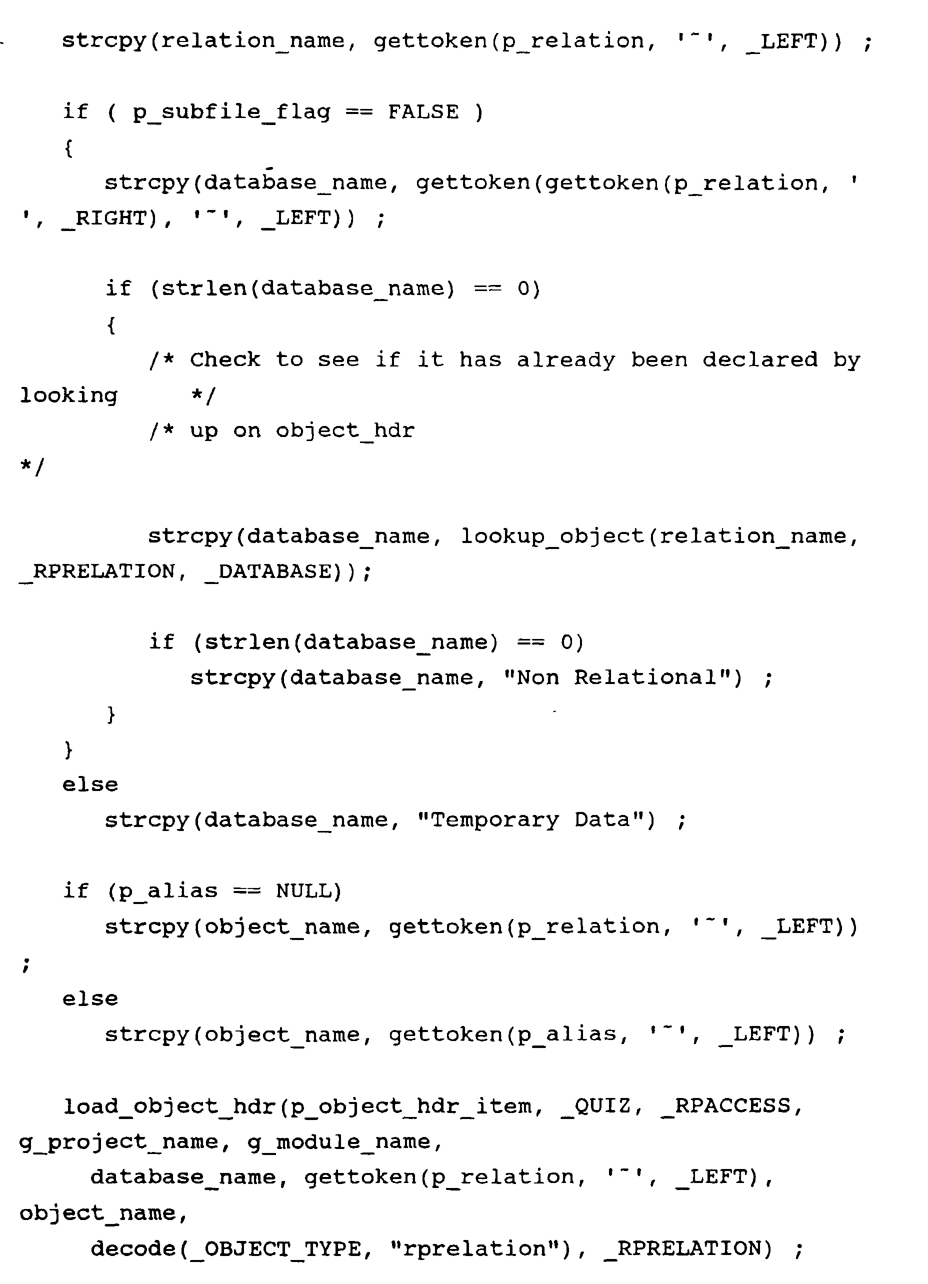

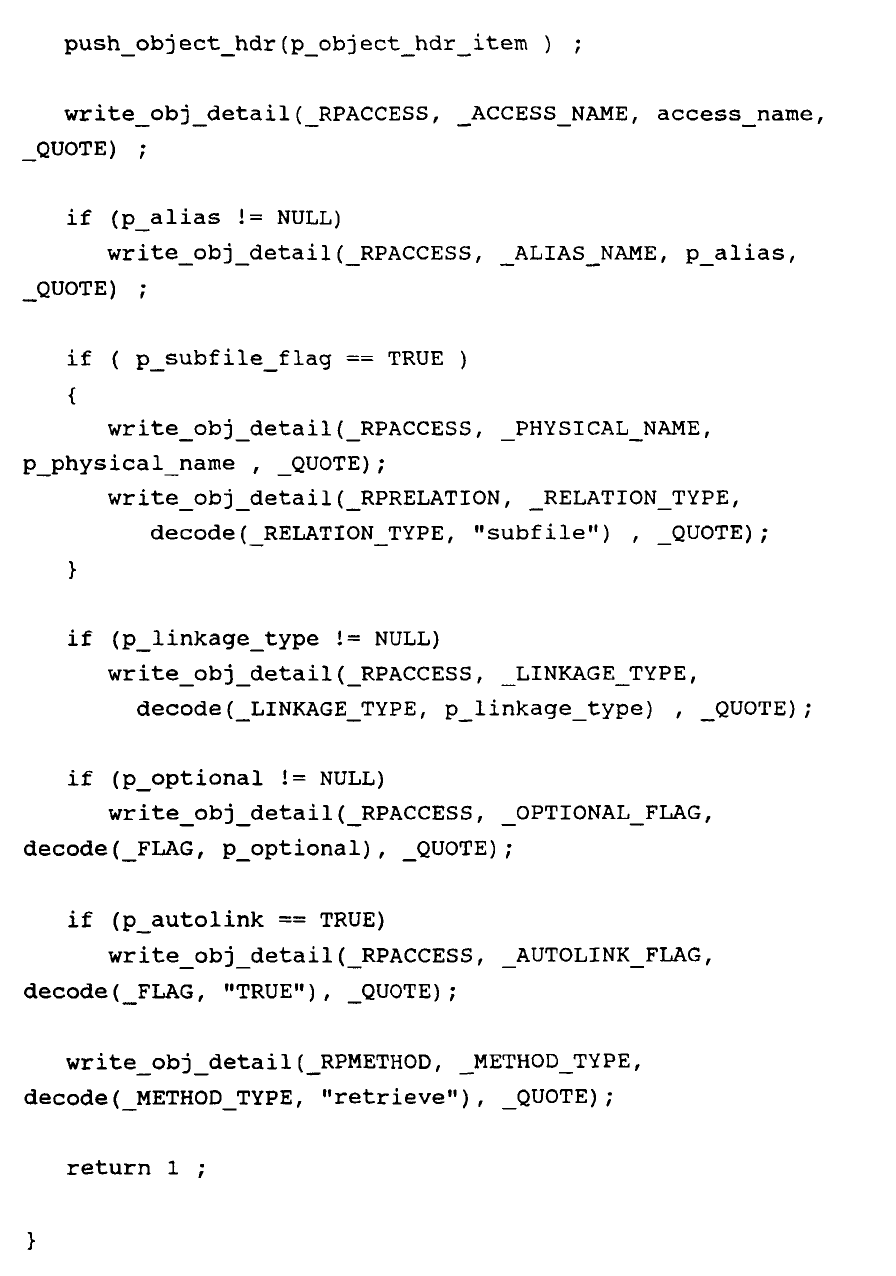

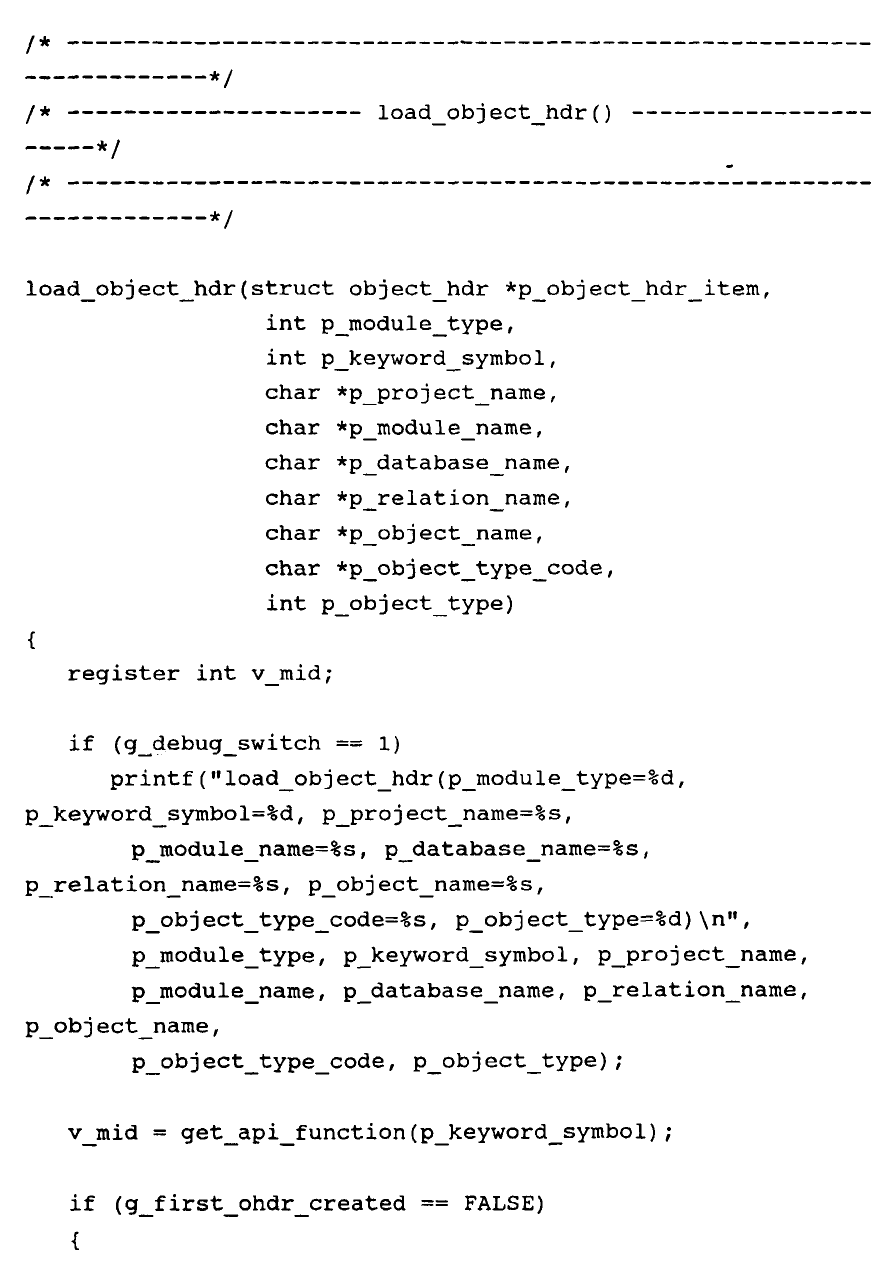

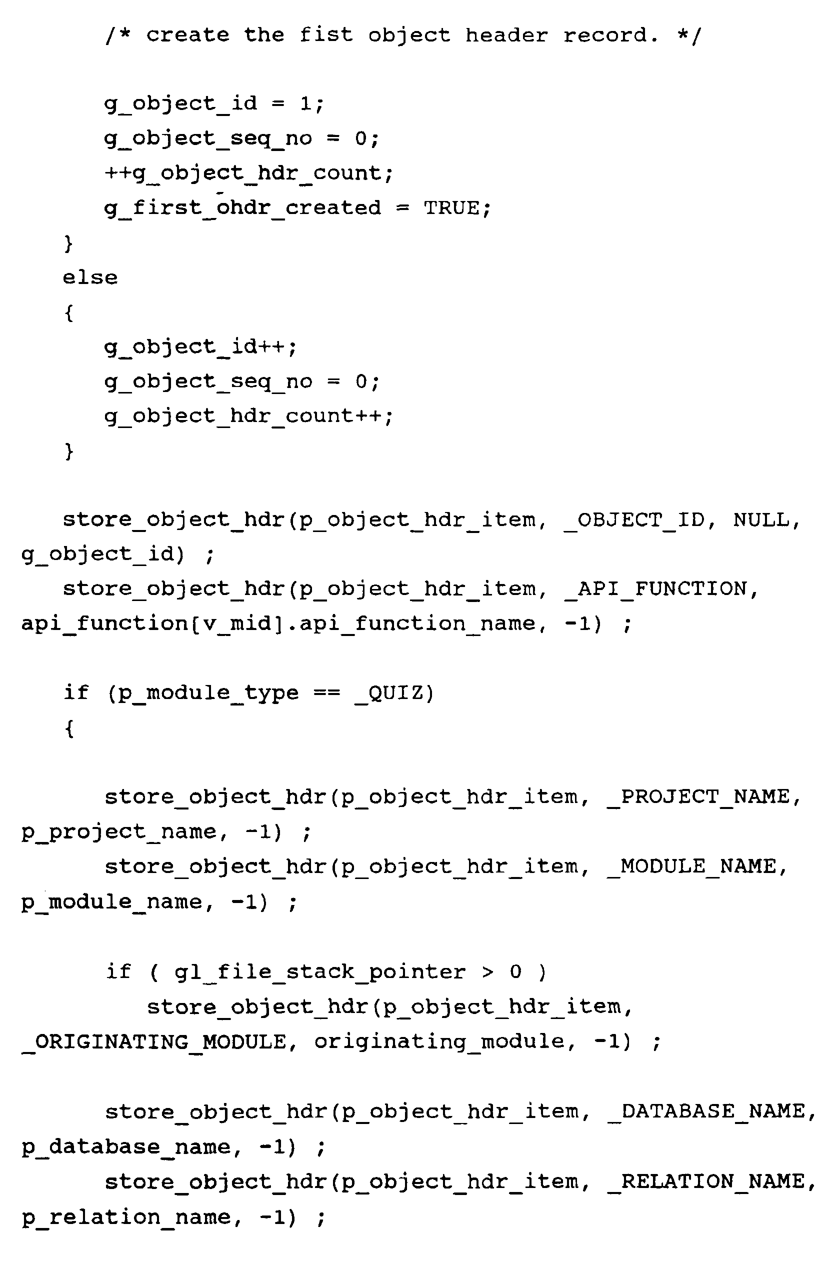

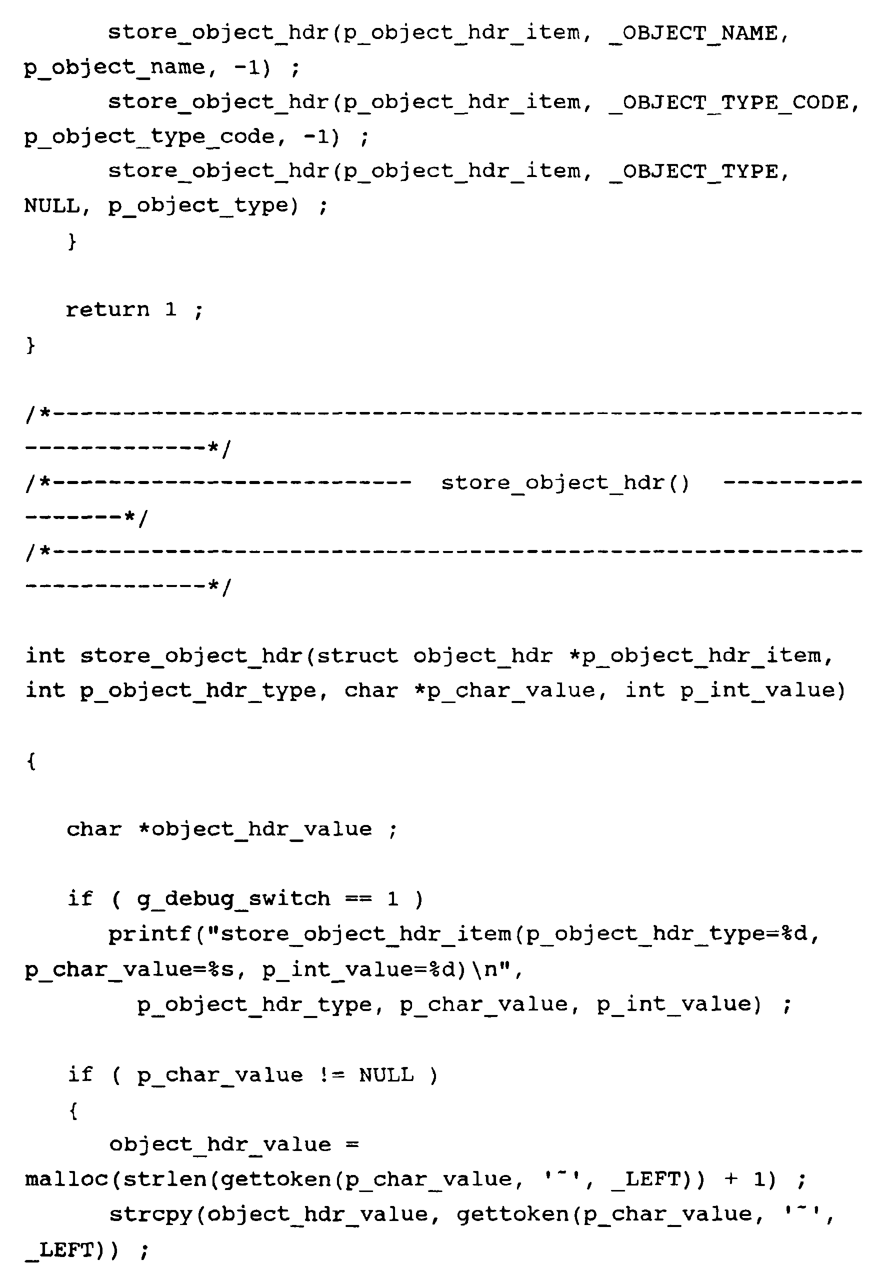

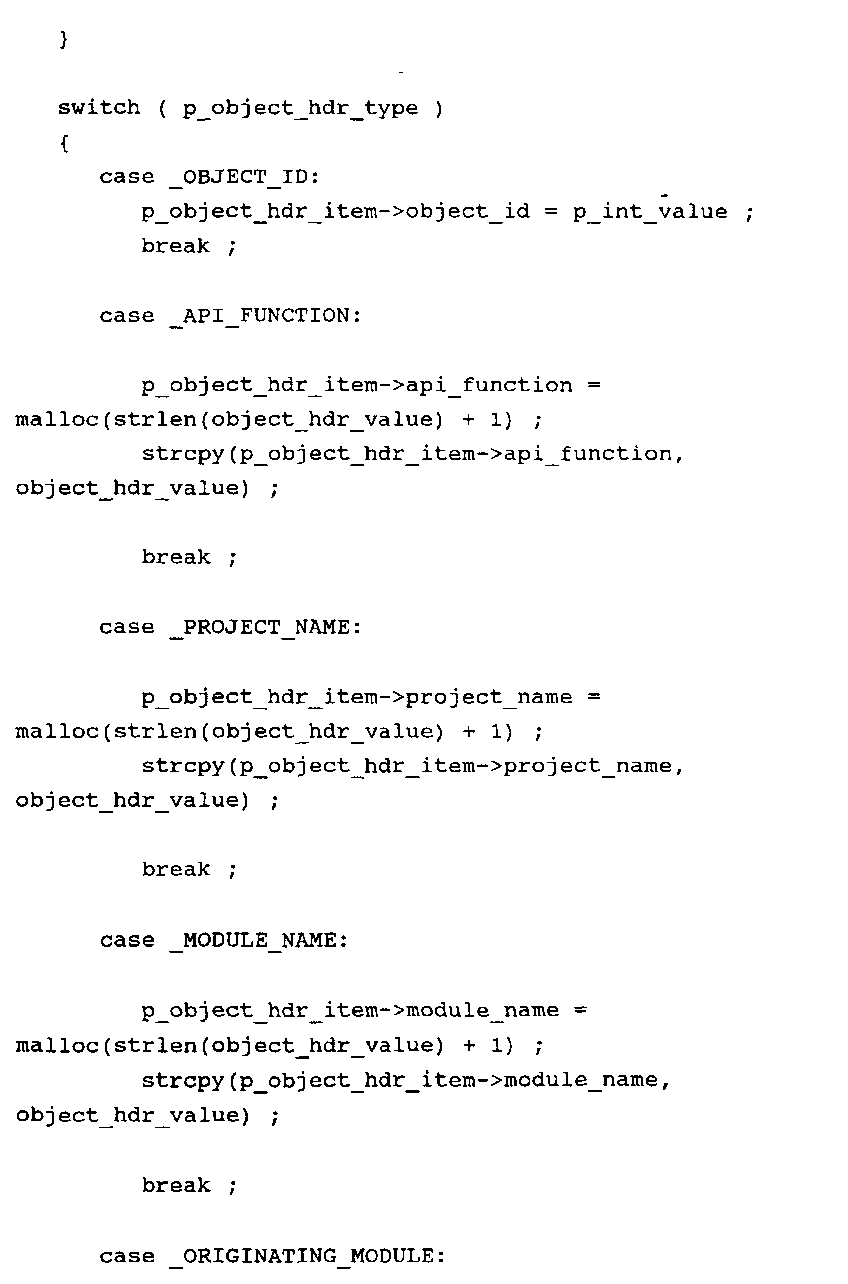

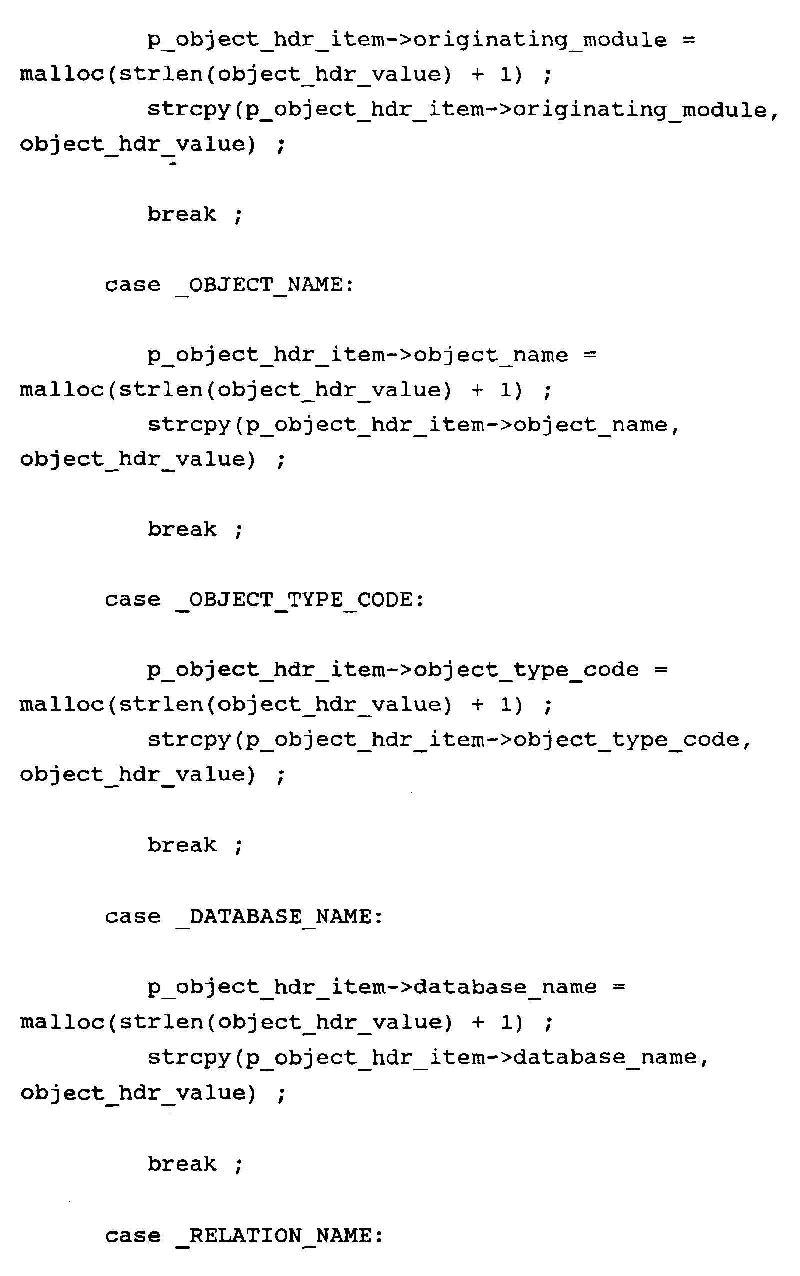

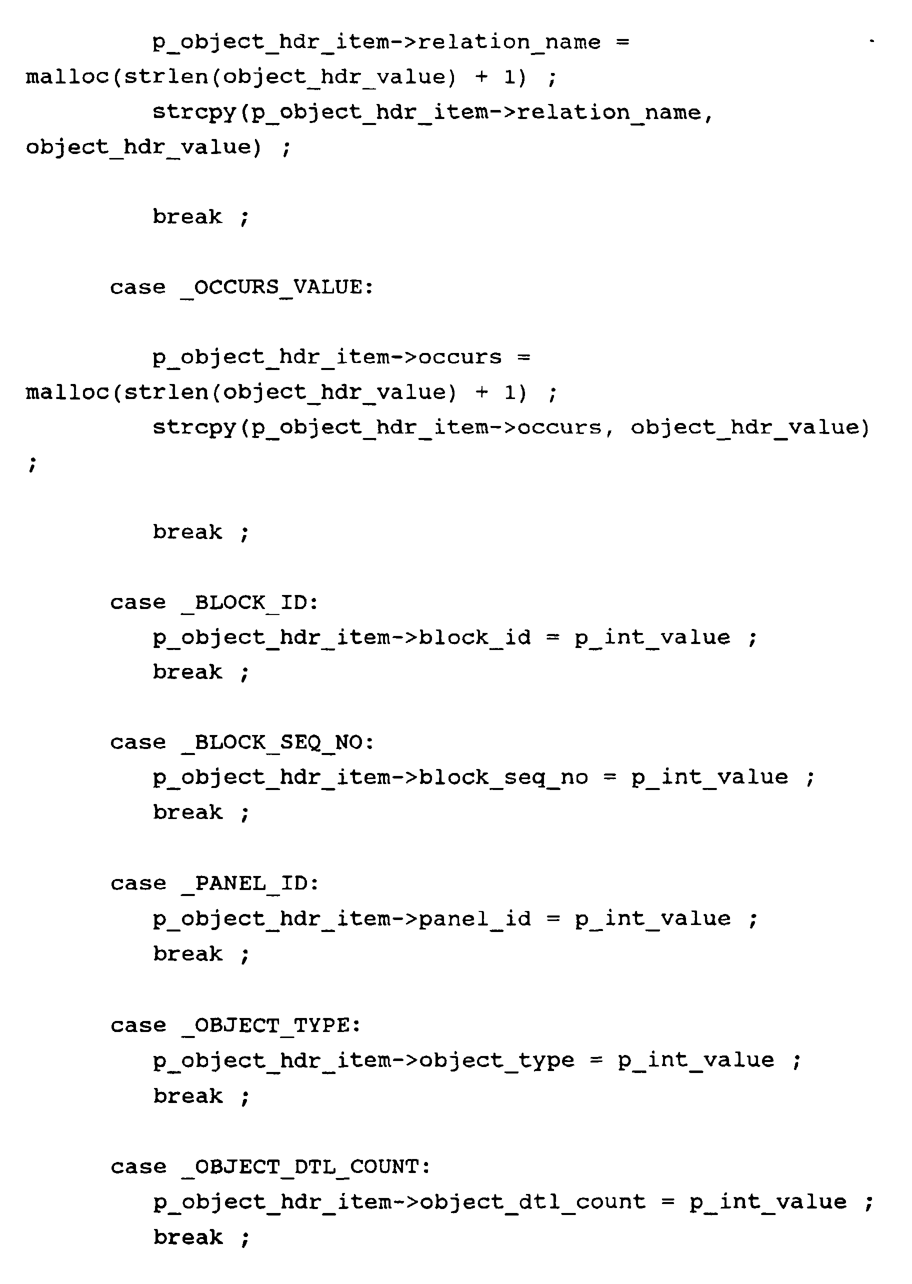

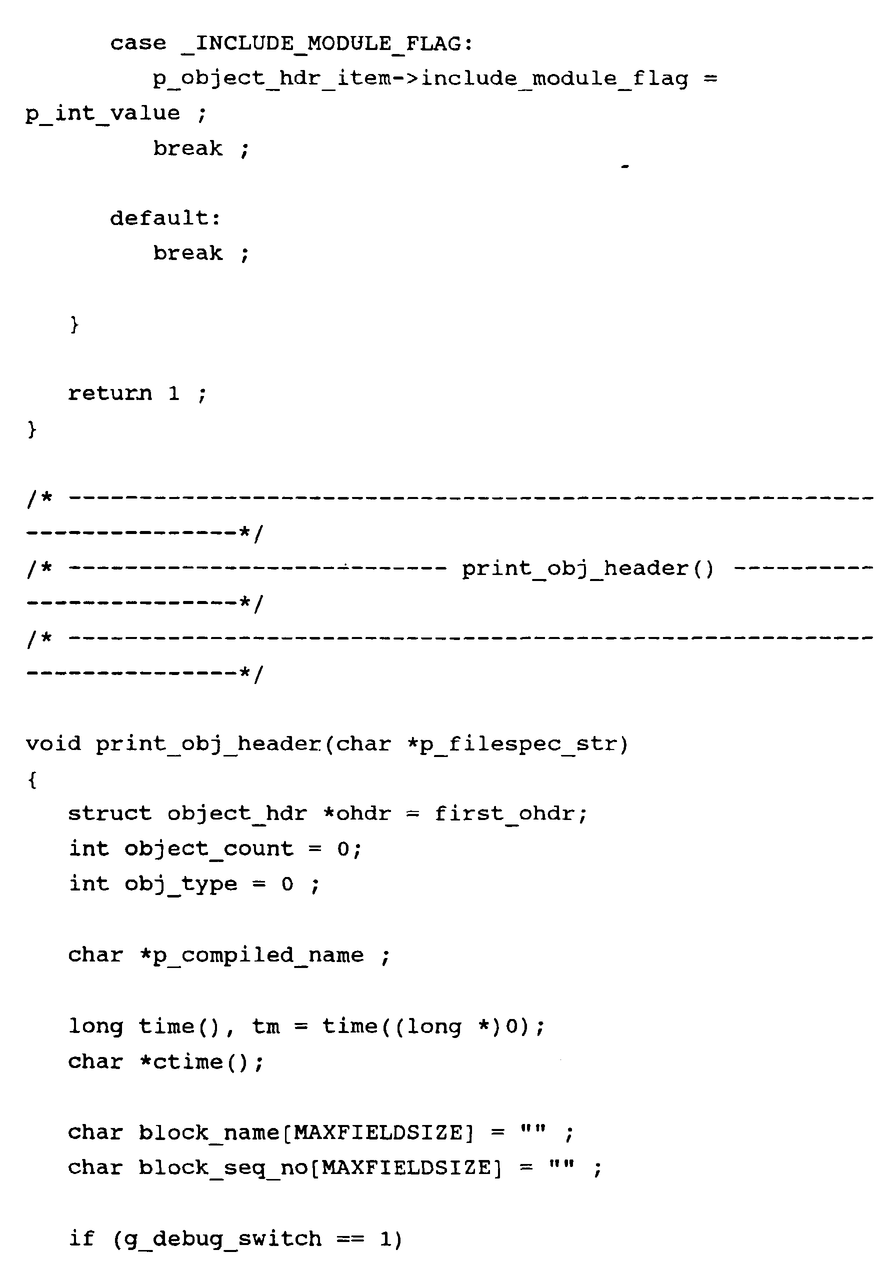

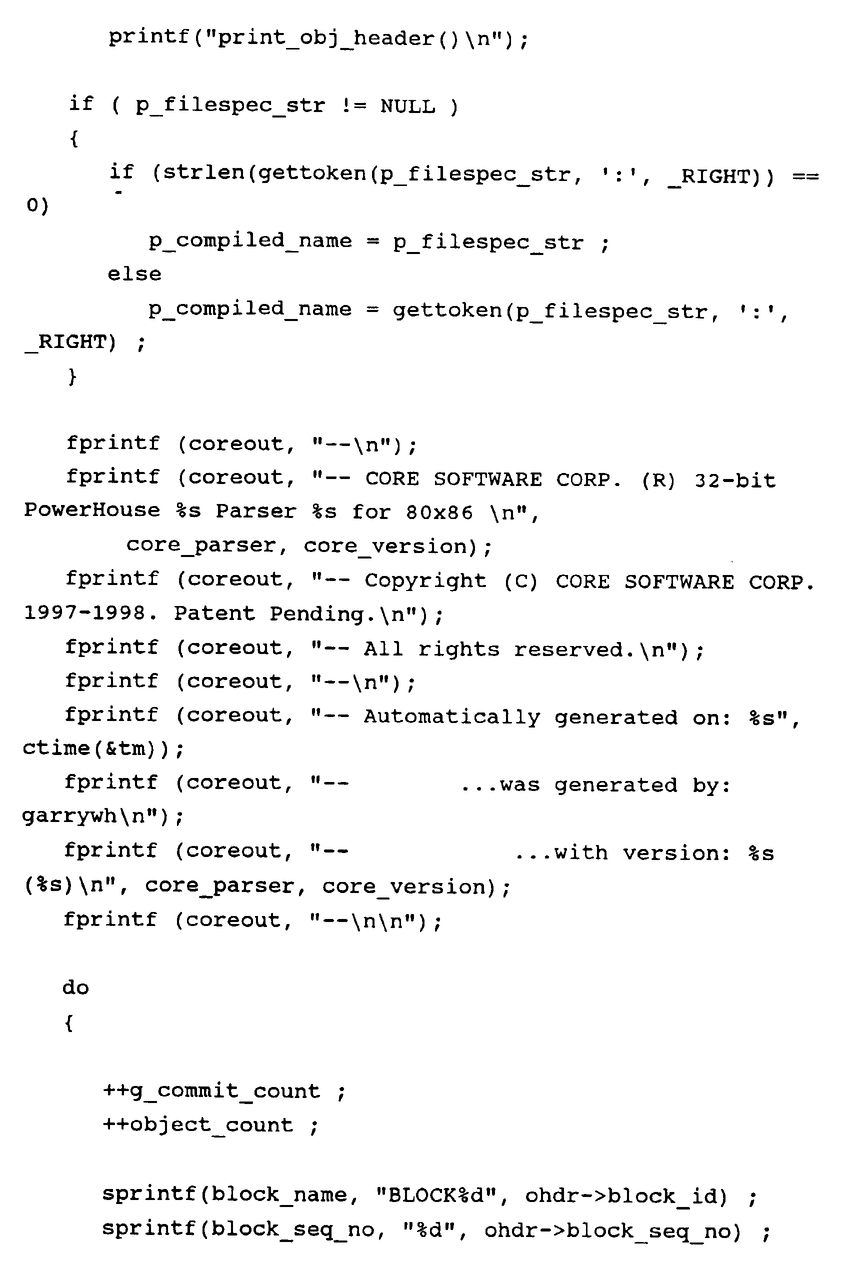

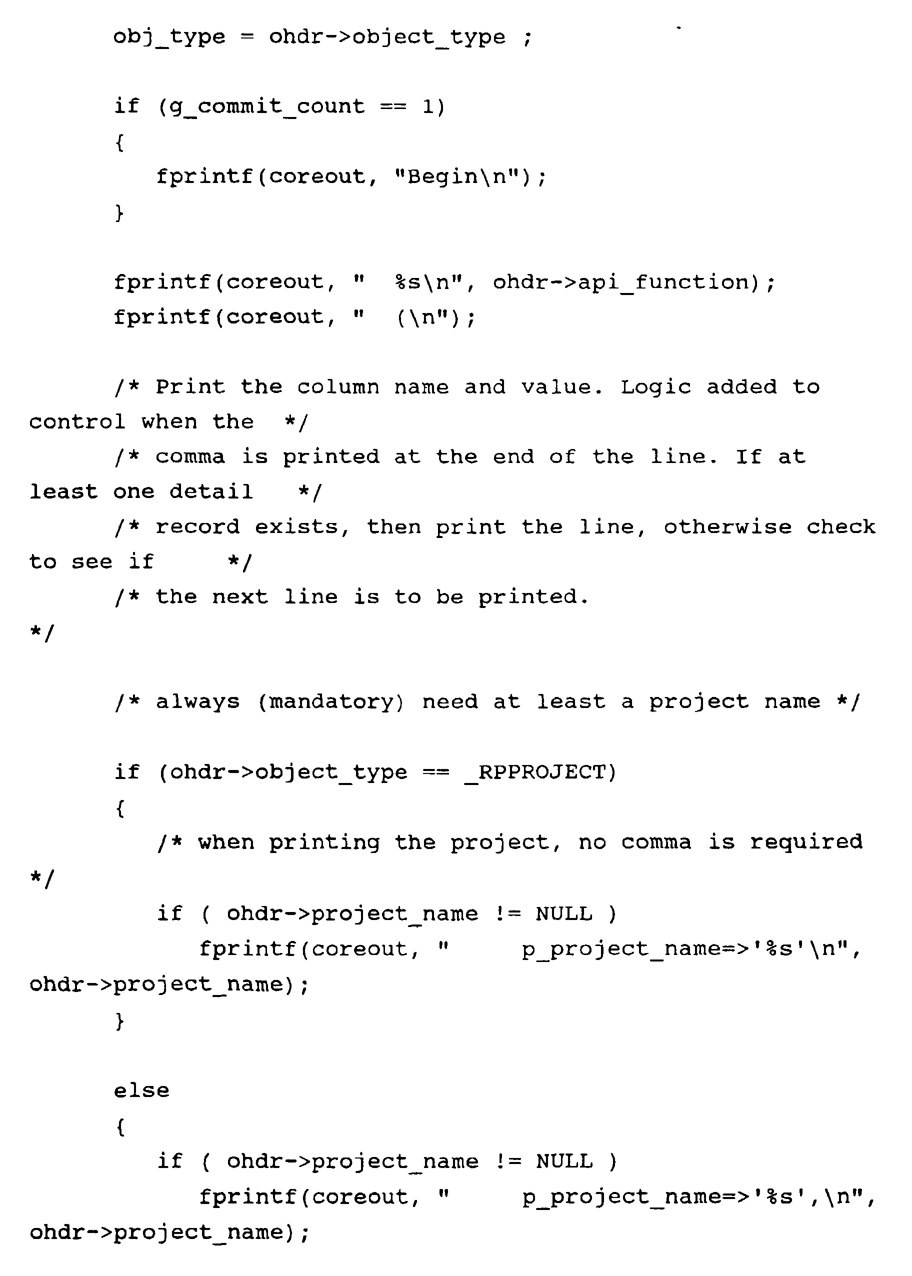

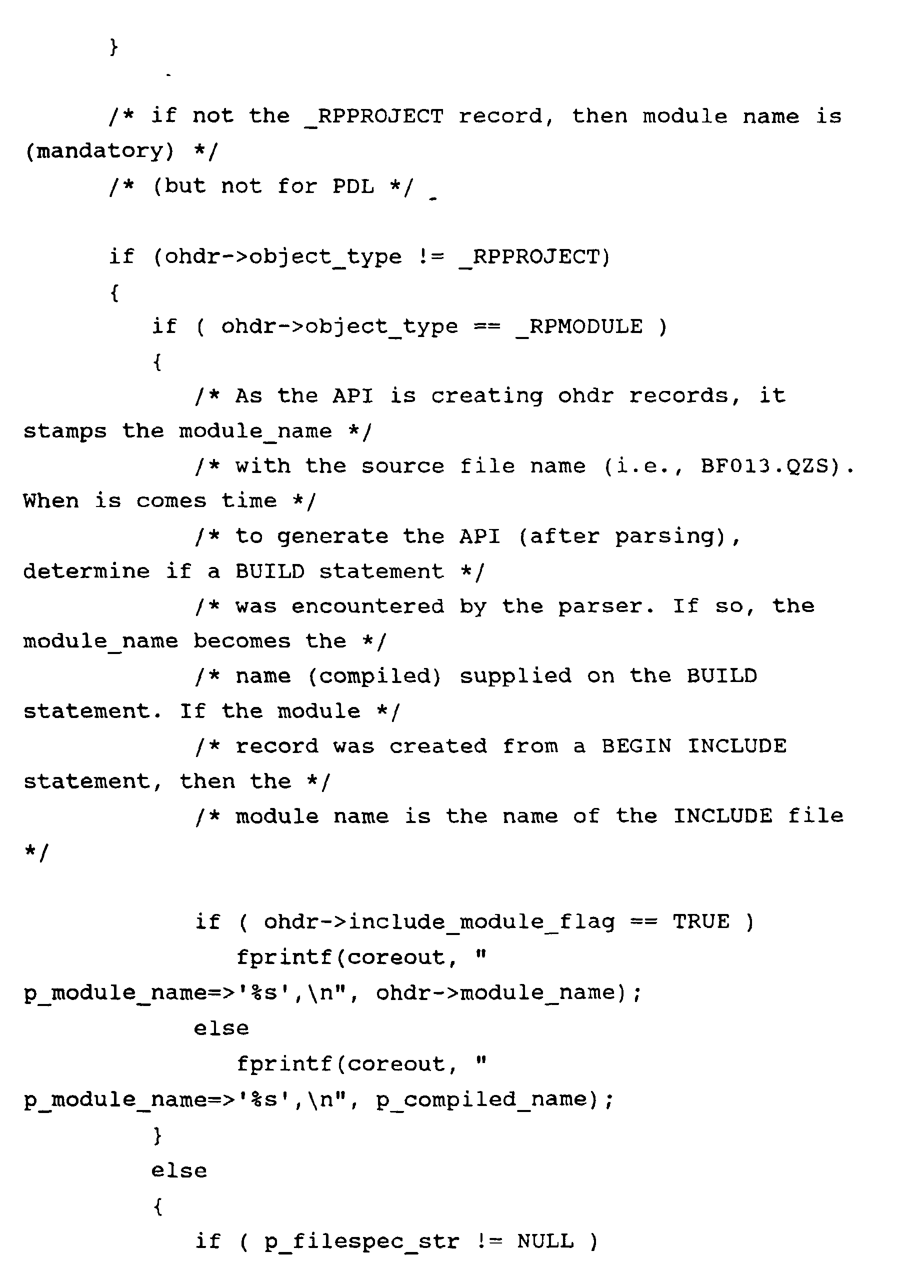

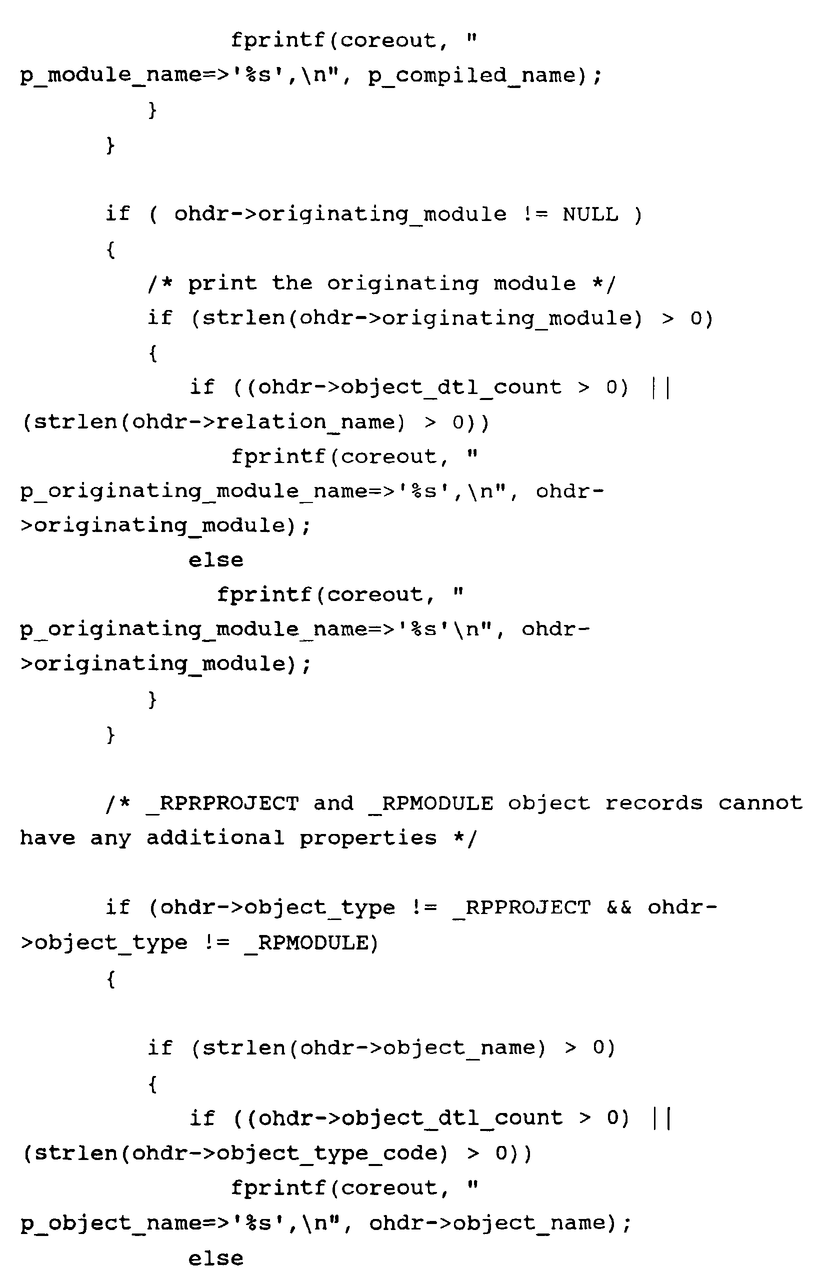

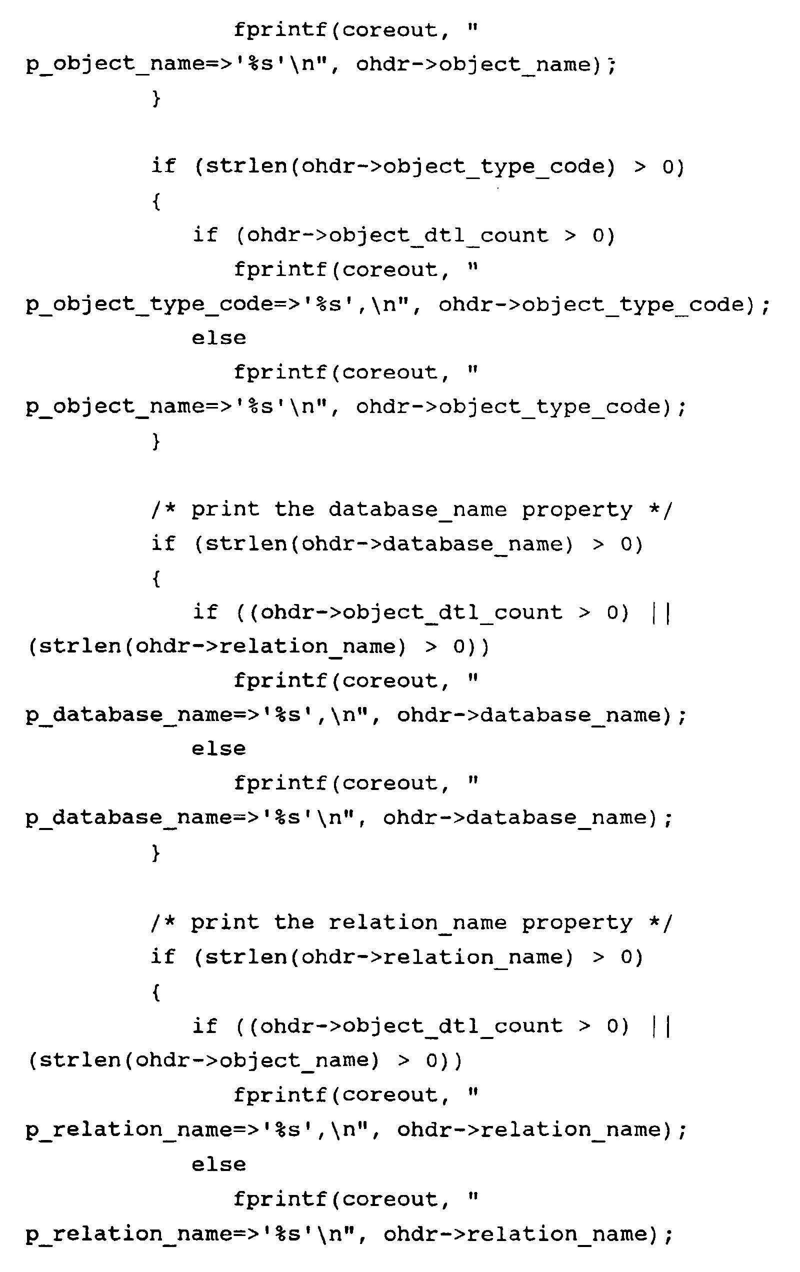

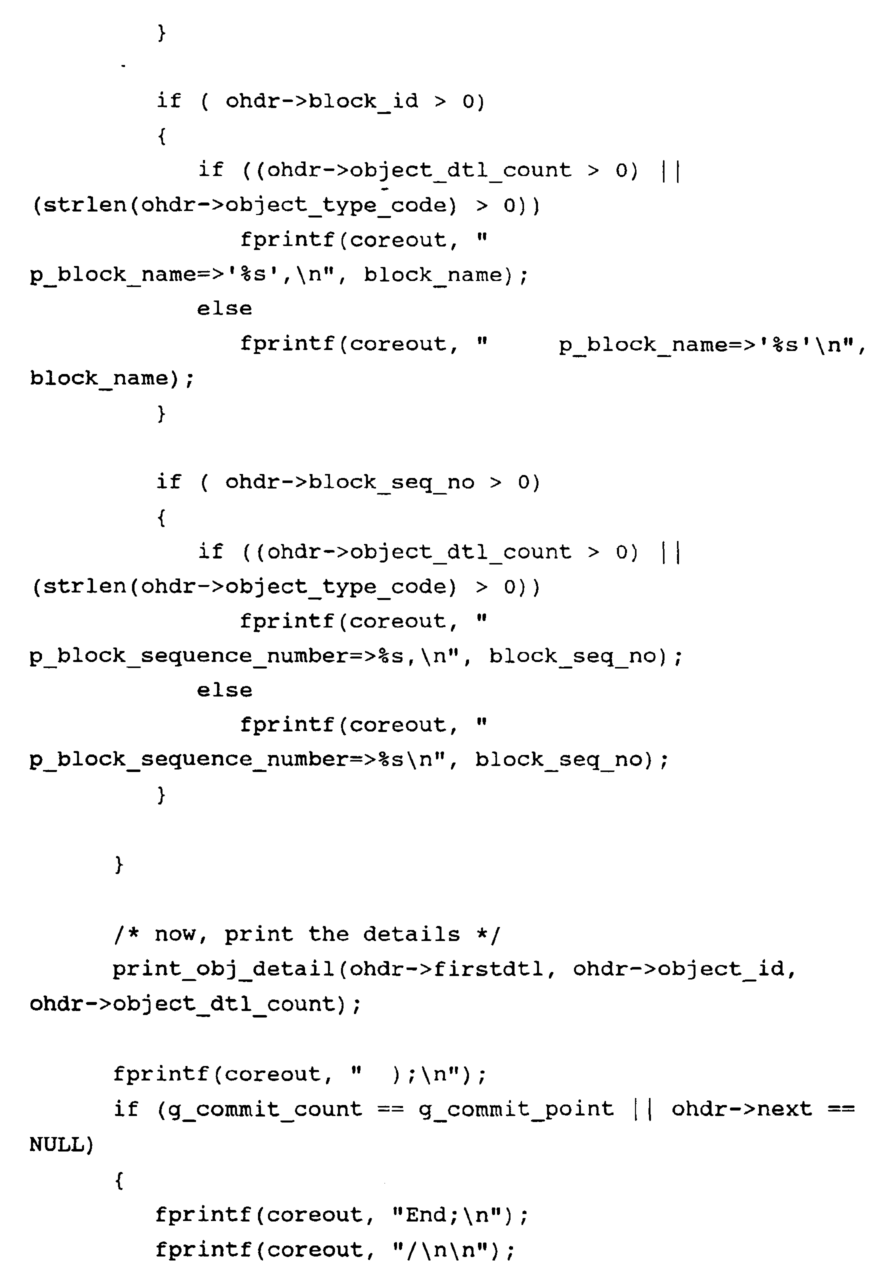

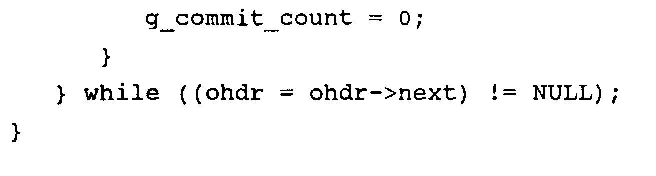

### E. INTERMEDIARY API FILE

Once a parser has successfully processed the source file, the following Intermediary API file is generated for the above example by the parser. This file will later be used by the API Loader described later.

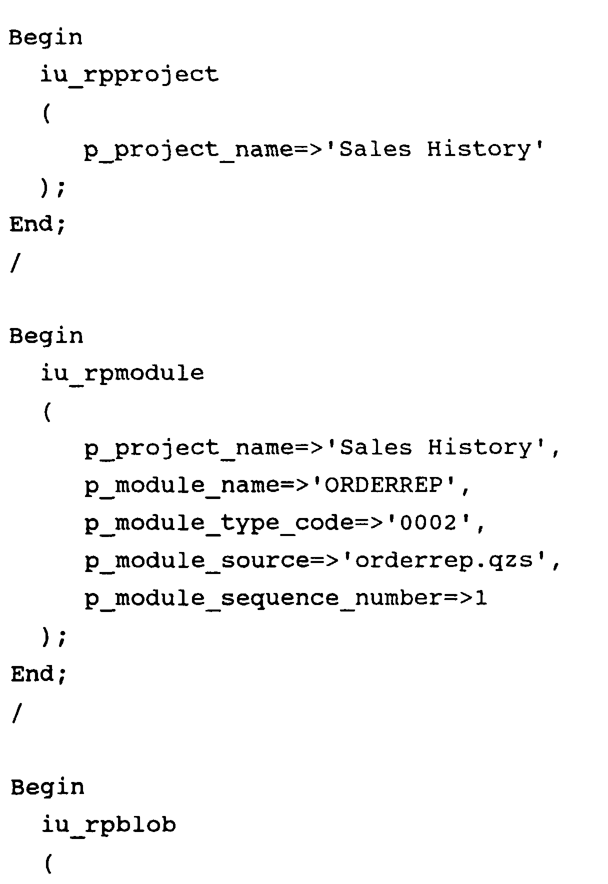

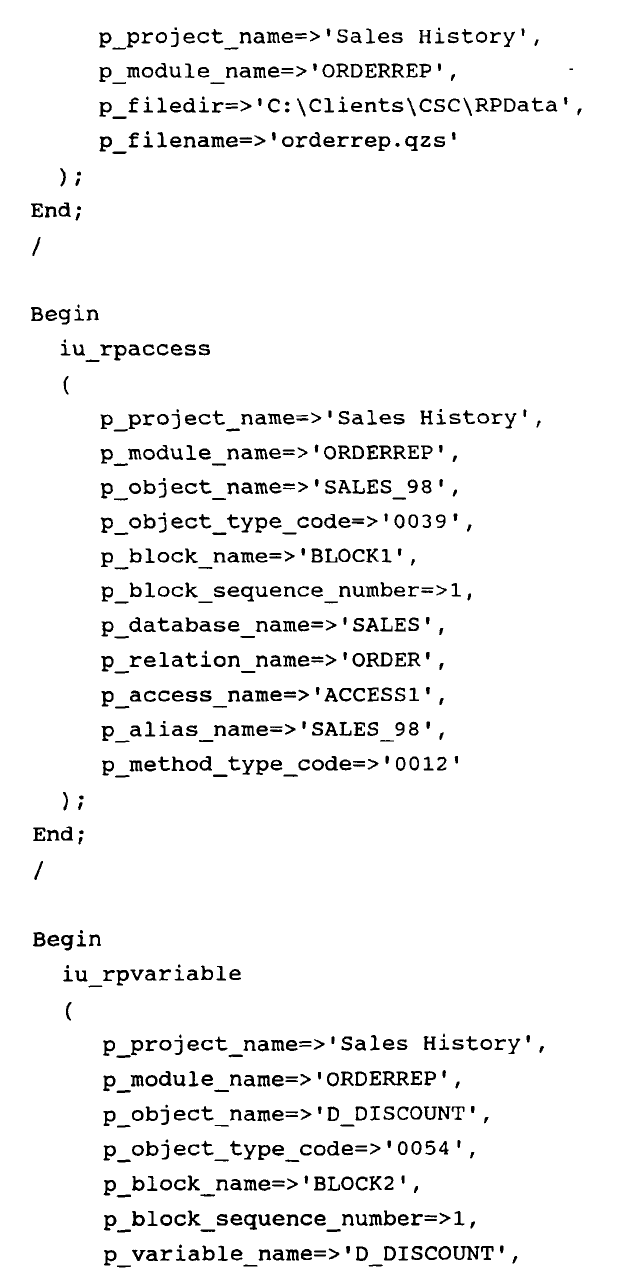

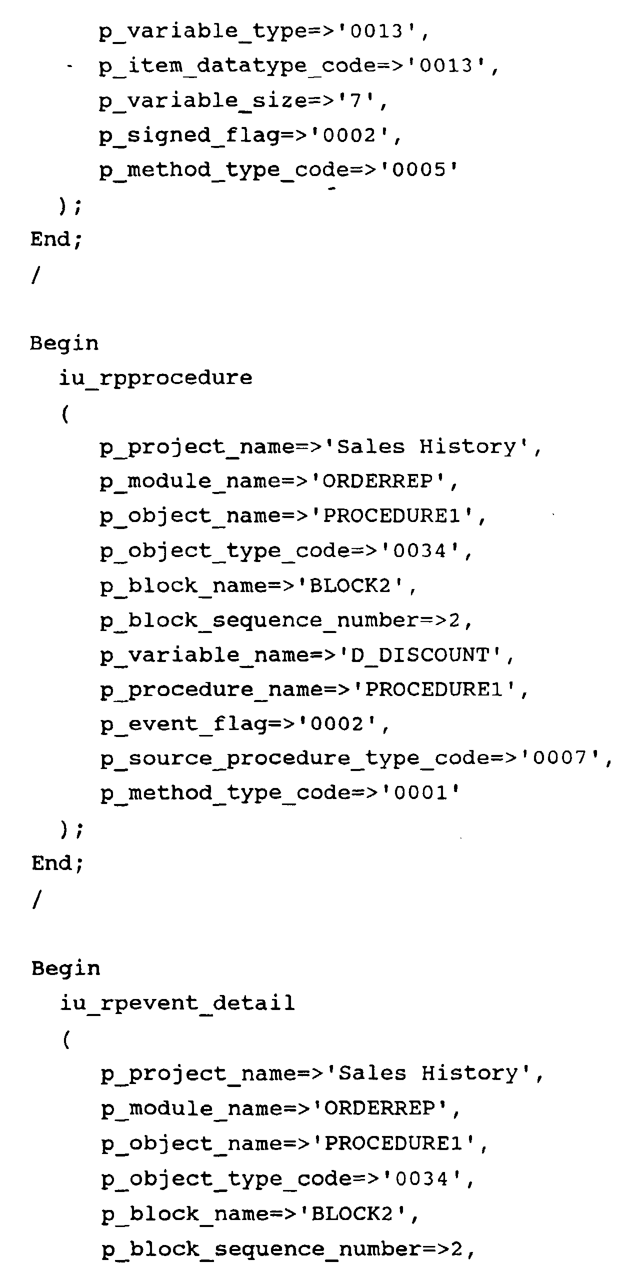

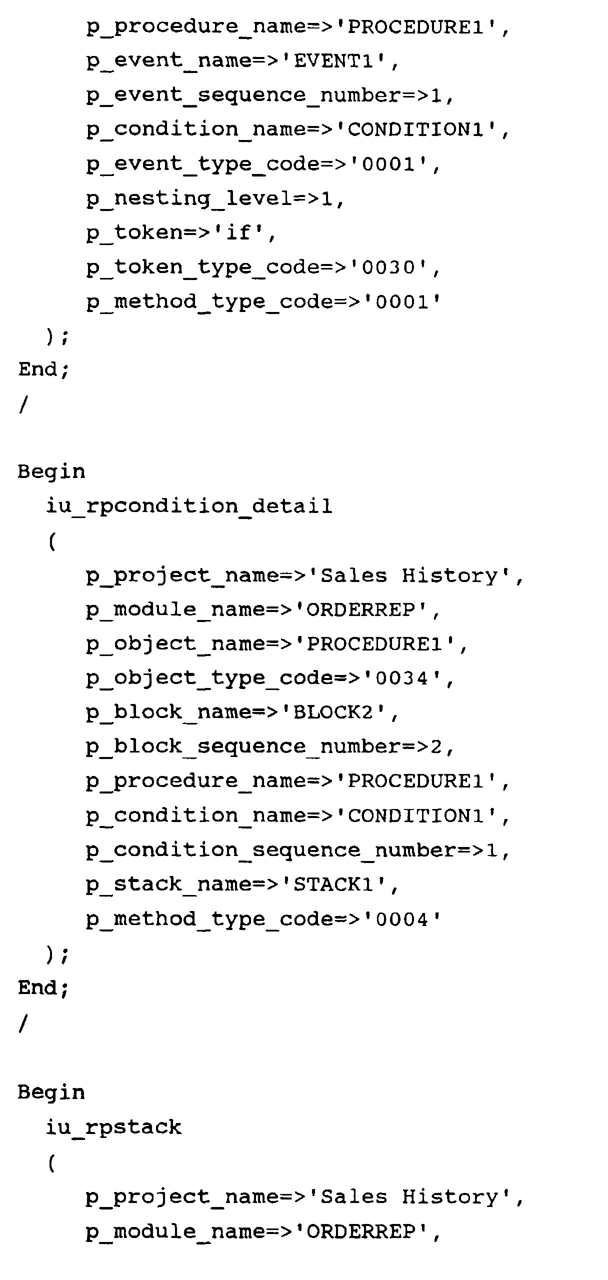

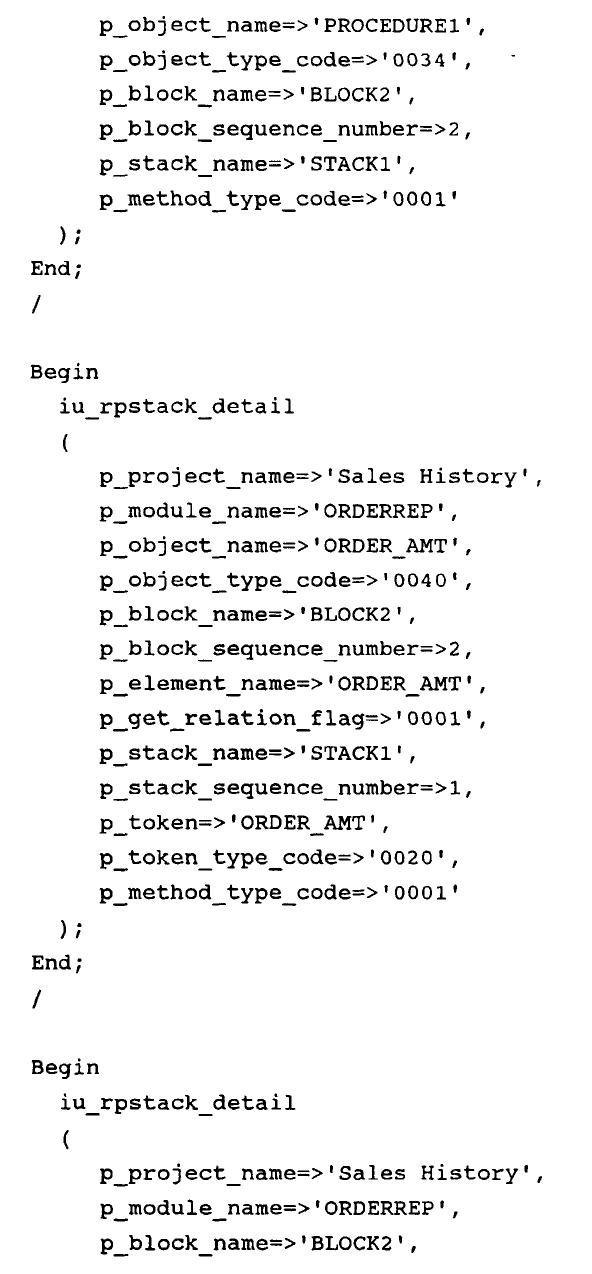

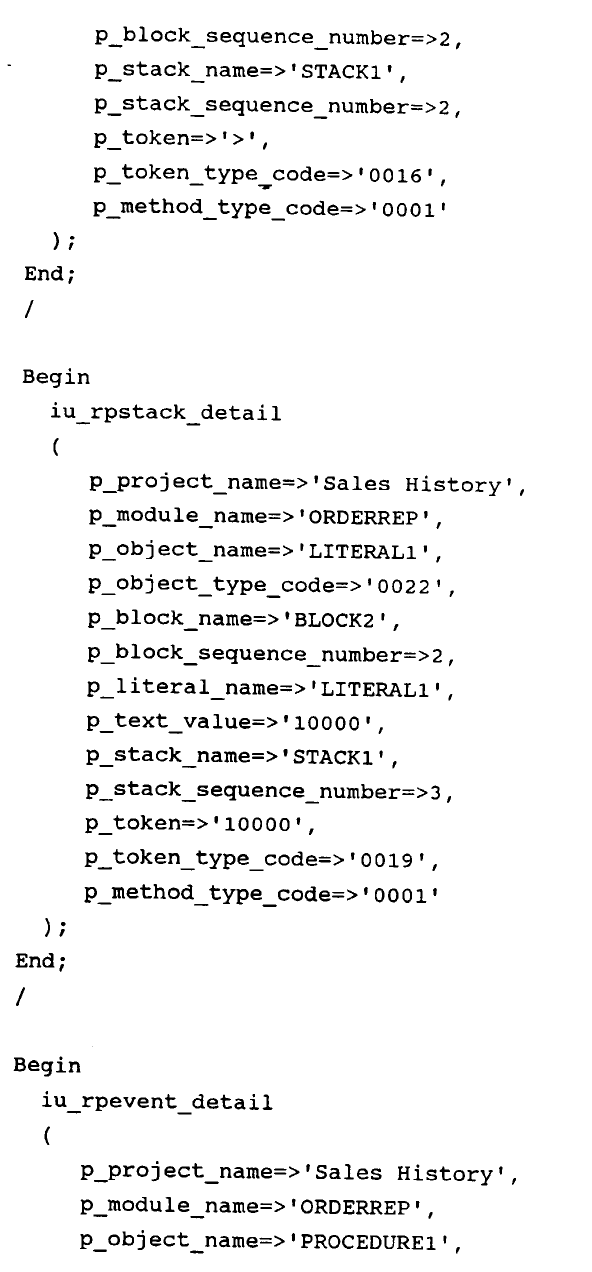

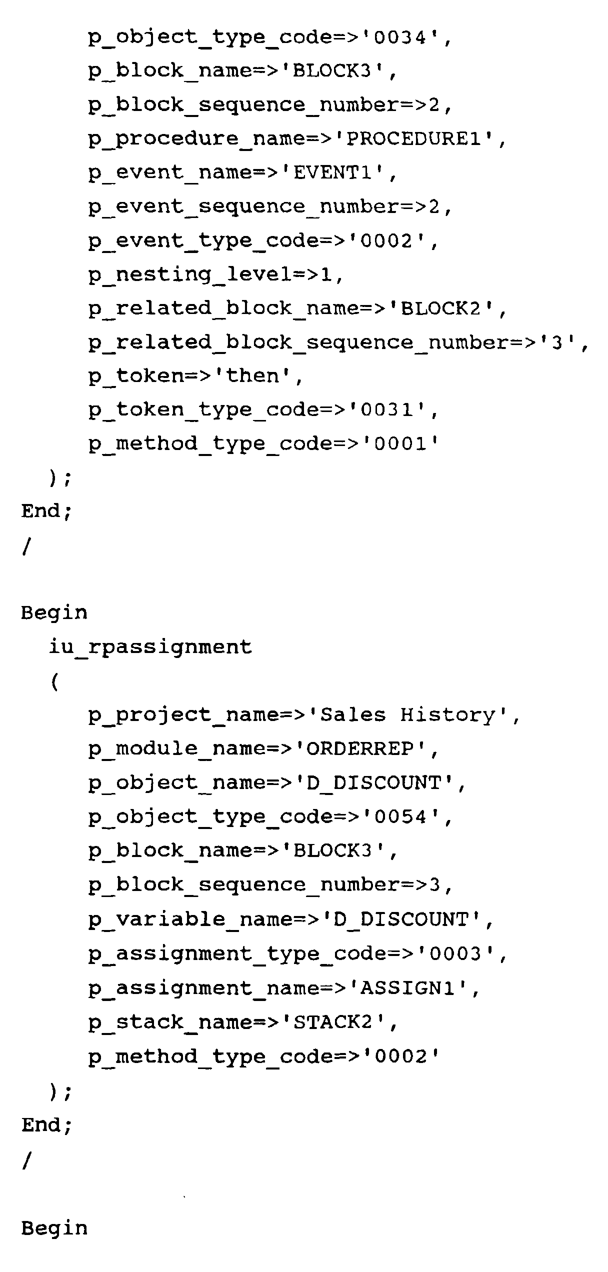

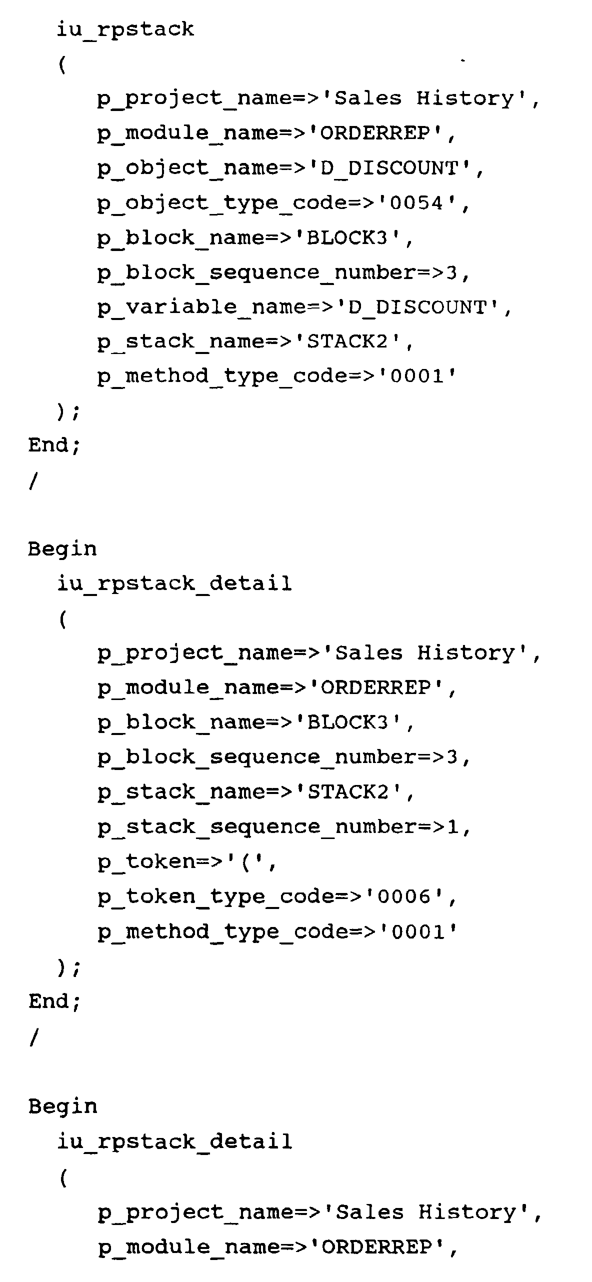

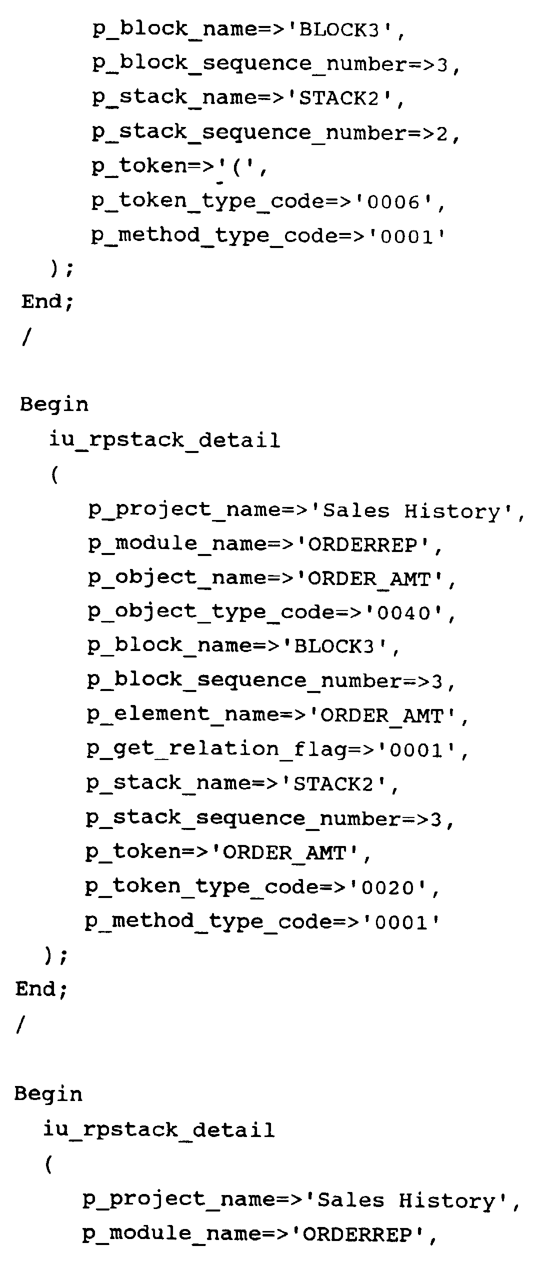

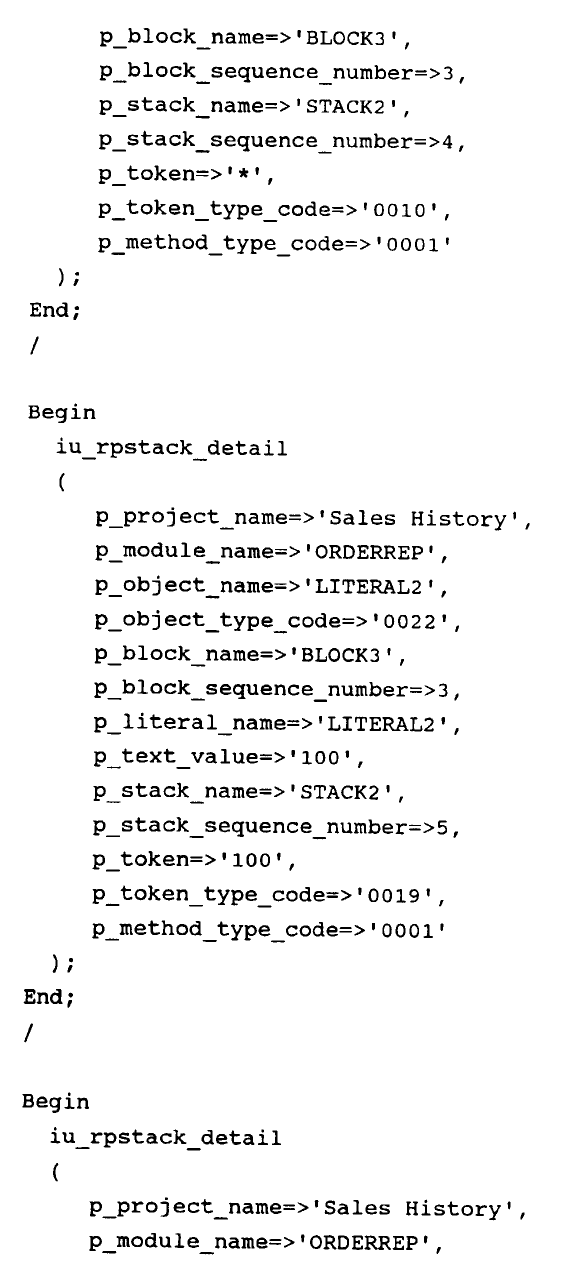

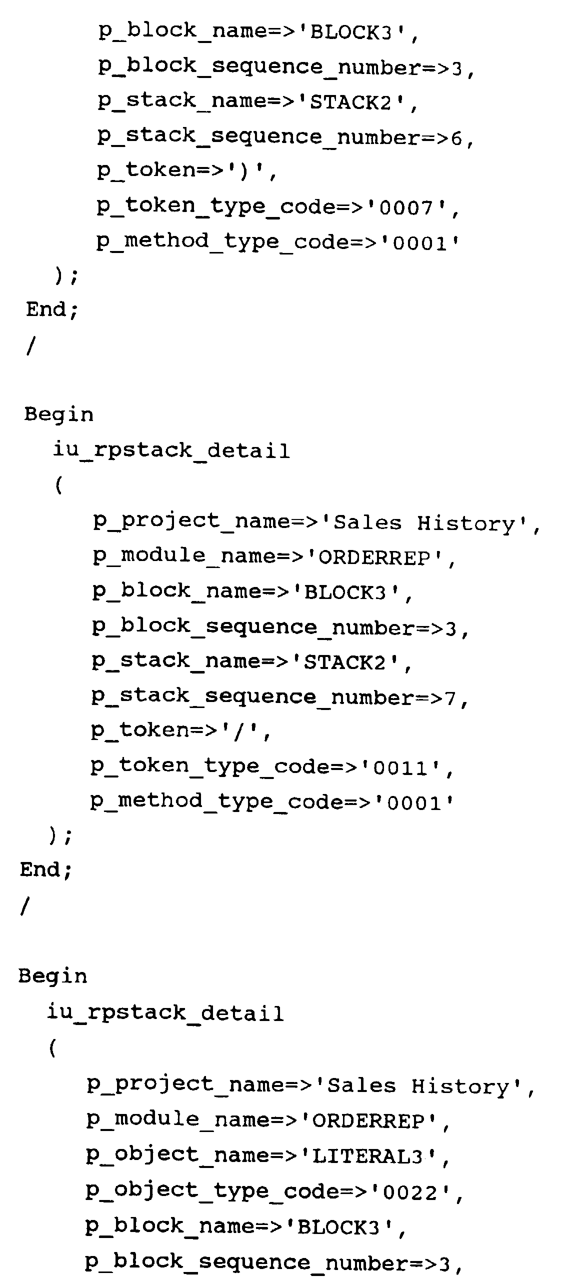

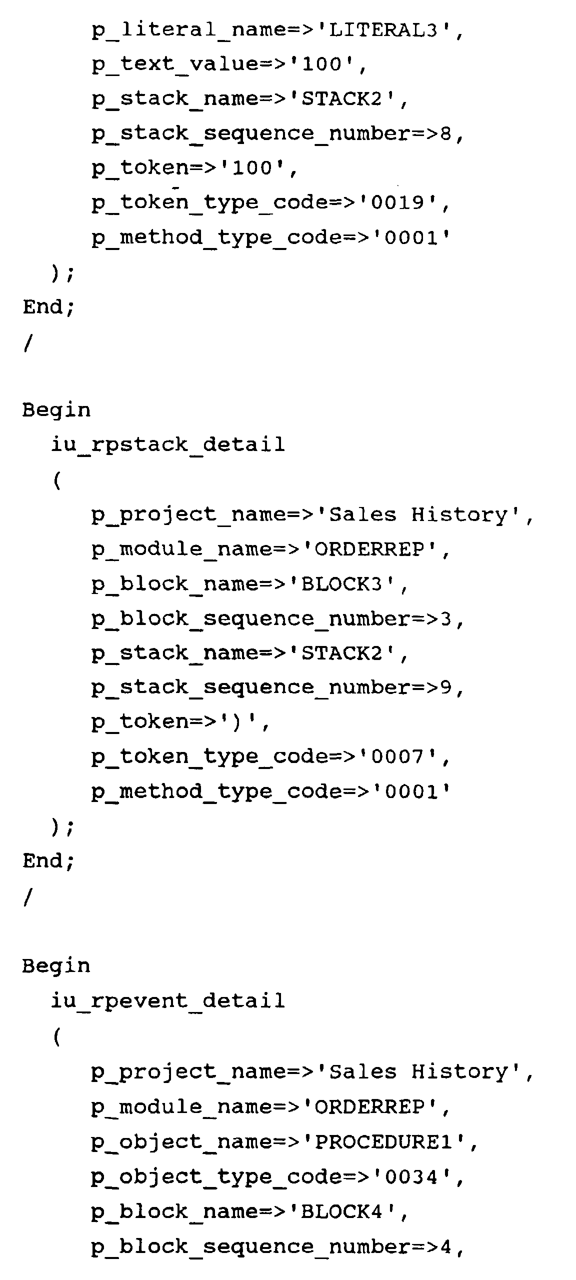

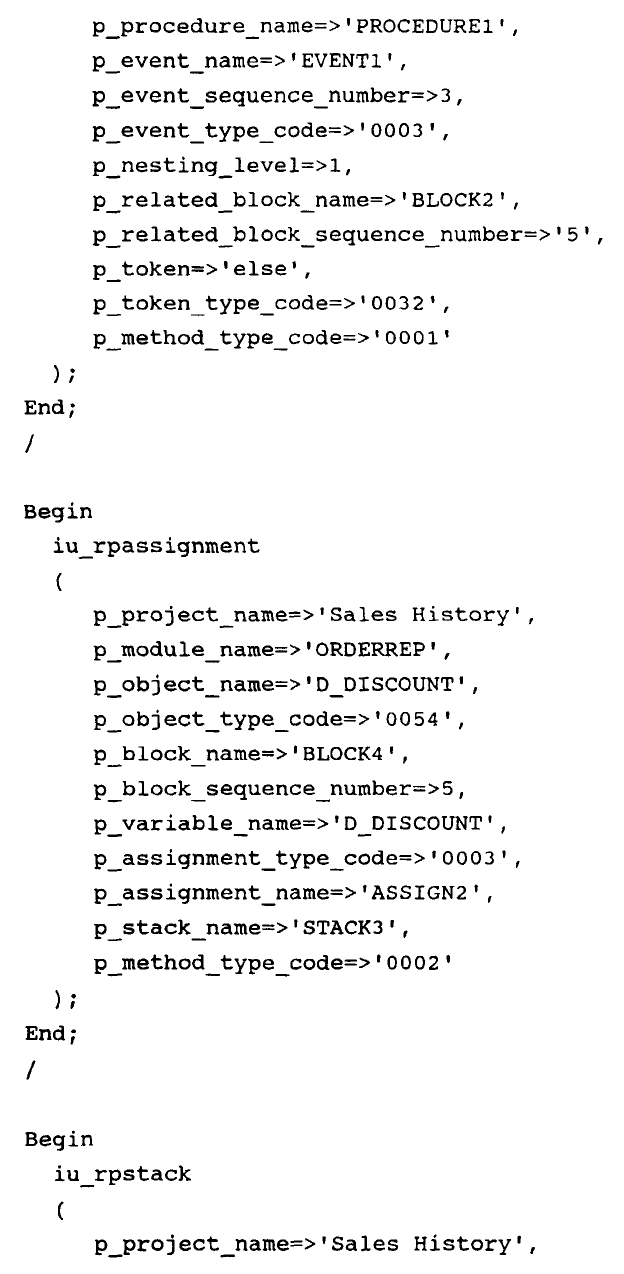

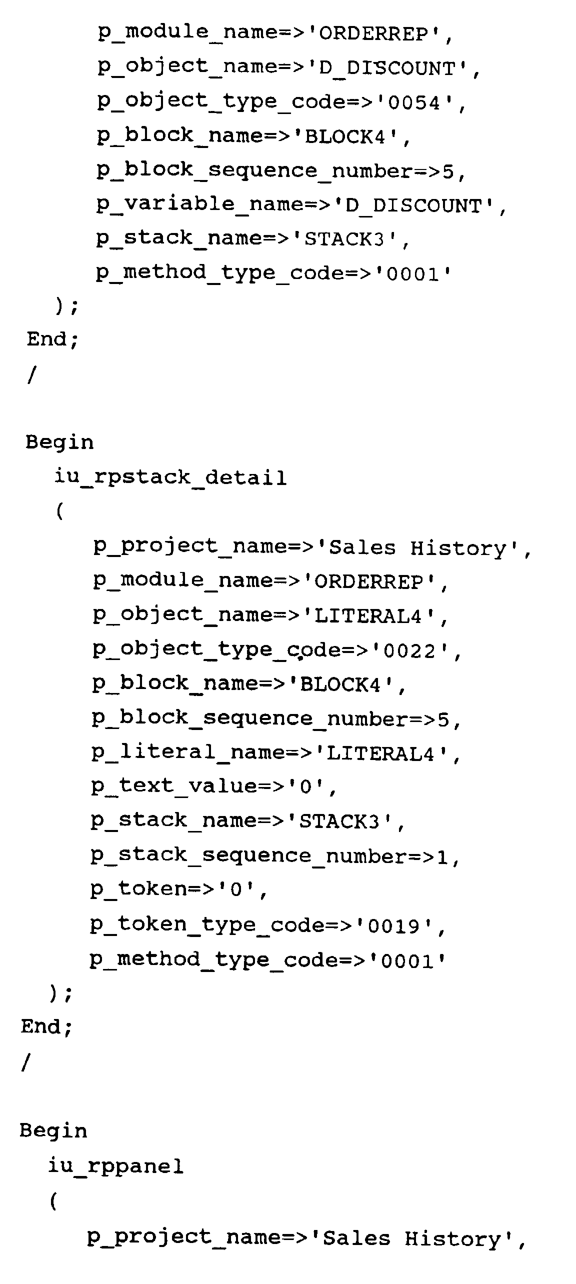

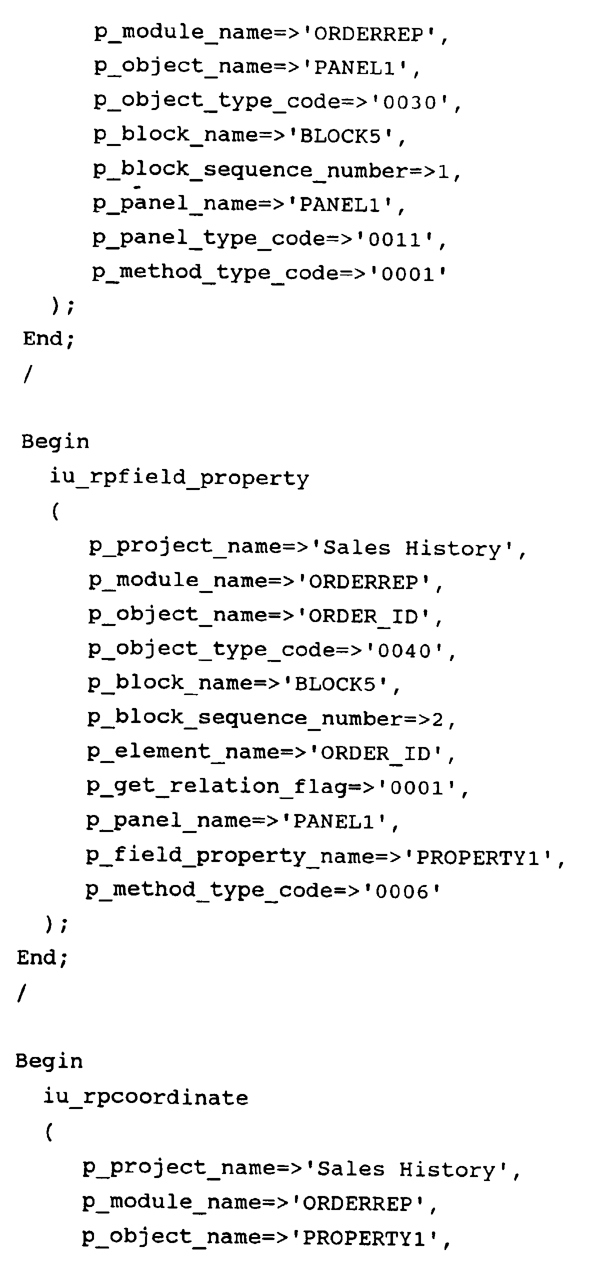

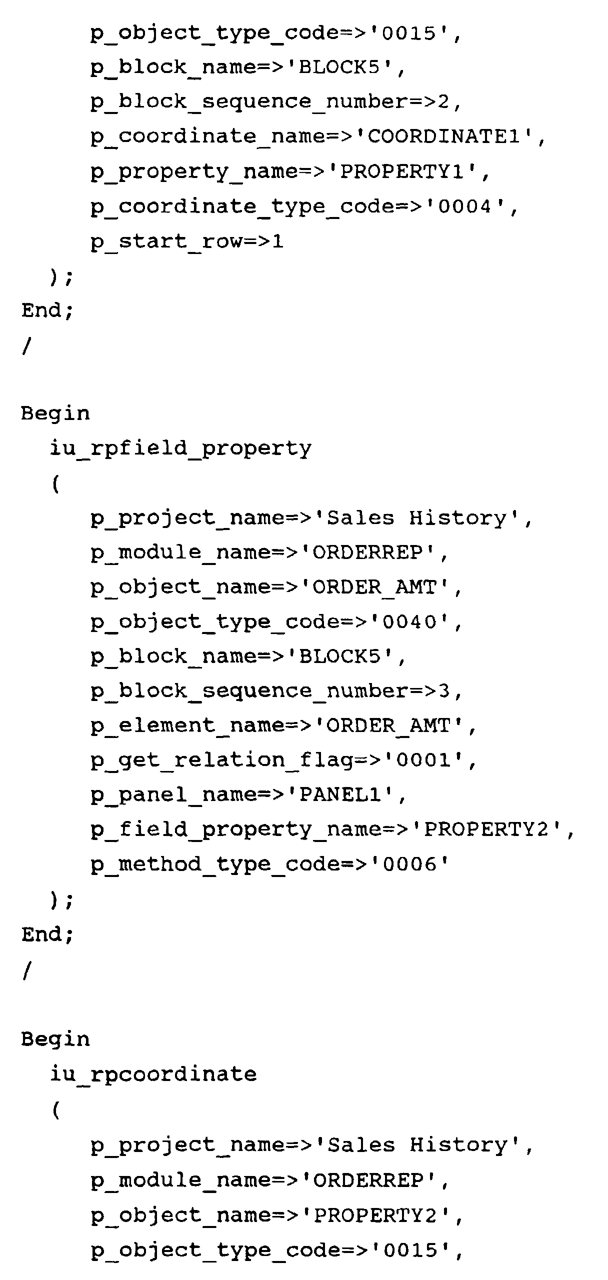

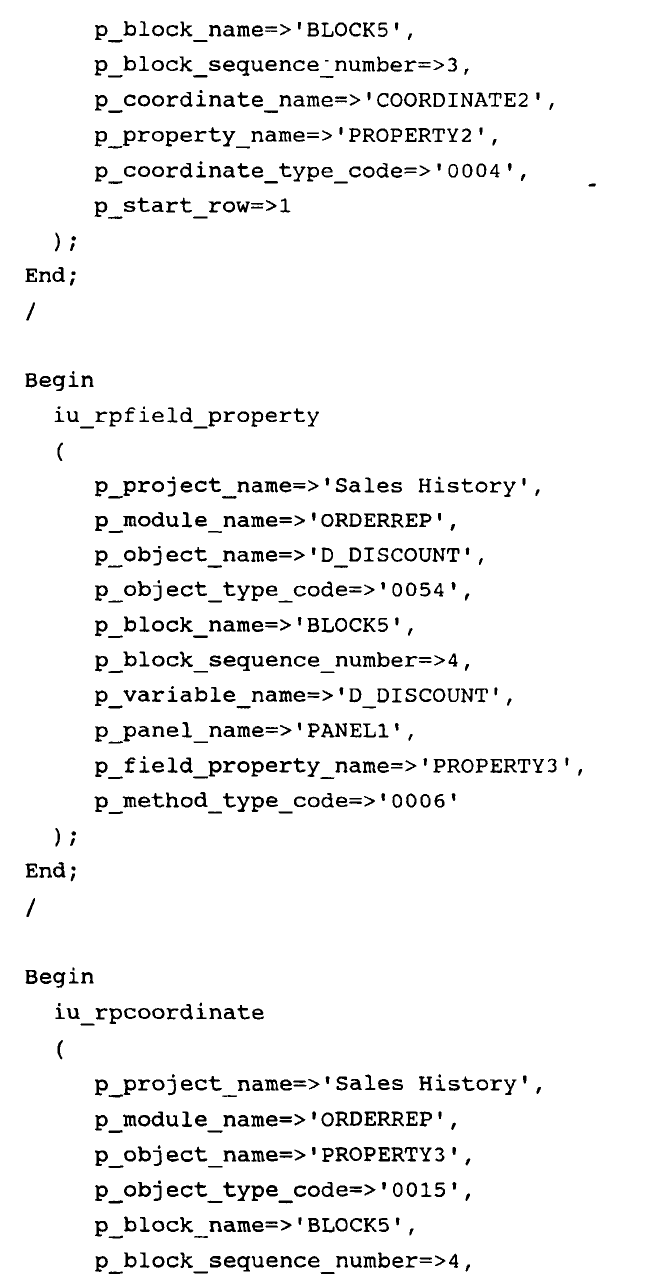

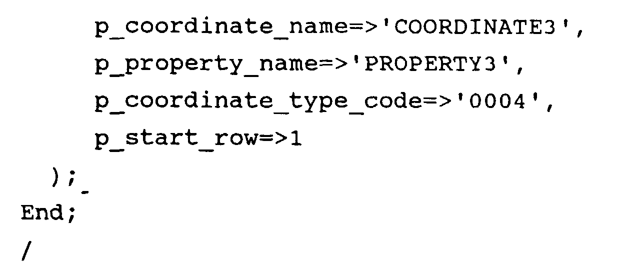

### F. Data Model for Access & Access Field

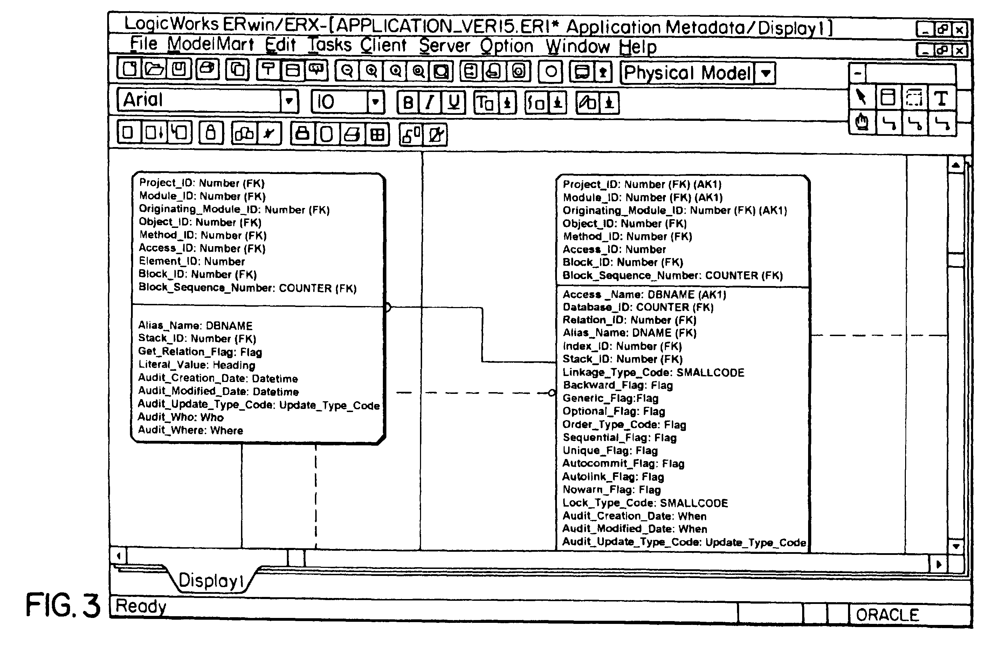

Figure 3 shows a representation of the portion of the data model that encompasses the ACCESS and ACCESS_FIELDS relations. These entities in the CORE Repository are used to store the information that will be used to regenerate the data selection criteria for the target environment.

### G. Oracle API Source Code

The following sample API includes the structure and functionality inherent in the remainder of the APIs. Each API is programmed with the capability to determine if the action to be executed is an Insert action or an Update action. Prior to actually performing the required action, the API's will perform a number of validation steps that establish the relationship between the current Object and the remainder of the objects already stored in the CORE repository.

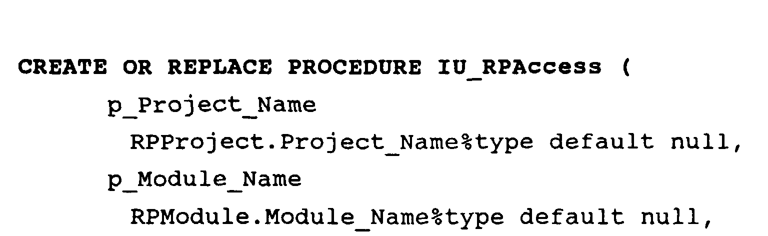

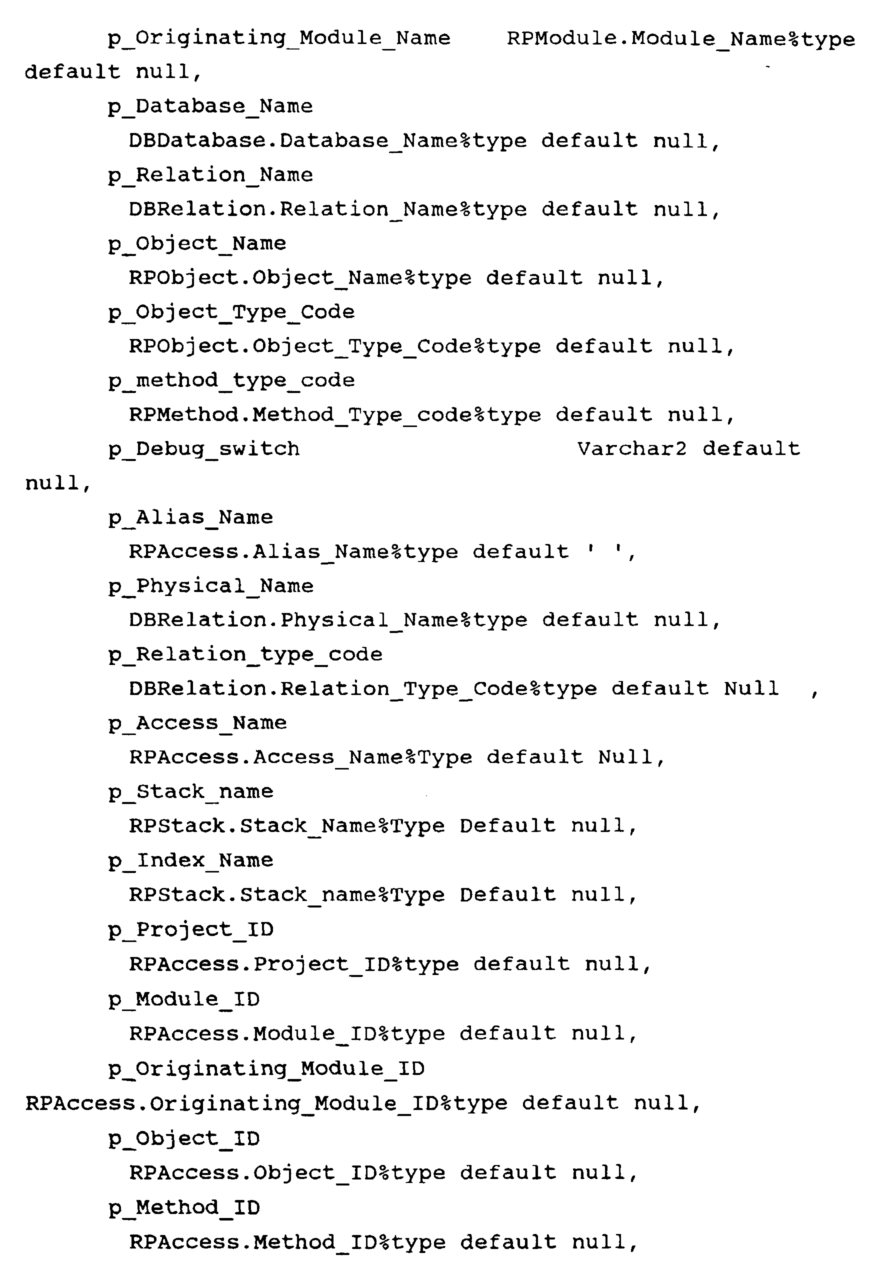

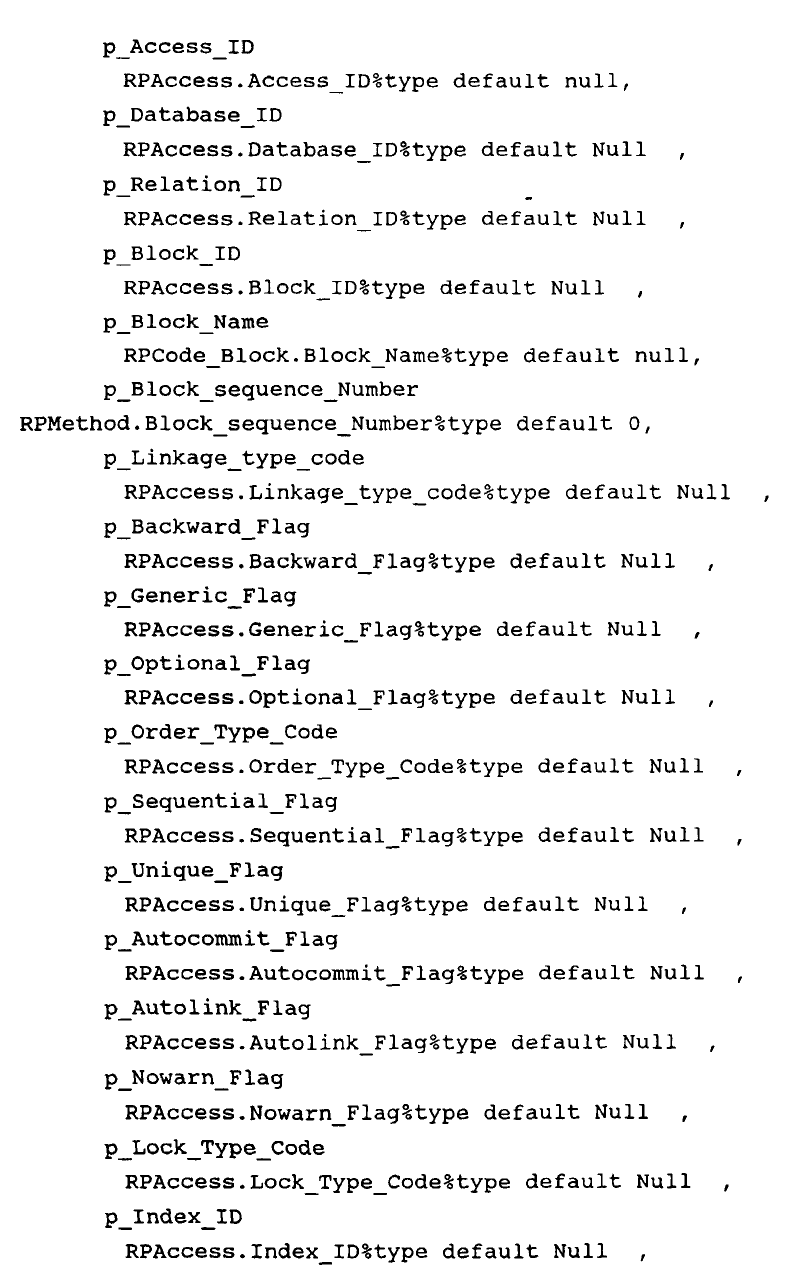

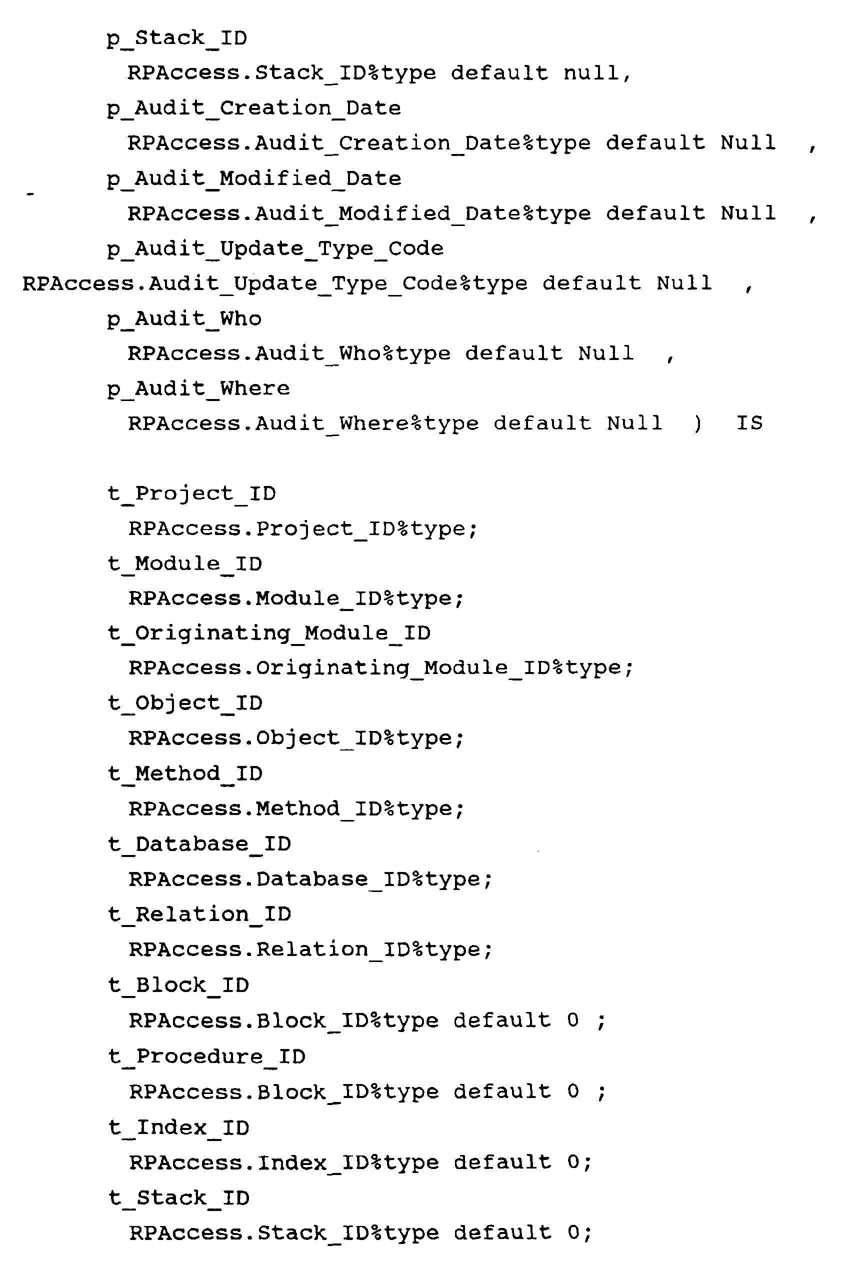

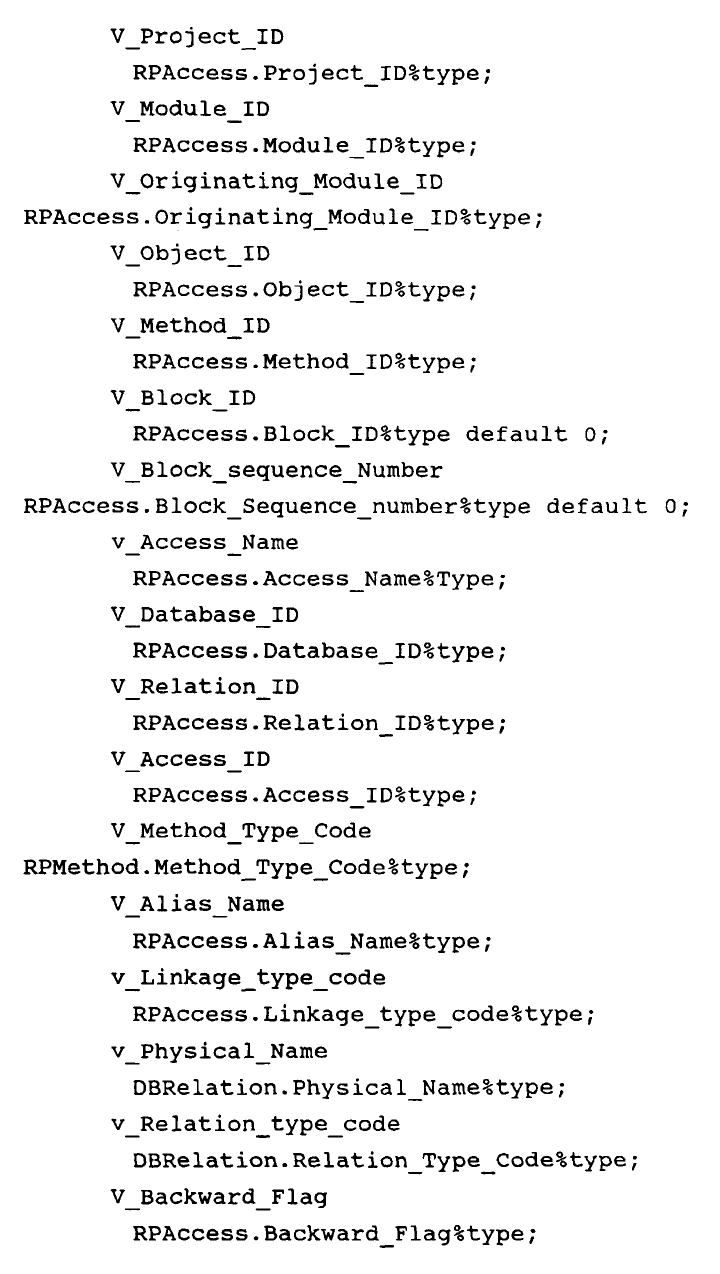

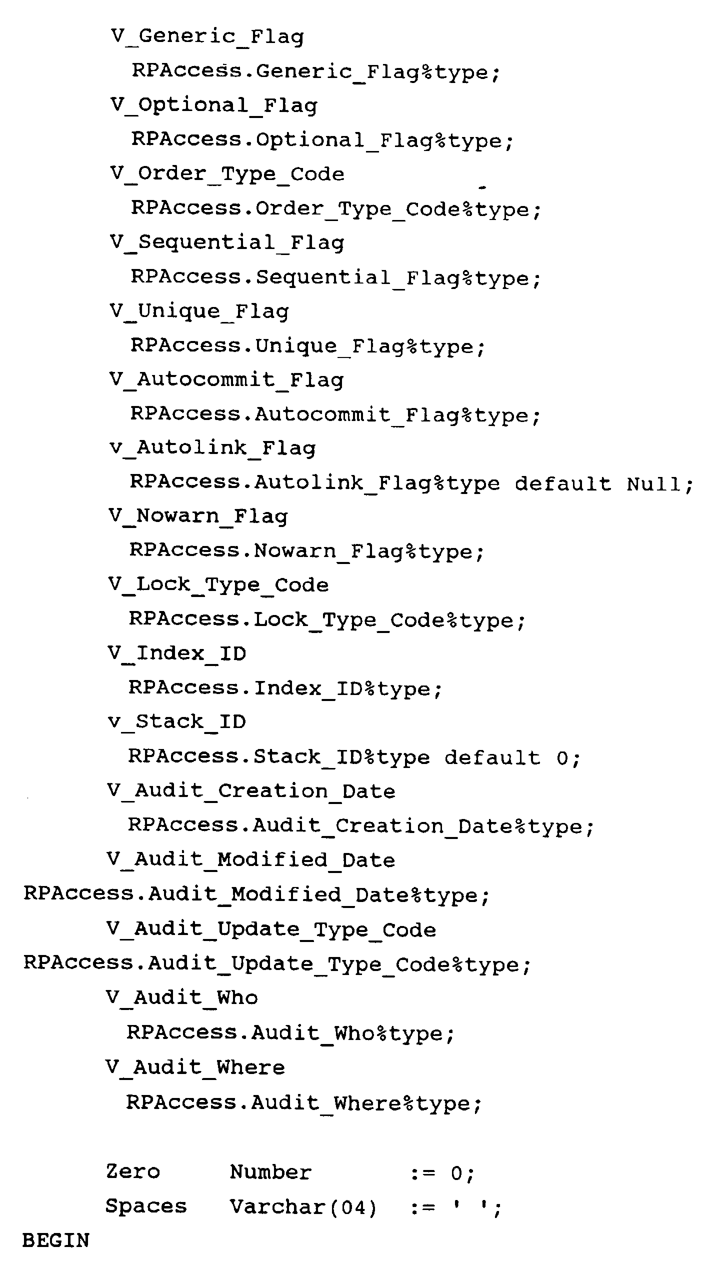

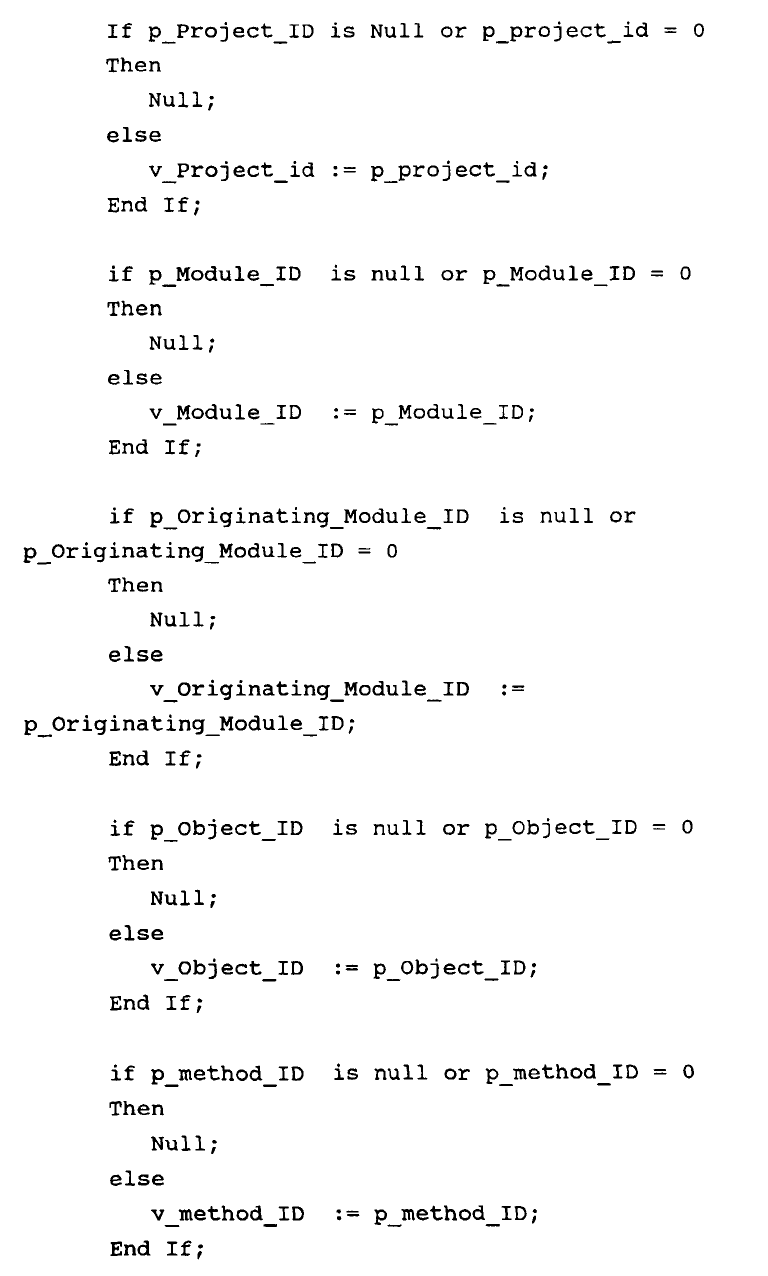

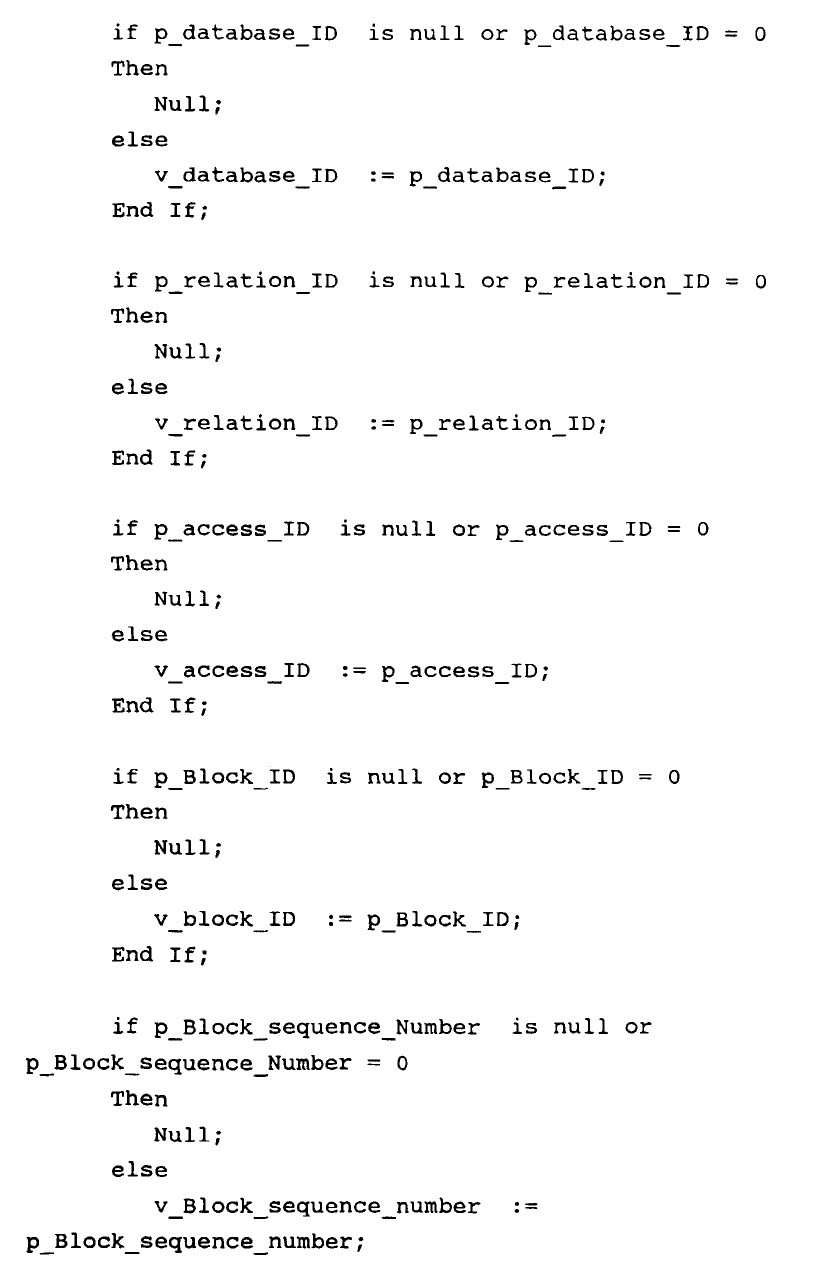

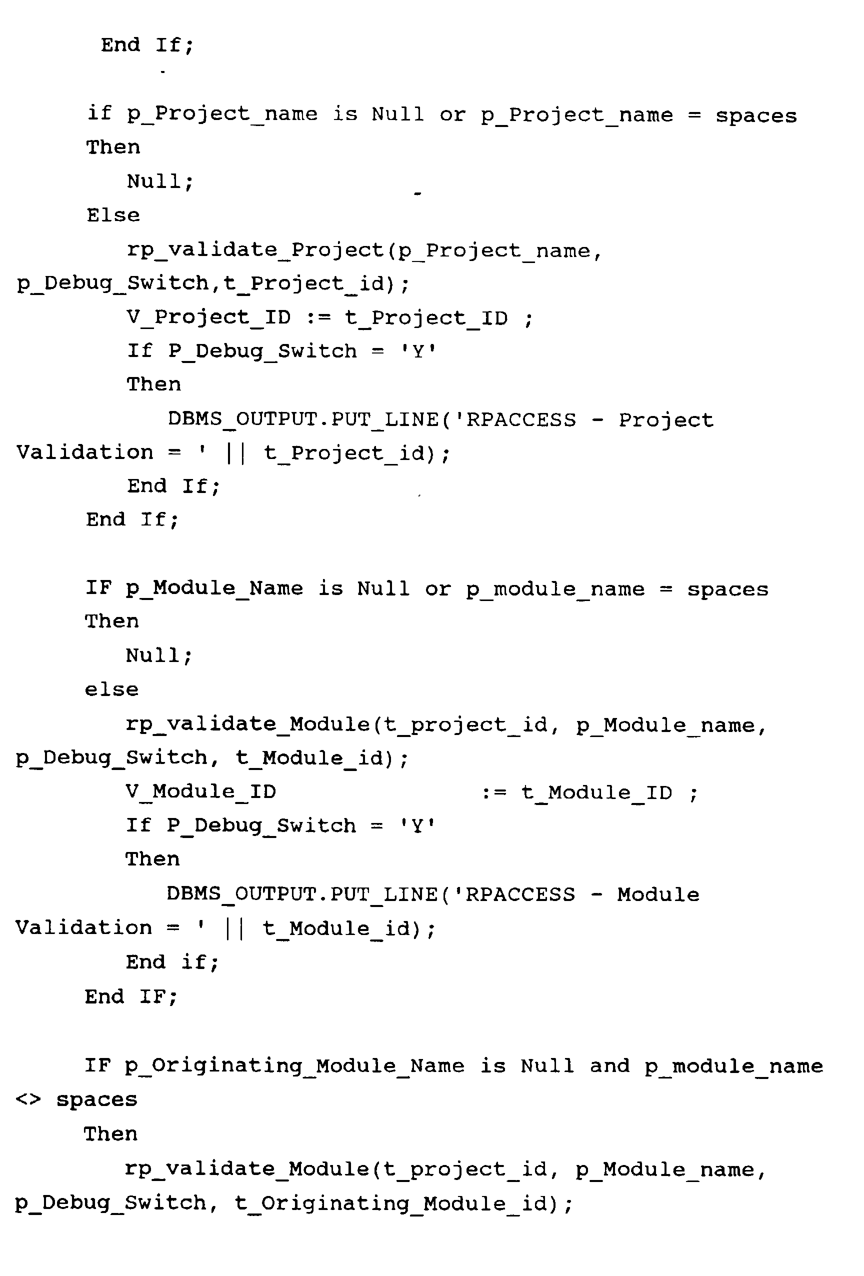

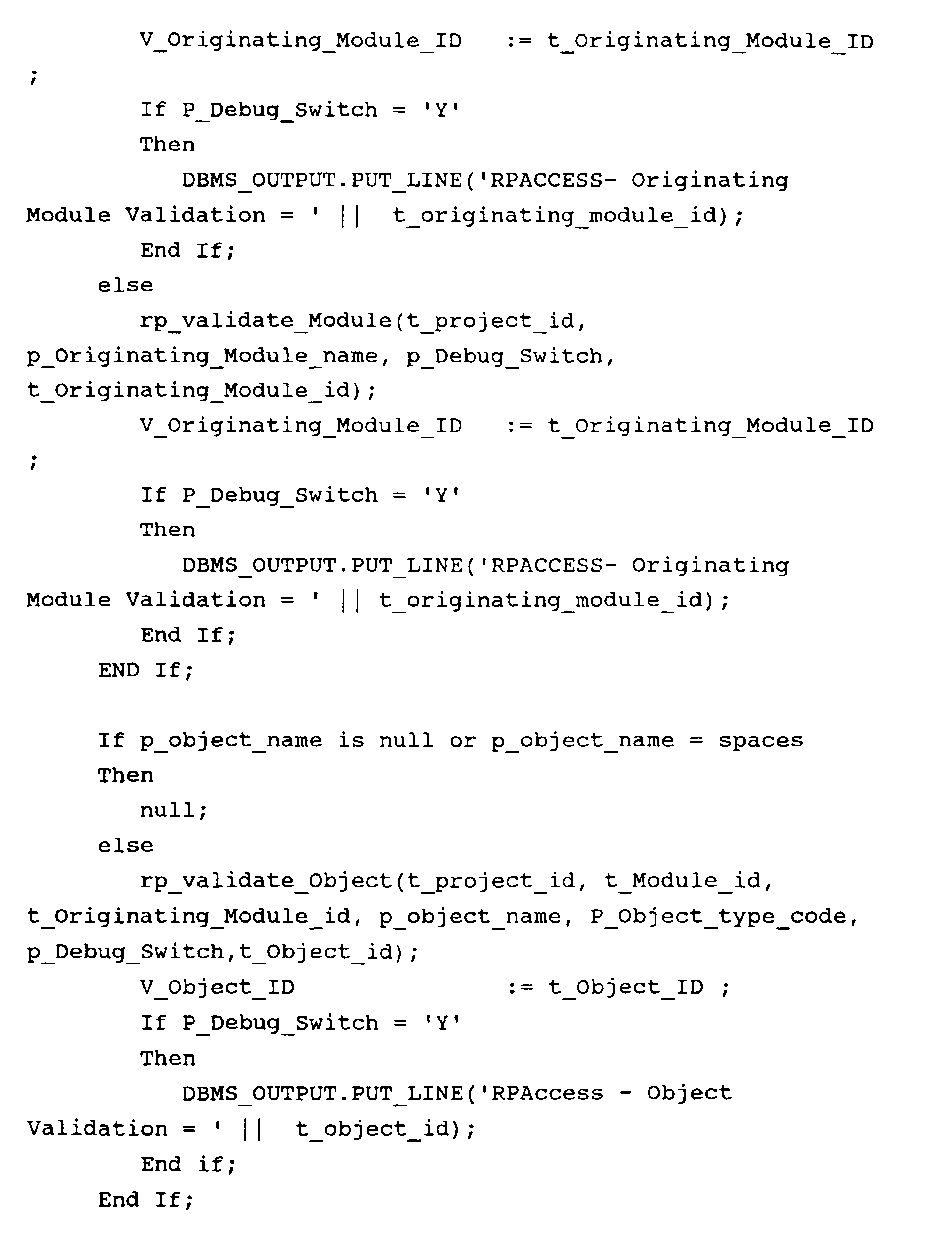

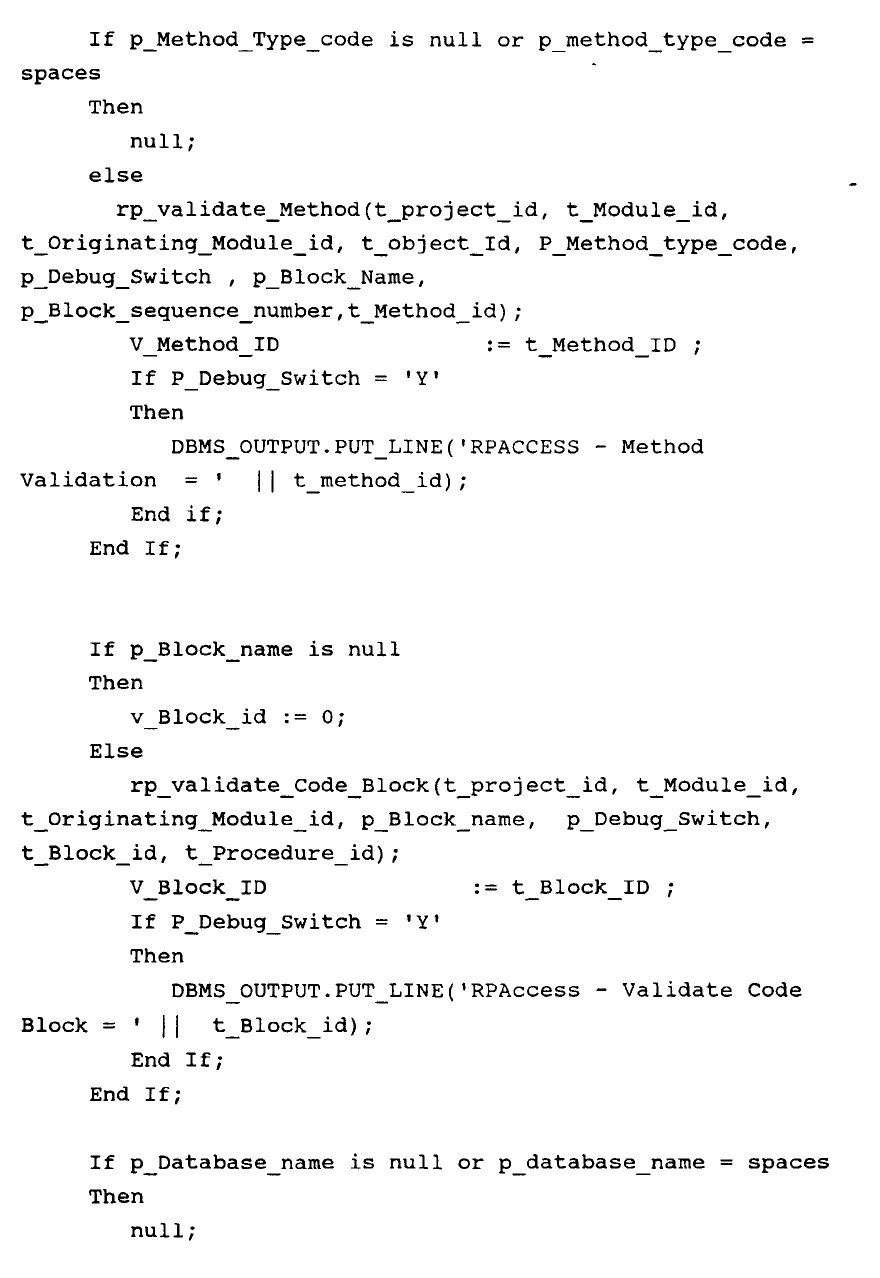

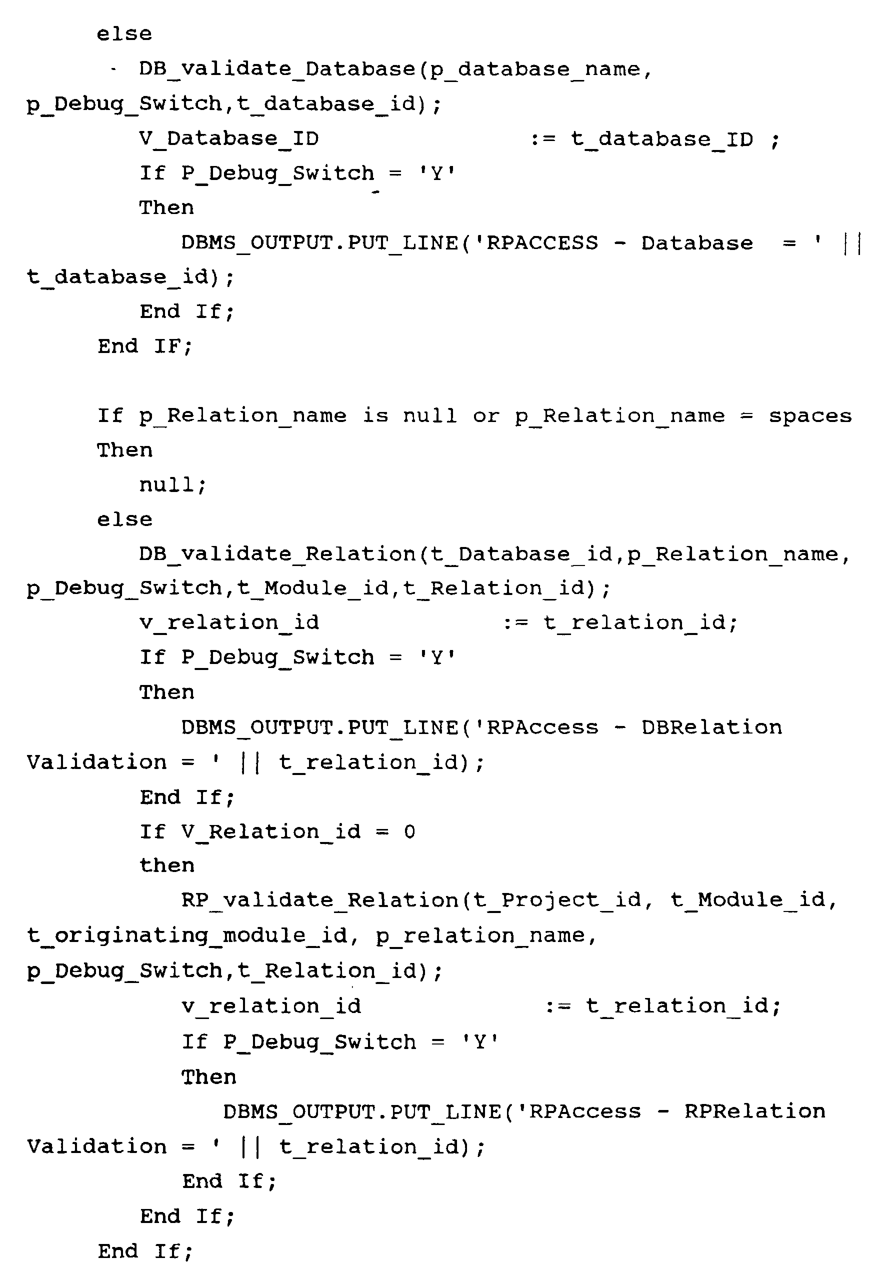

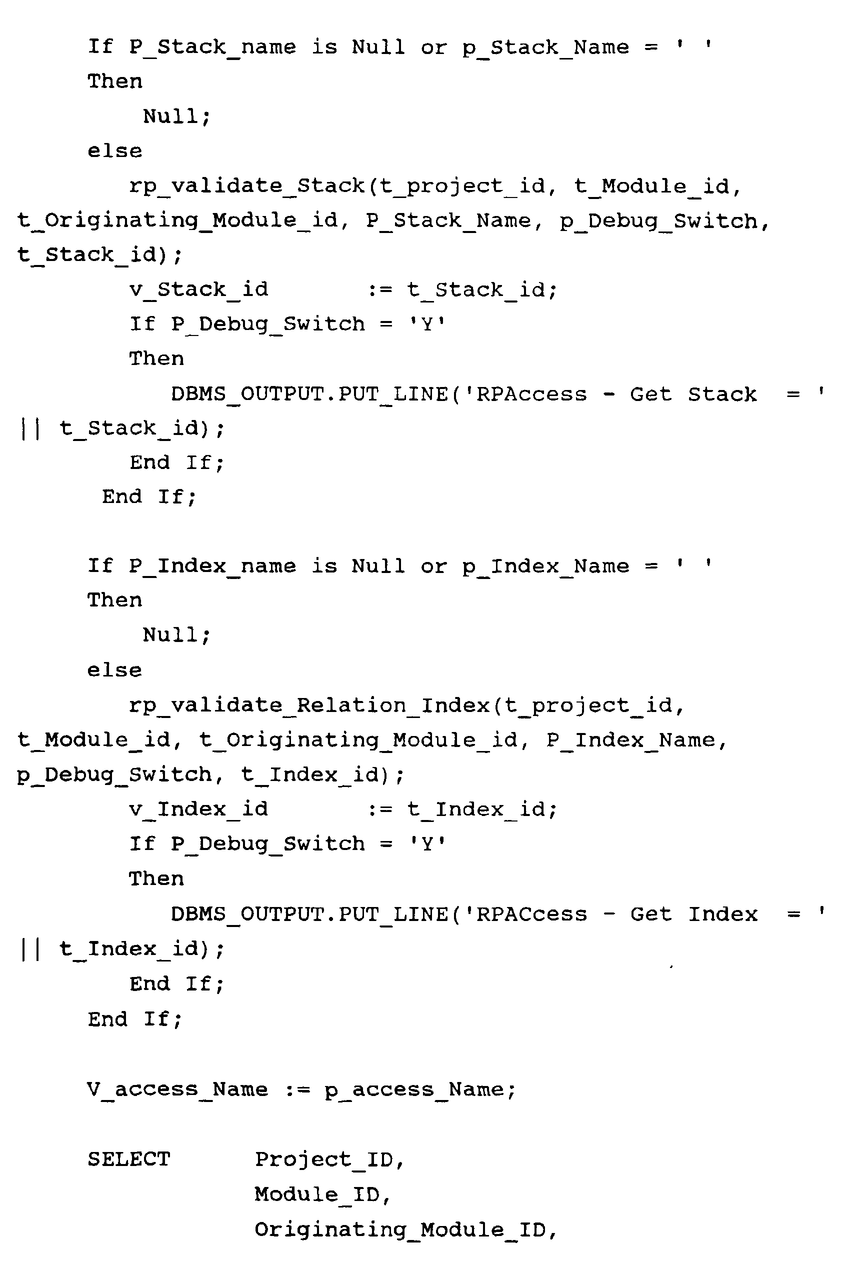

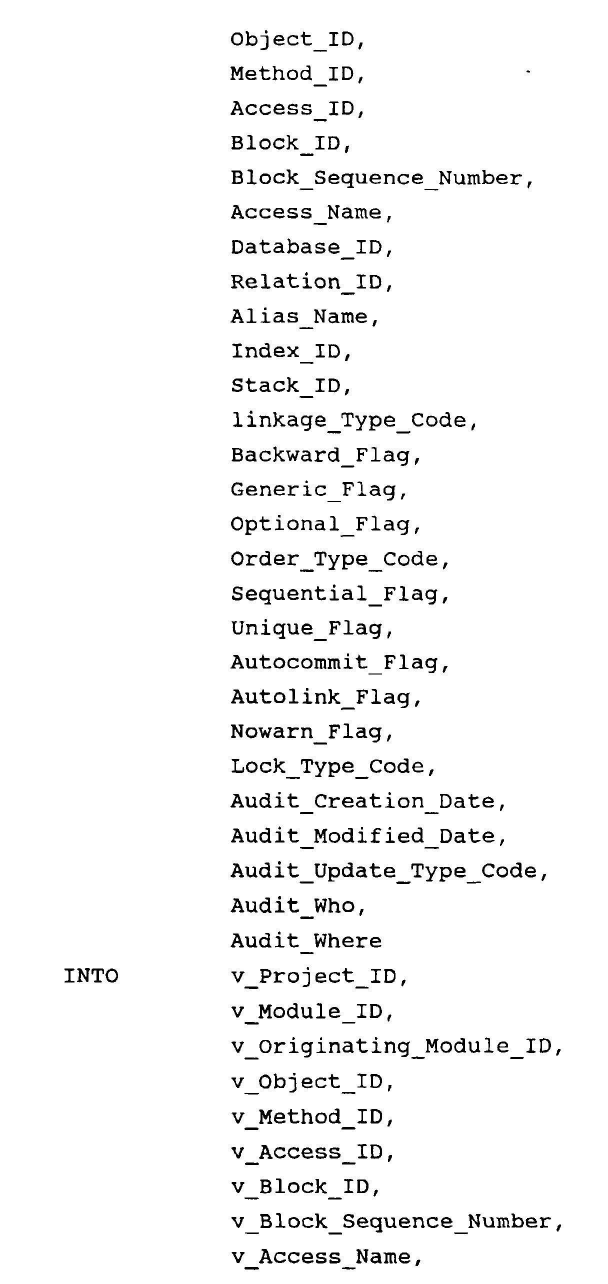

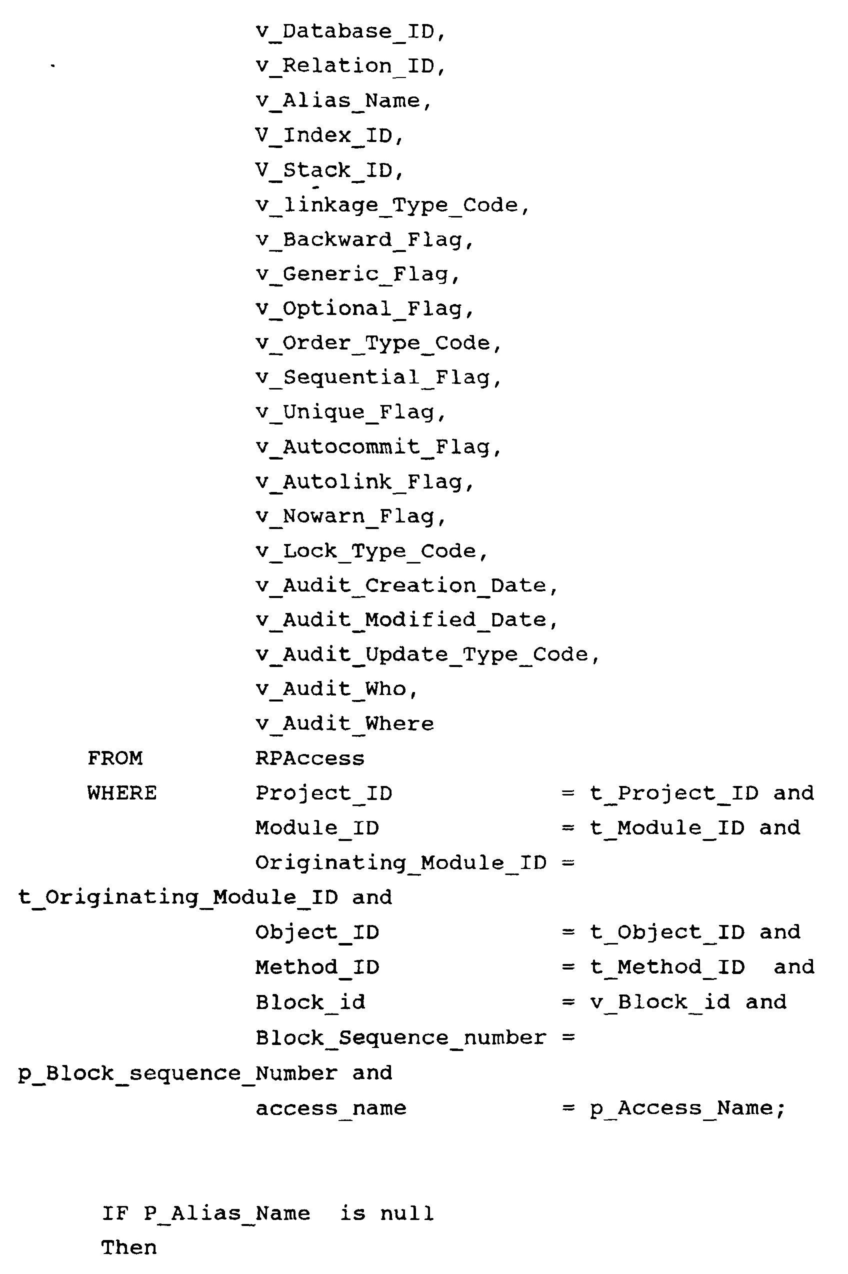

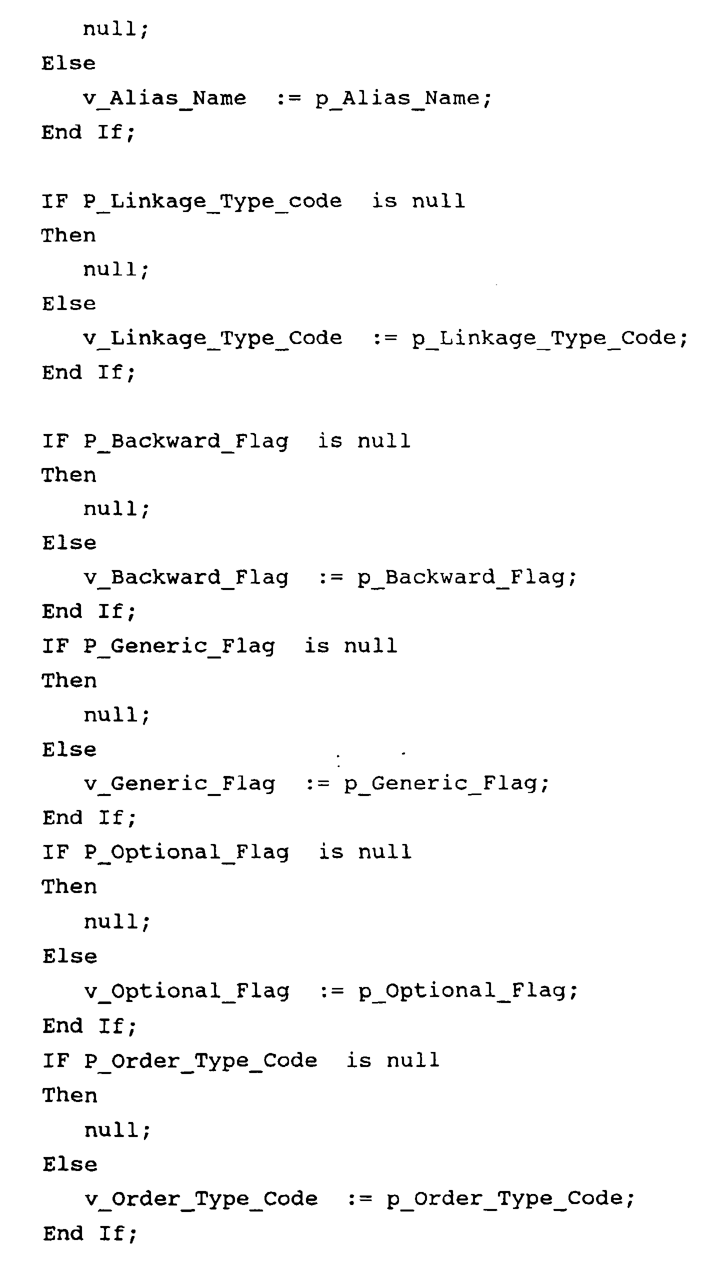

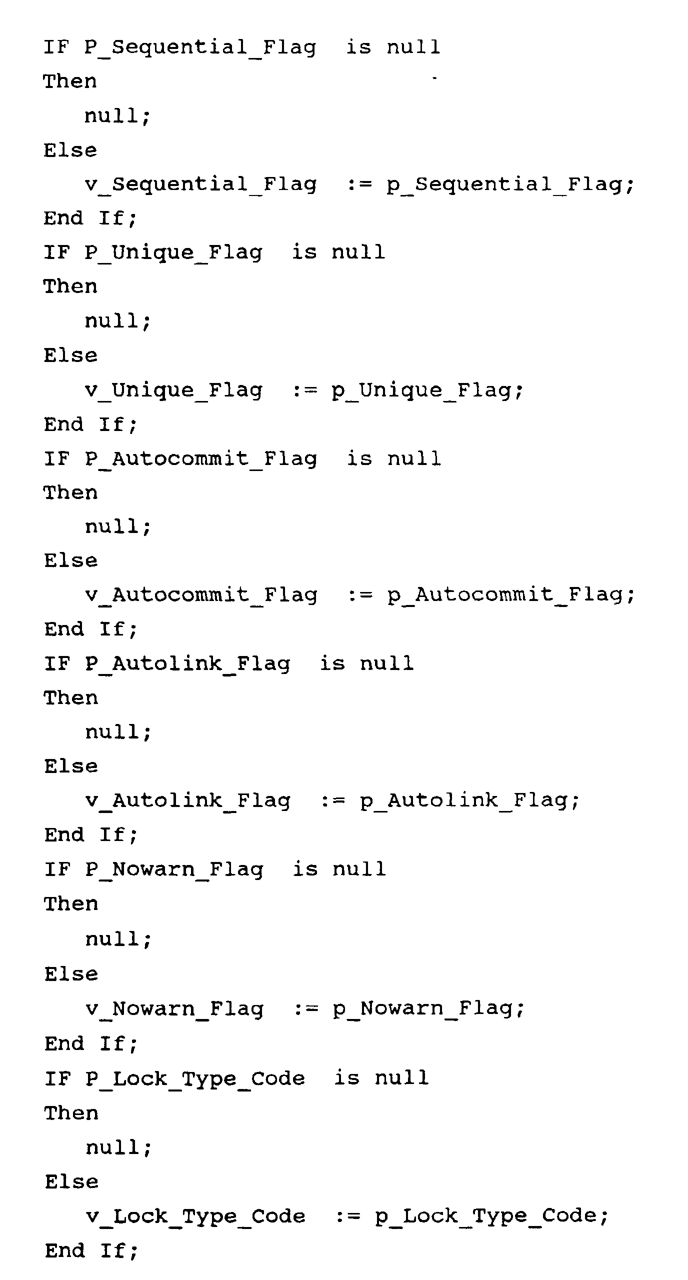

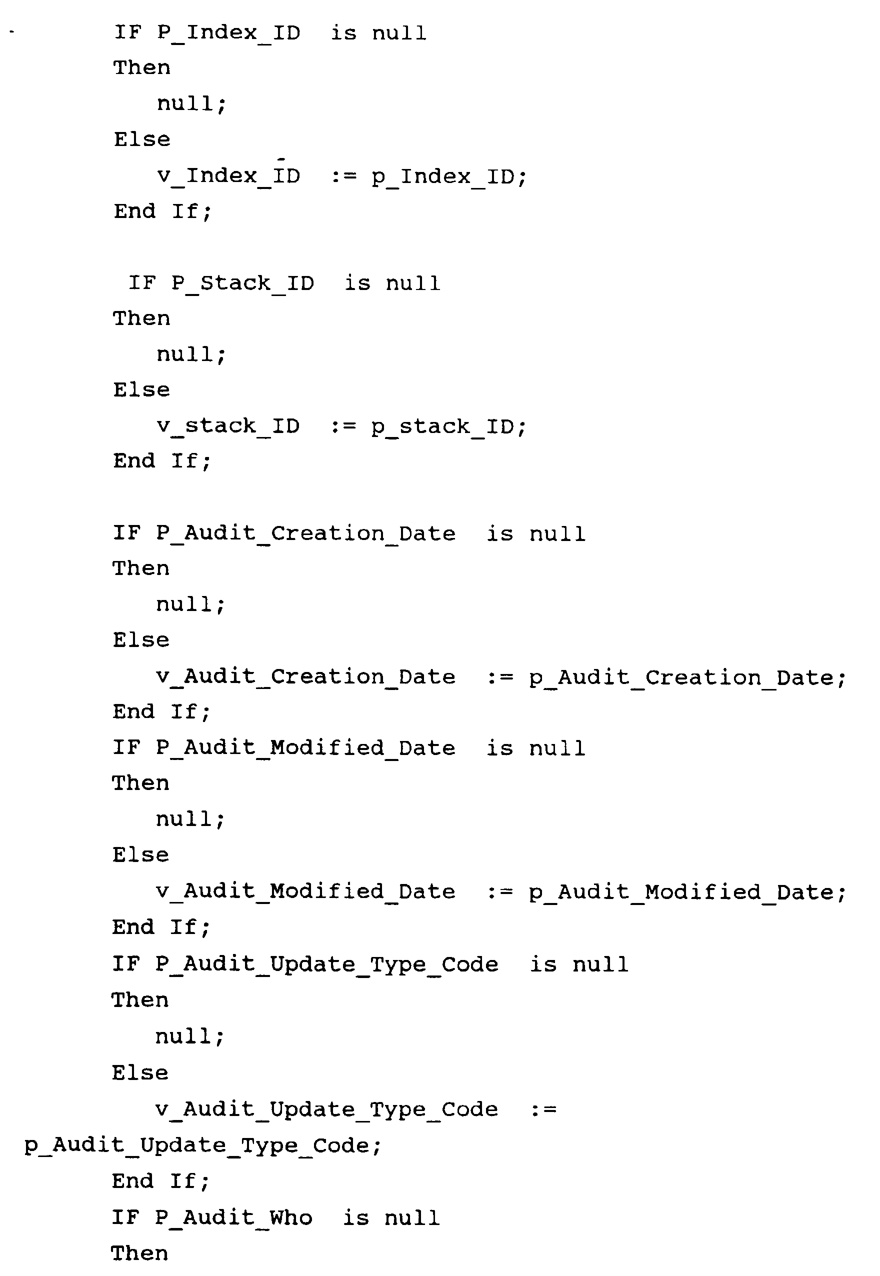

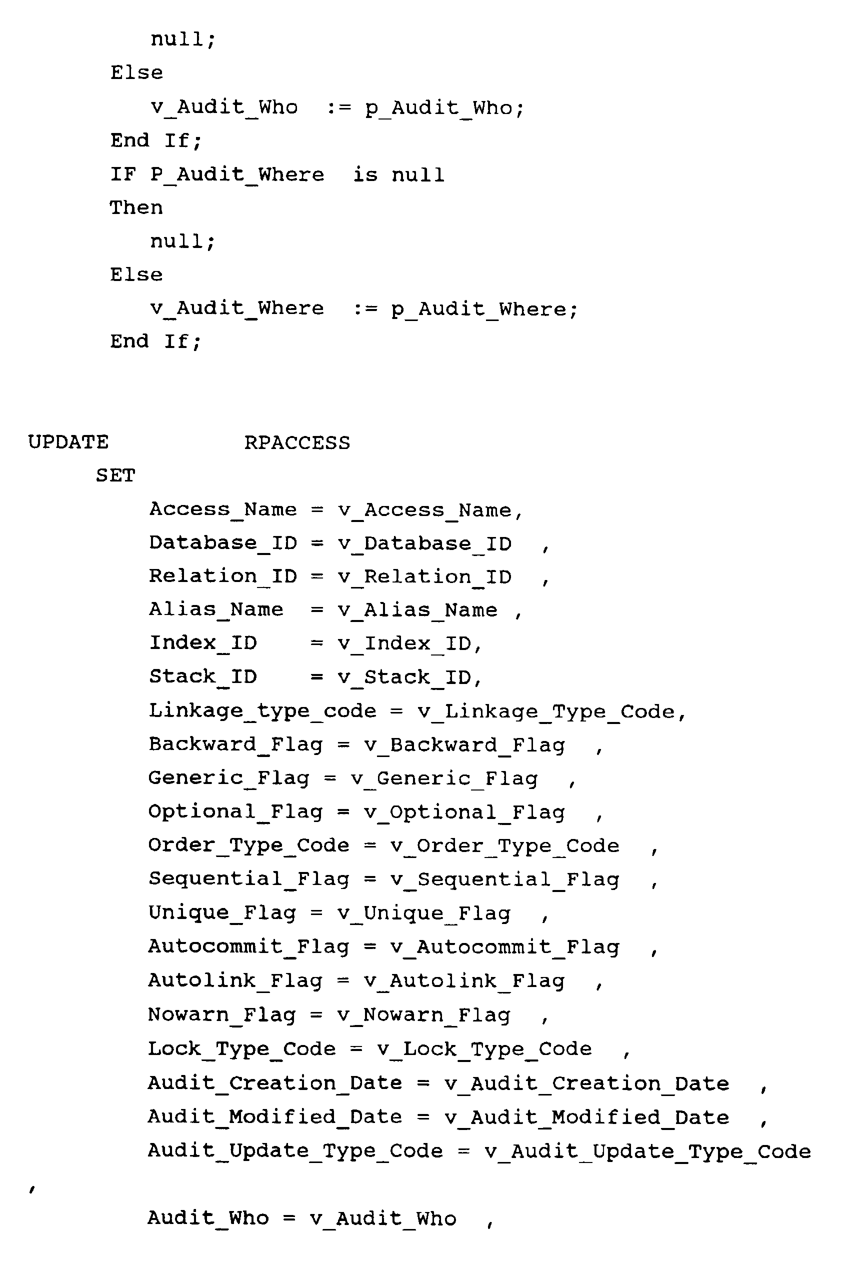

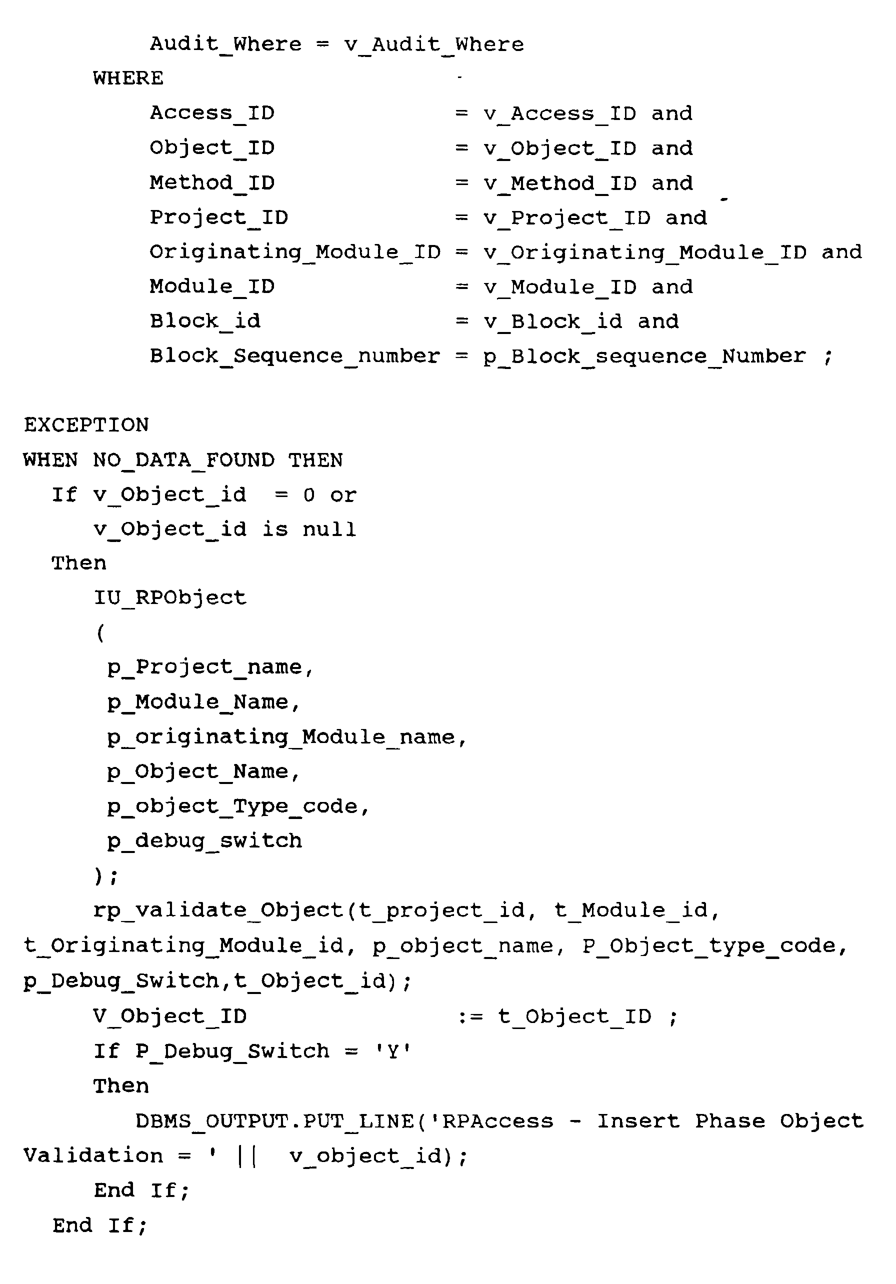

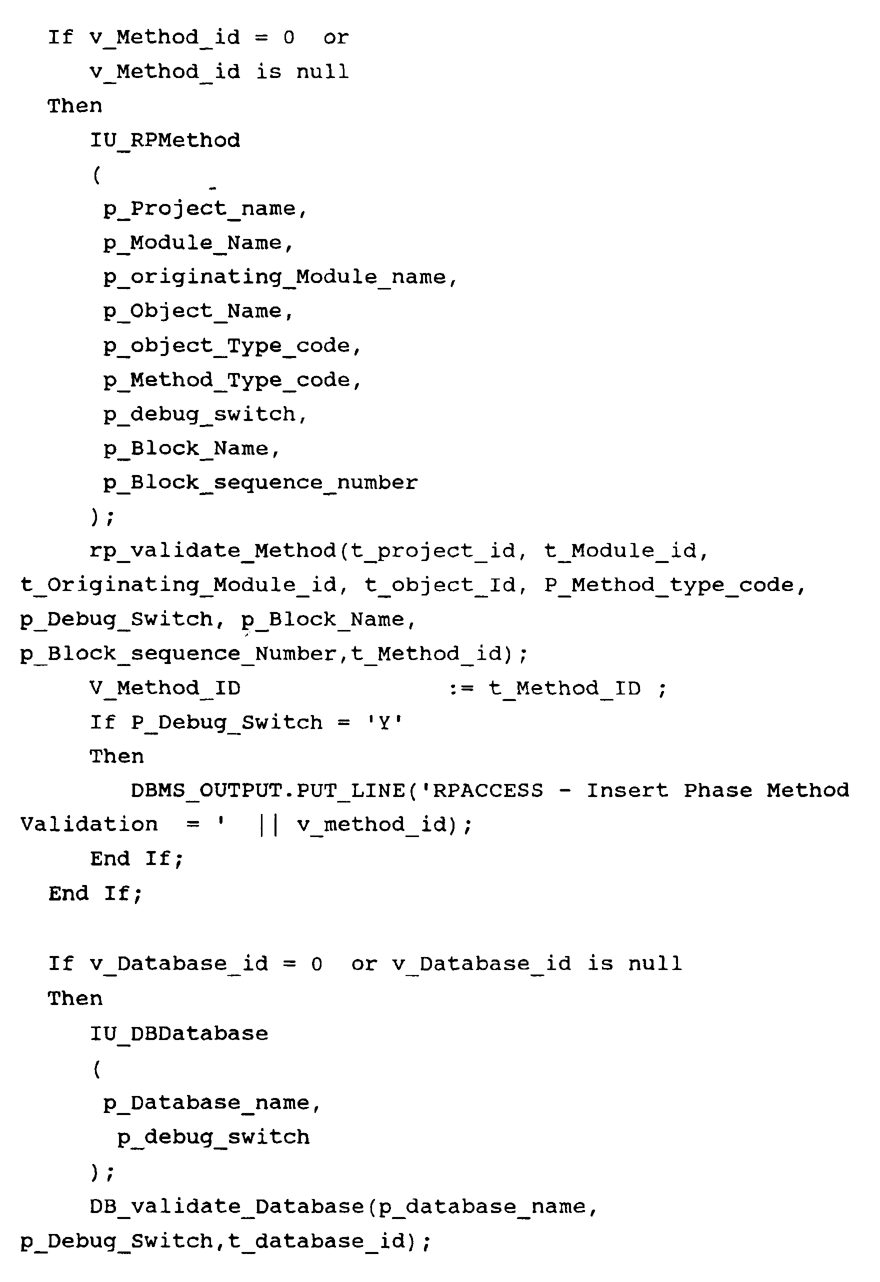

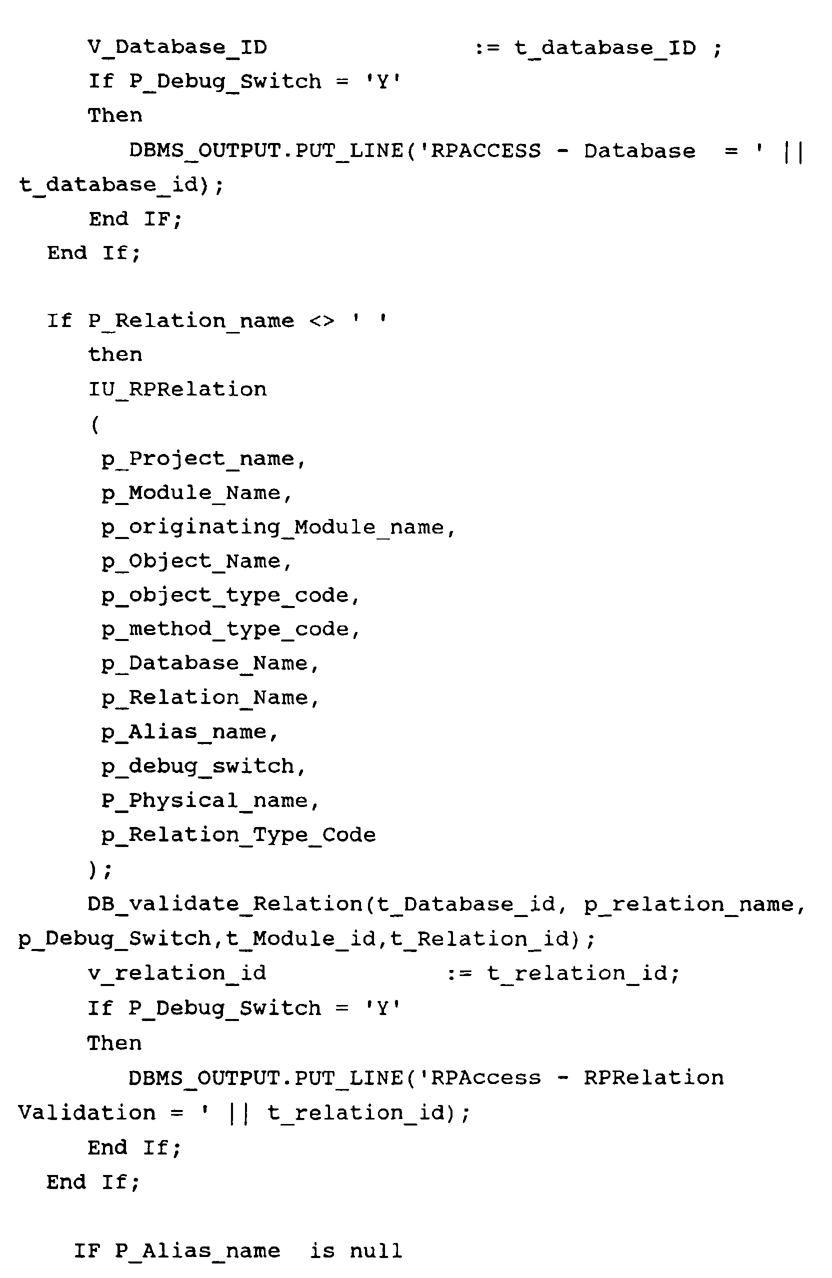

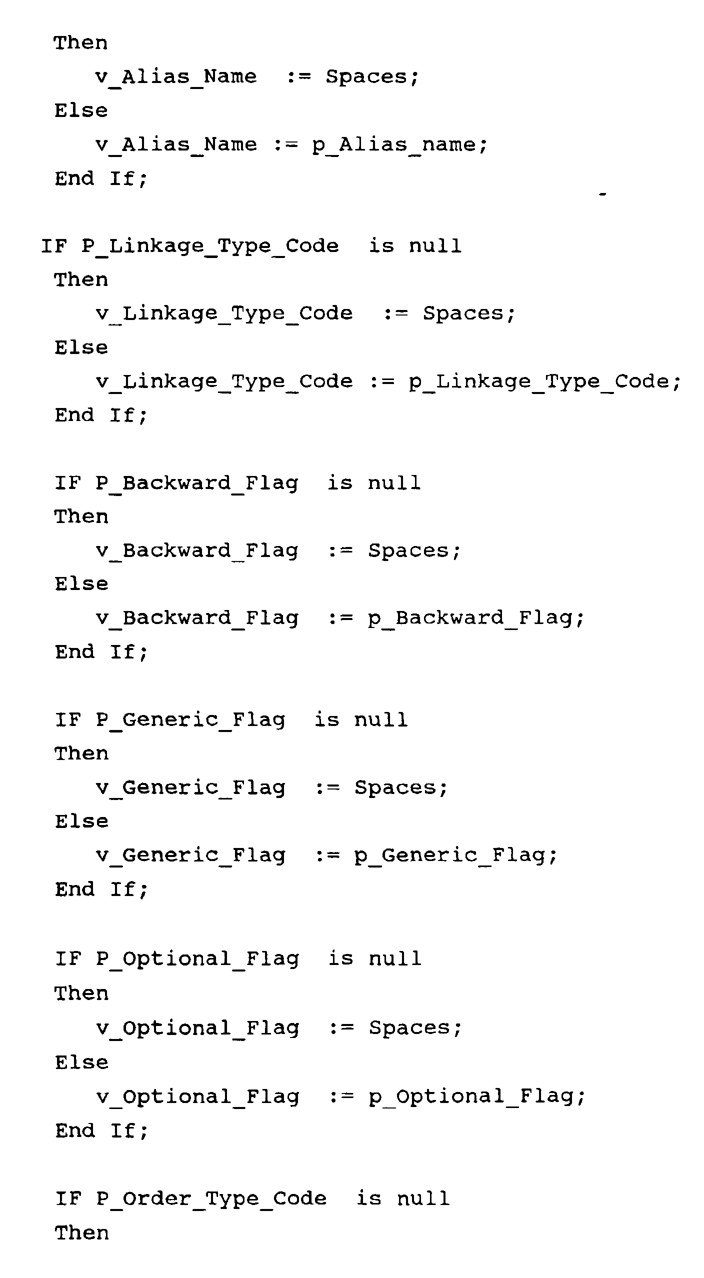

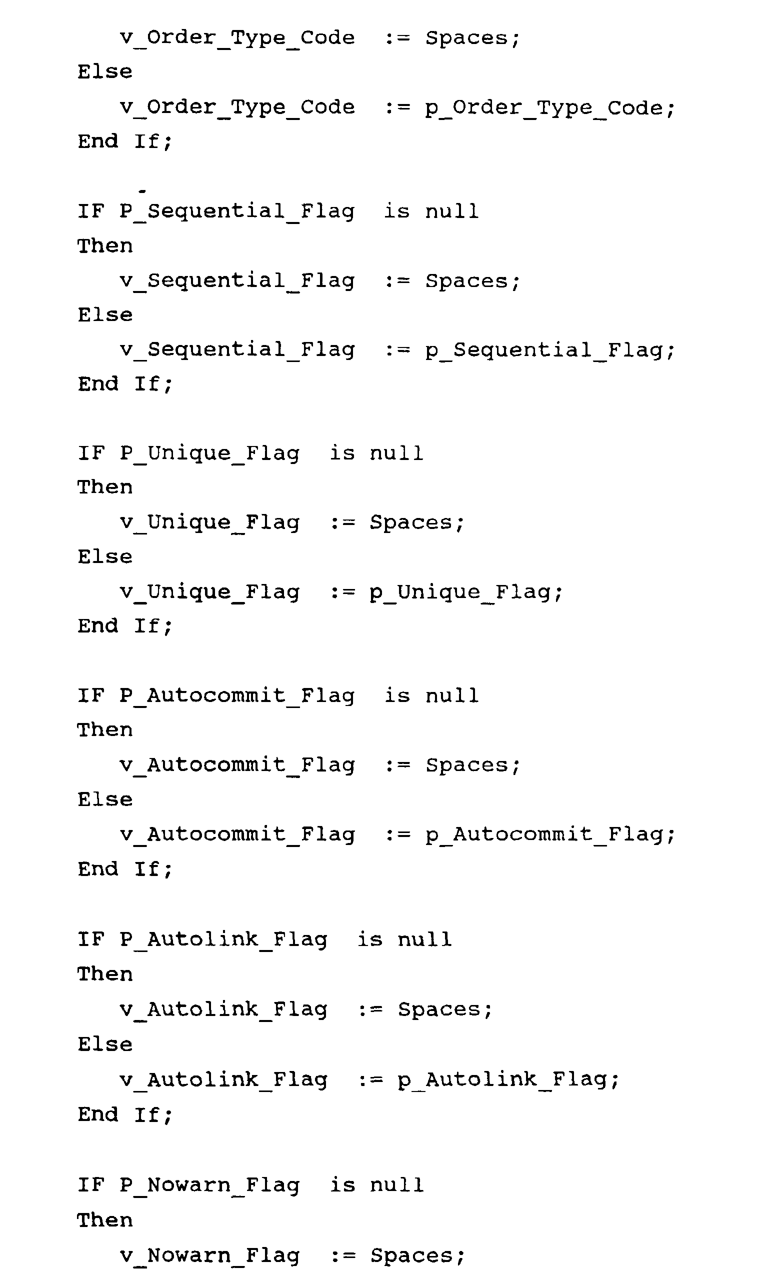

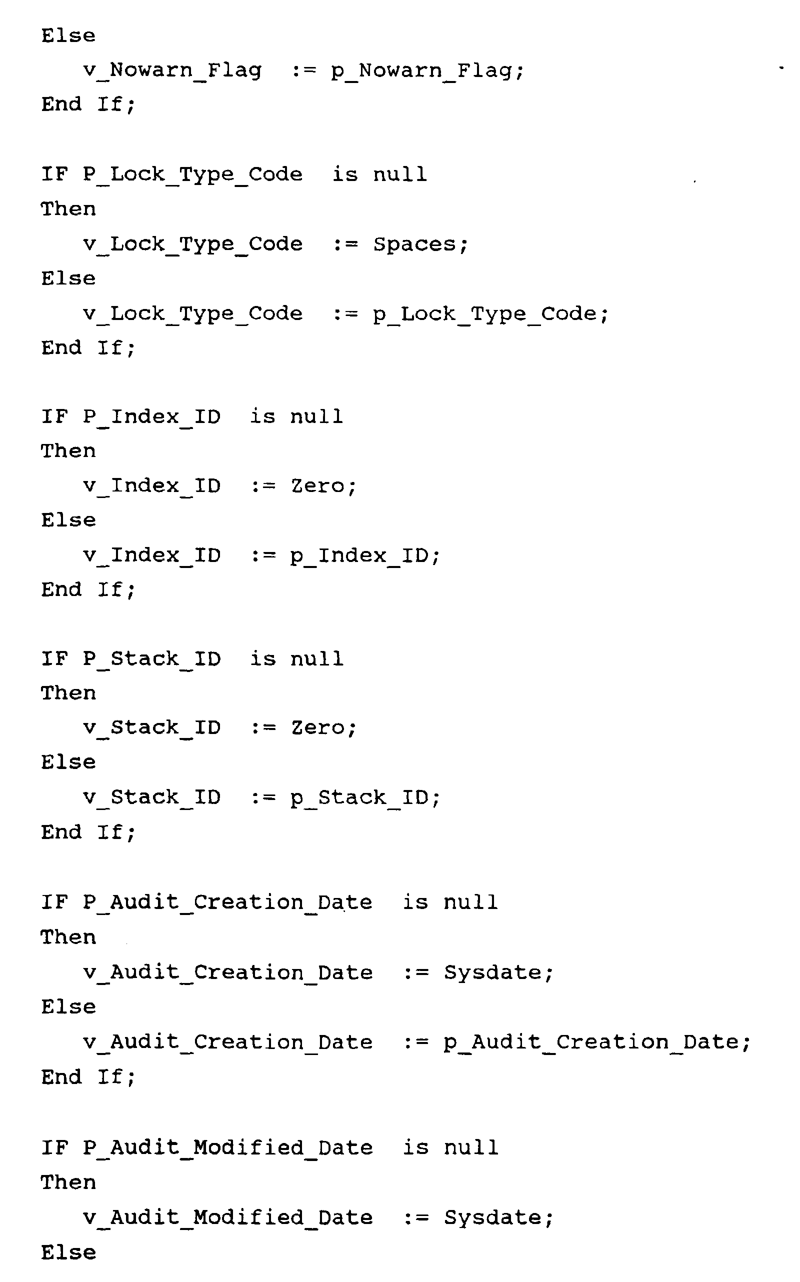

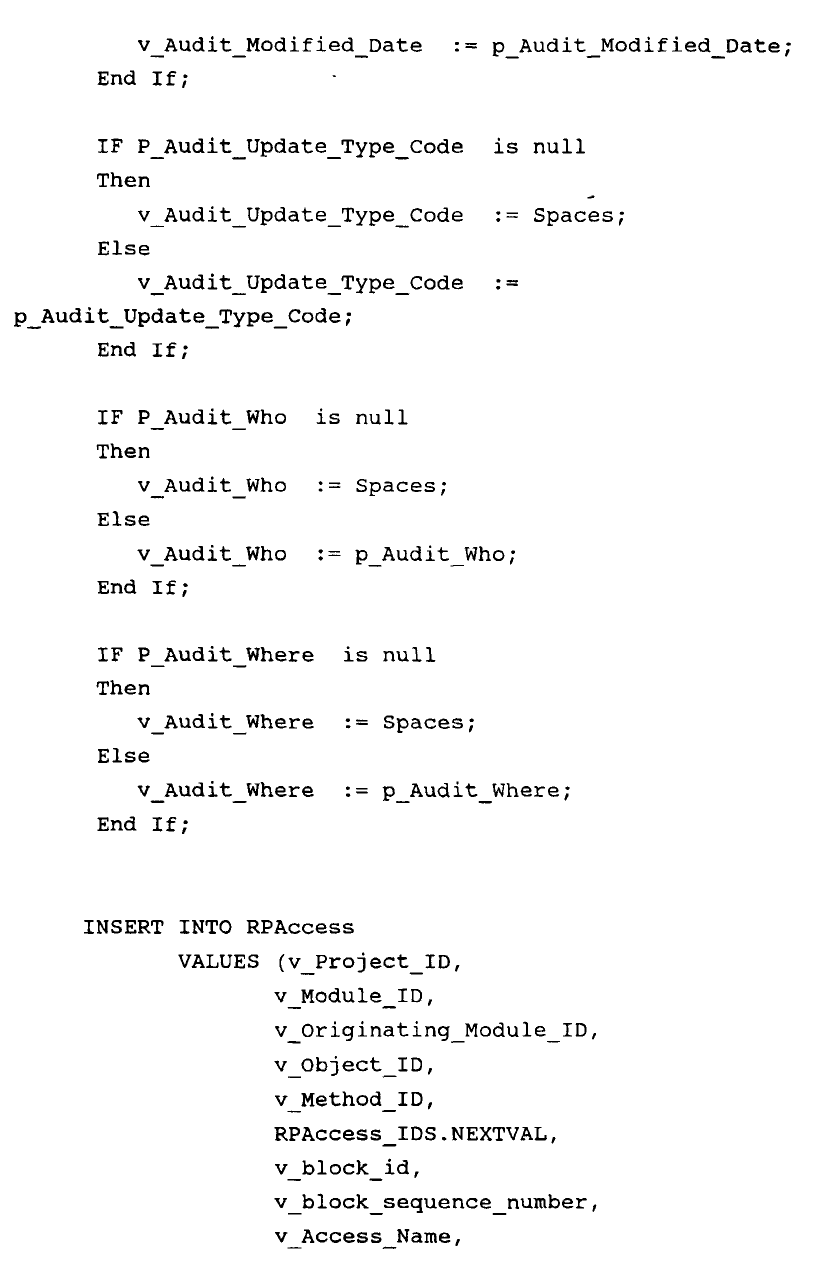

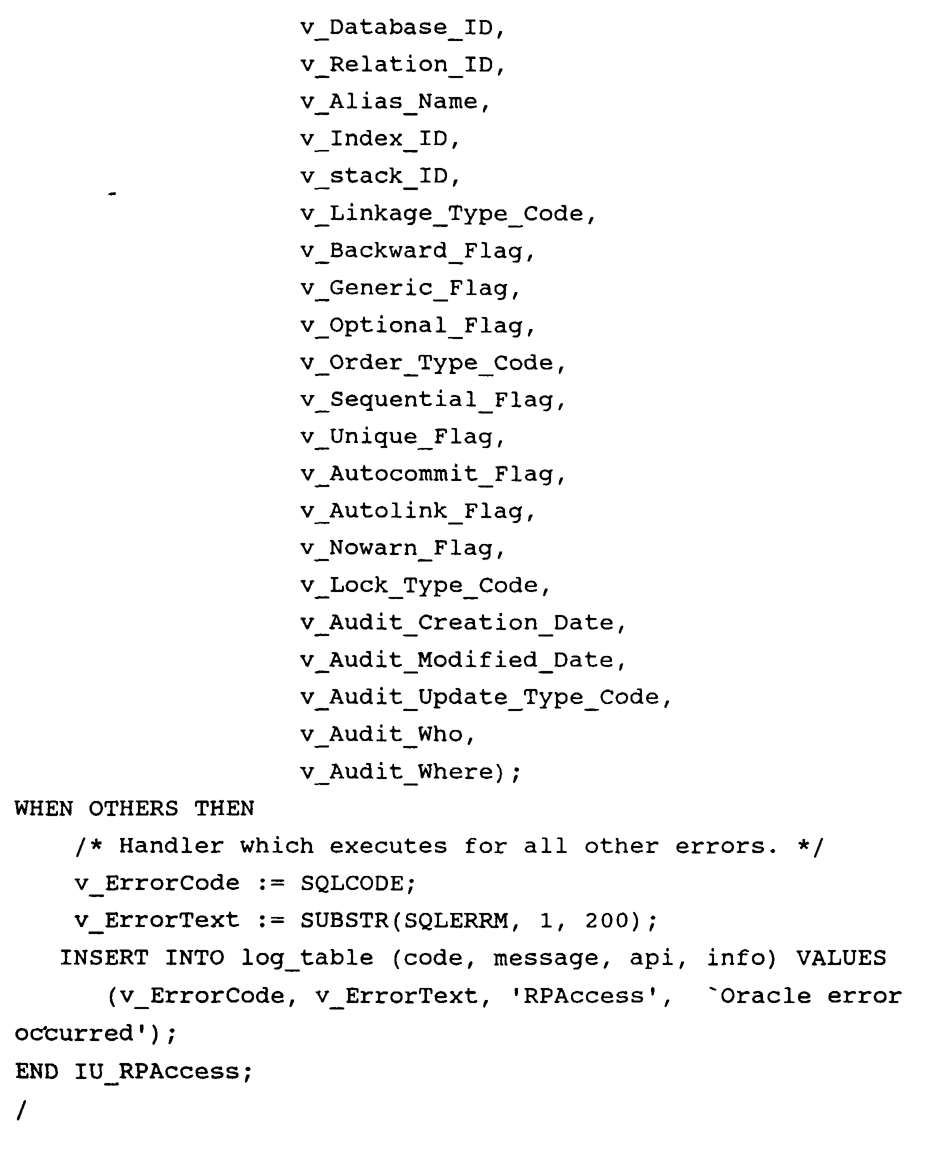

### H. Data Model structures for the Dynamic Tree view Navigators

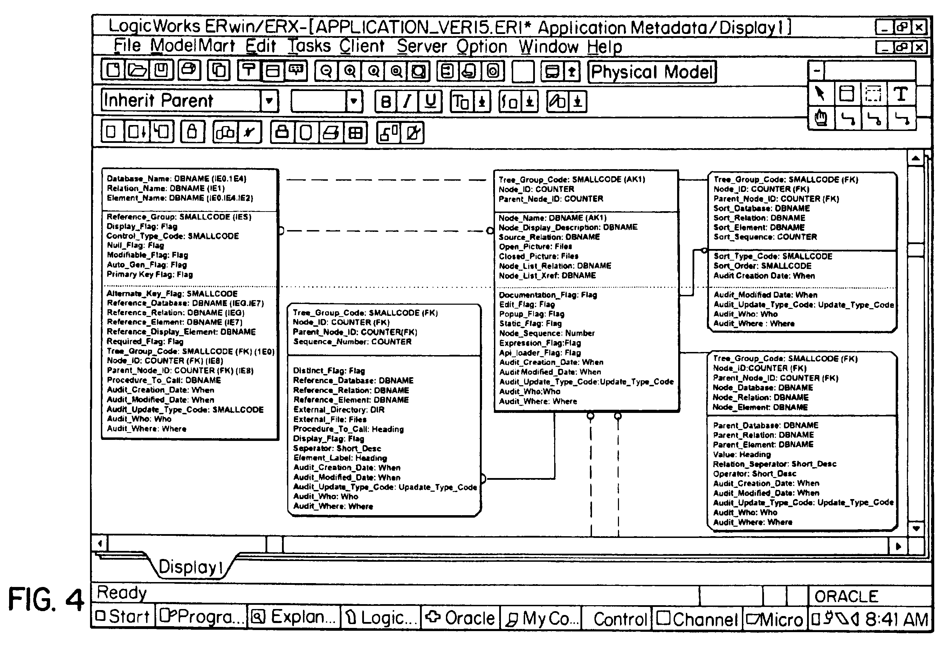

Figure 4 shows a representation of structures represented in the Data Model which form the cornerstone on which the user interface behavior is controlled and managed. For each required node on the tree view, a node and the associated information required to determine the data to be displayed and defined and stored in the structures represented in this figure.

### I. Visual Basic Dynamic Tree View Navigator

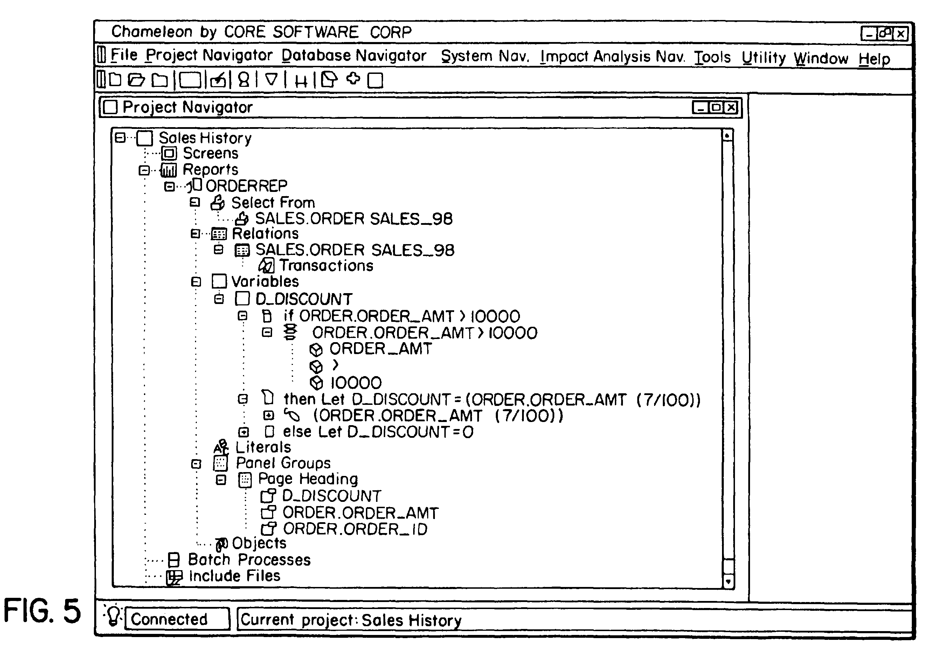

Figure 5 is a screenshot of a tree view. The code required to create this tree view dynamically (data driven) is illustrated in the figure.

The following code dynamically creates the tree view for the preferred embodiment. This code determines what information is to be displayed in the tree view. It references the **"CreateNode"** procedure (in order to create each node in the tree view) which is demonstrated in the description is following this procedure.

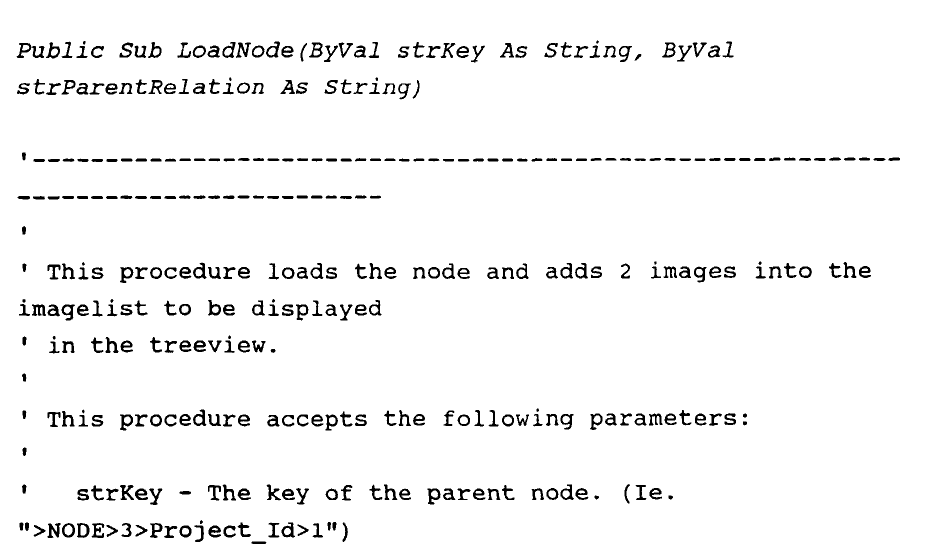

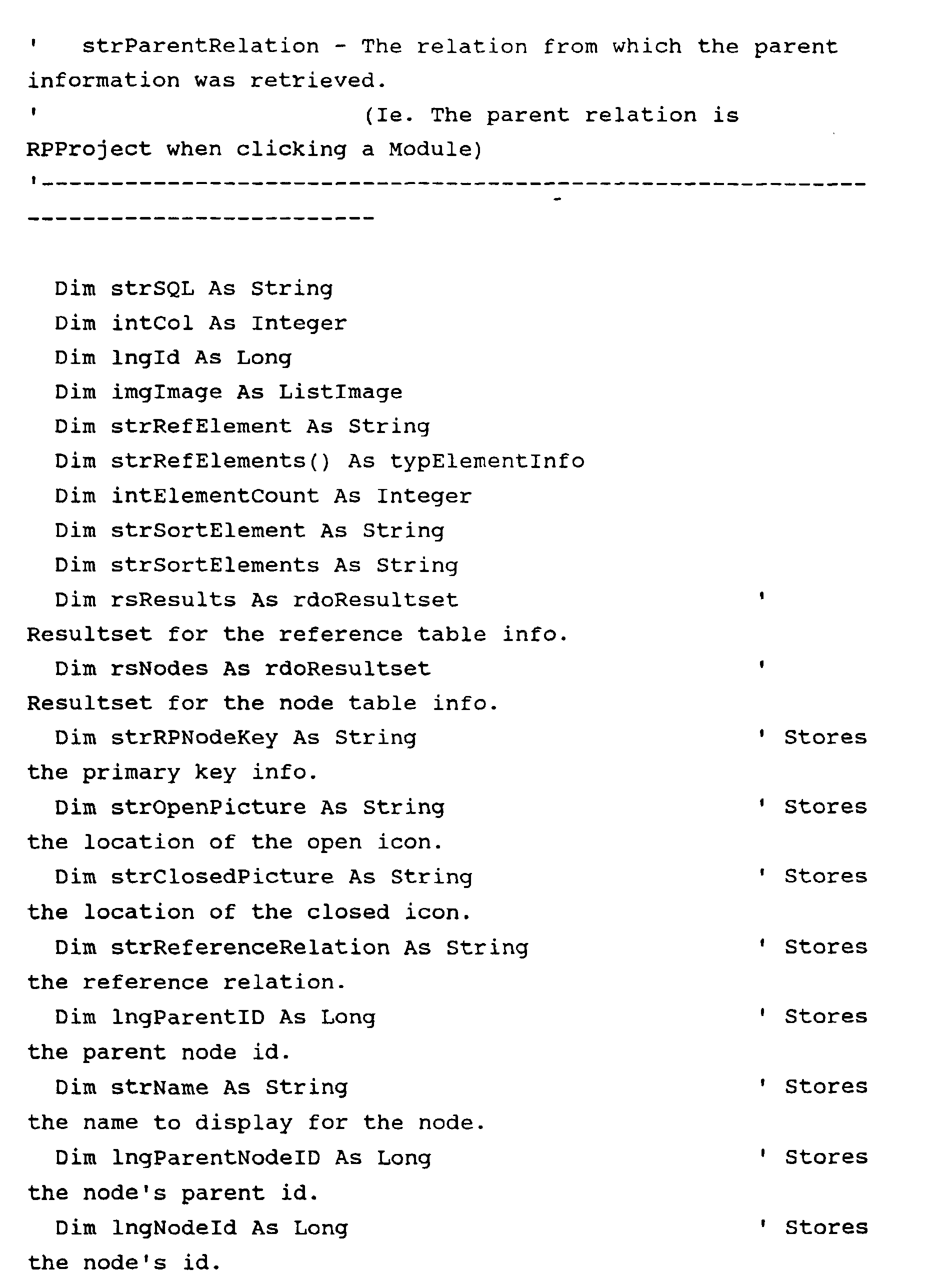

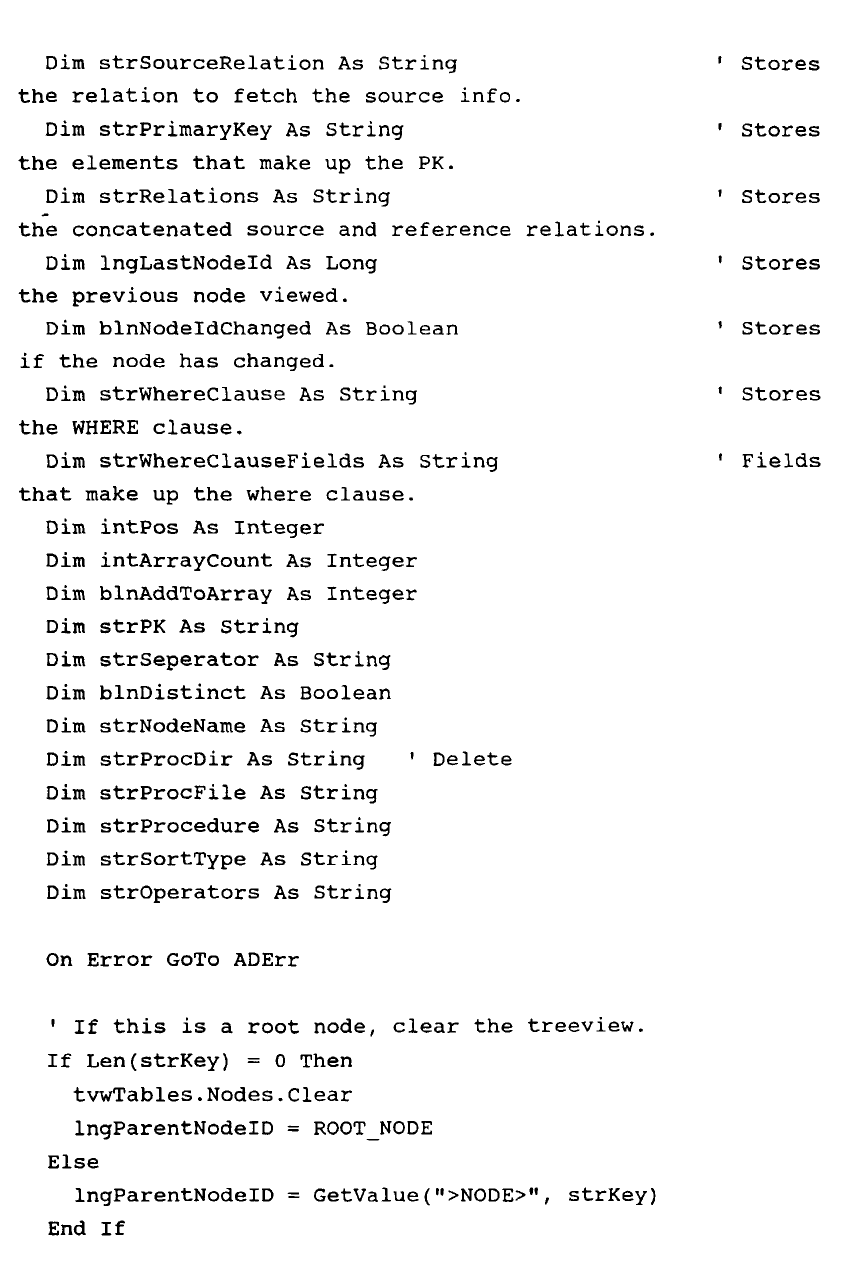

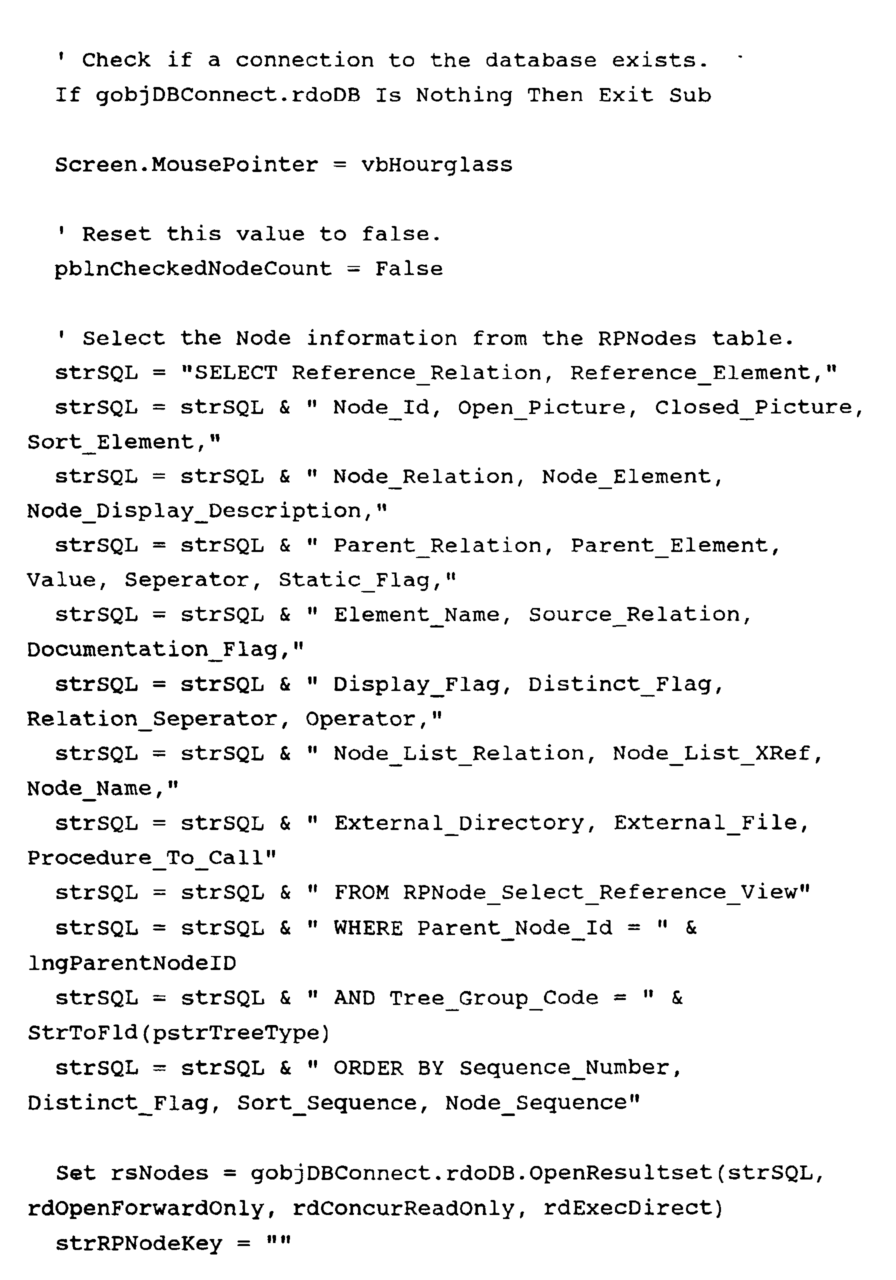

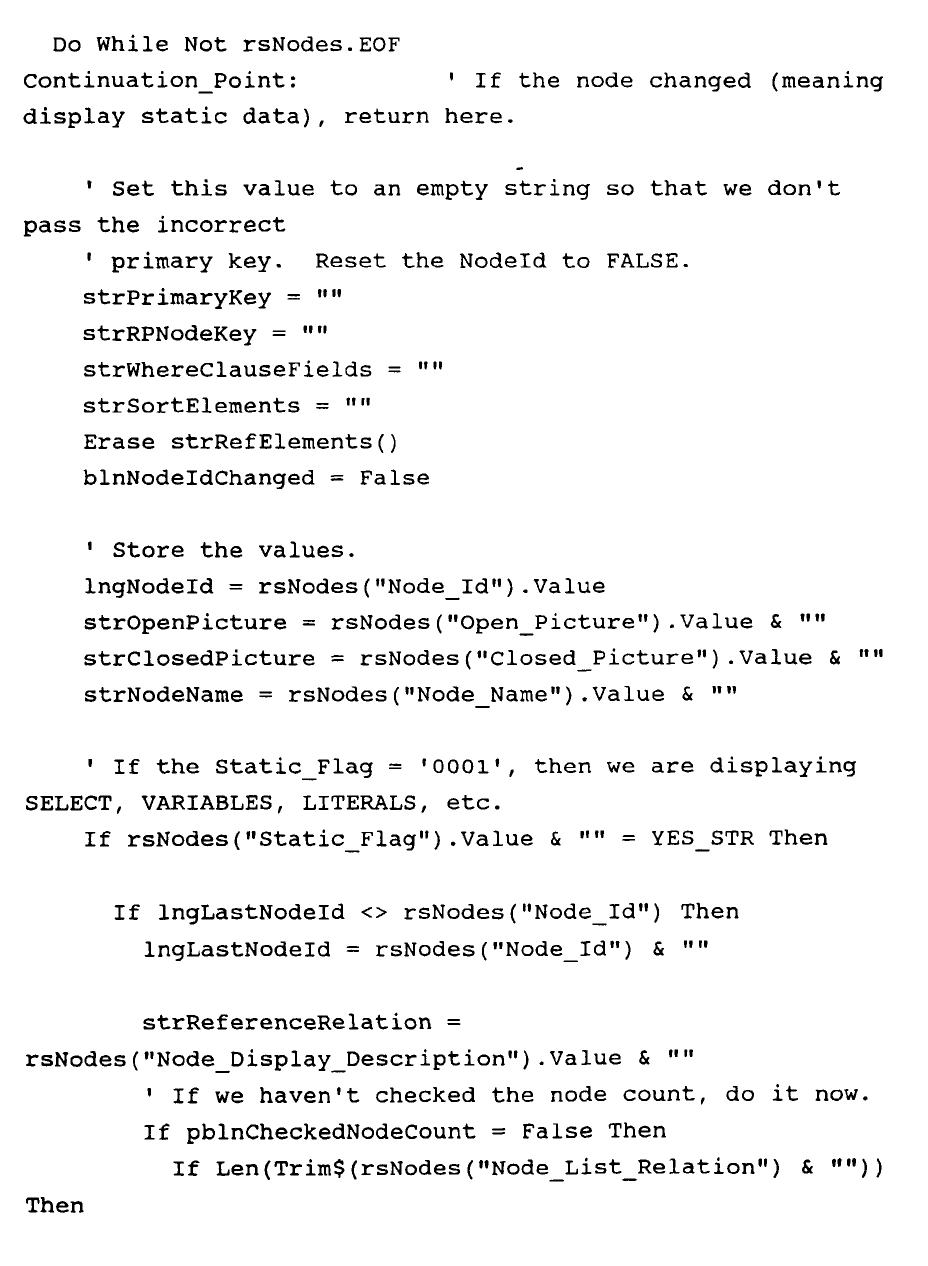

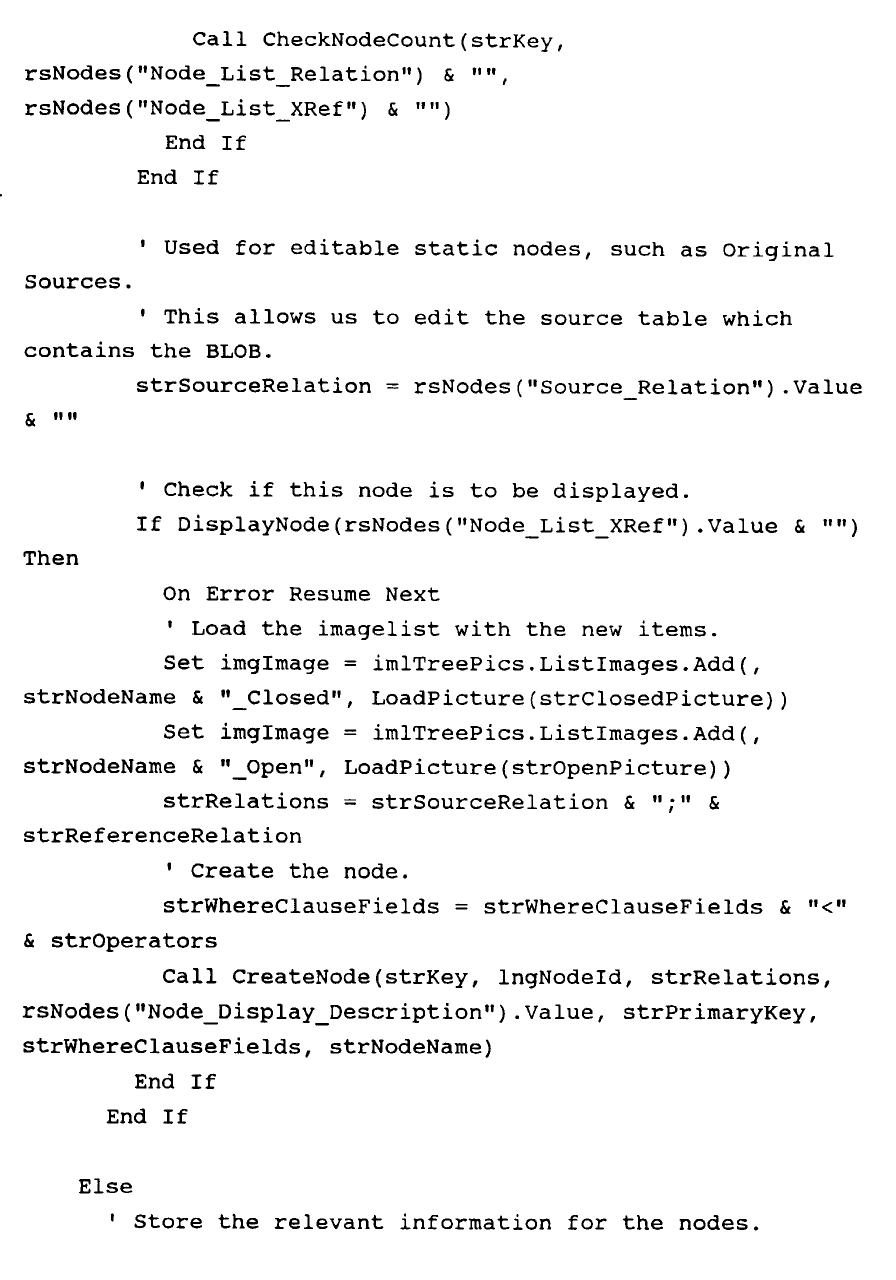

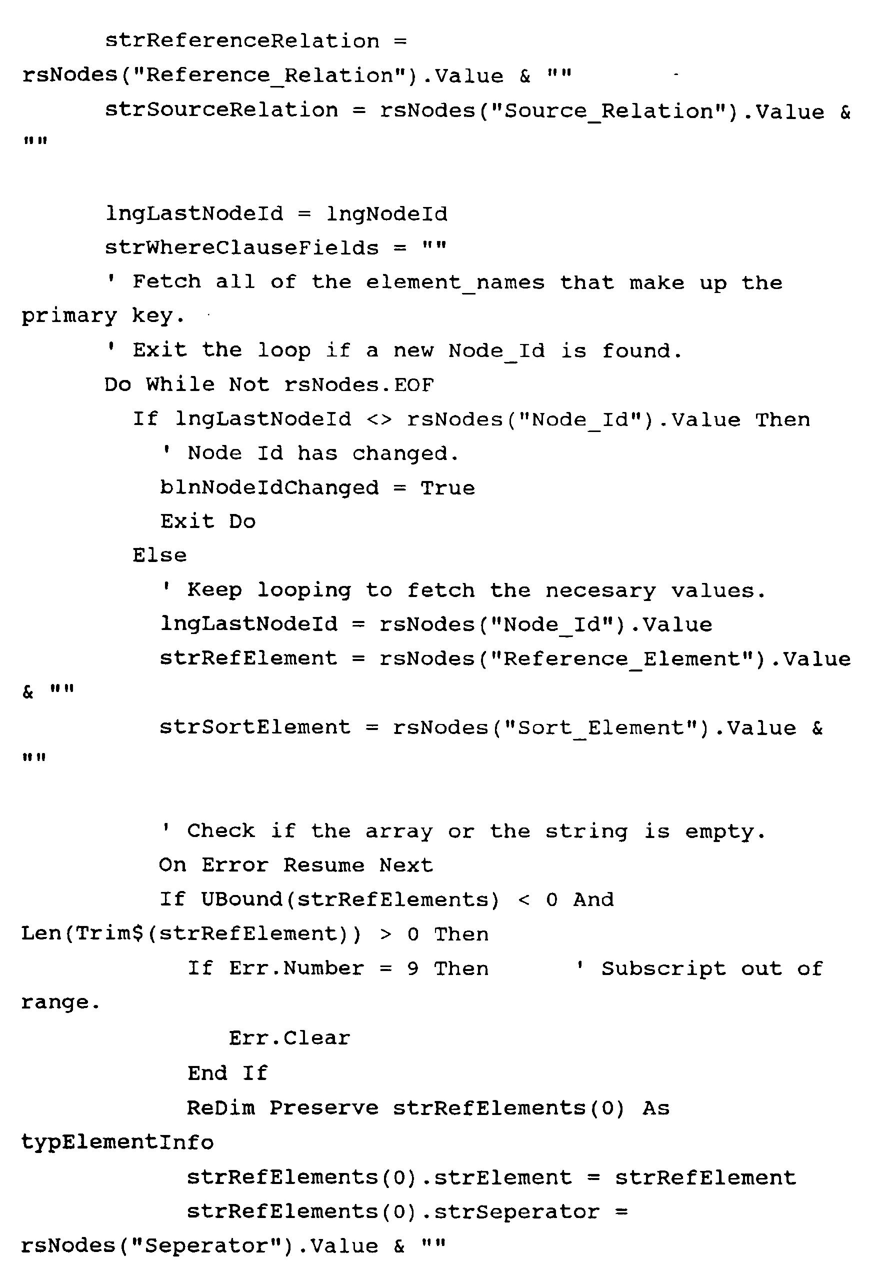

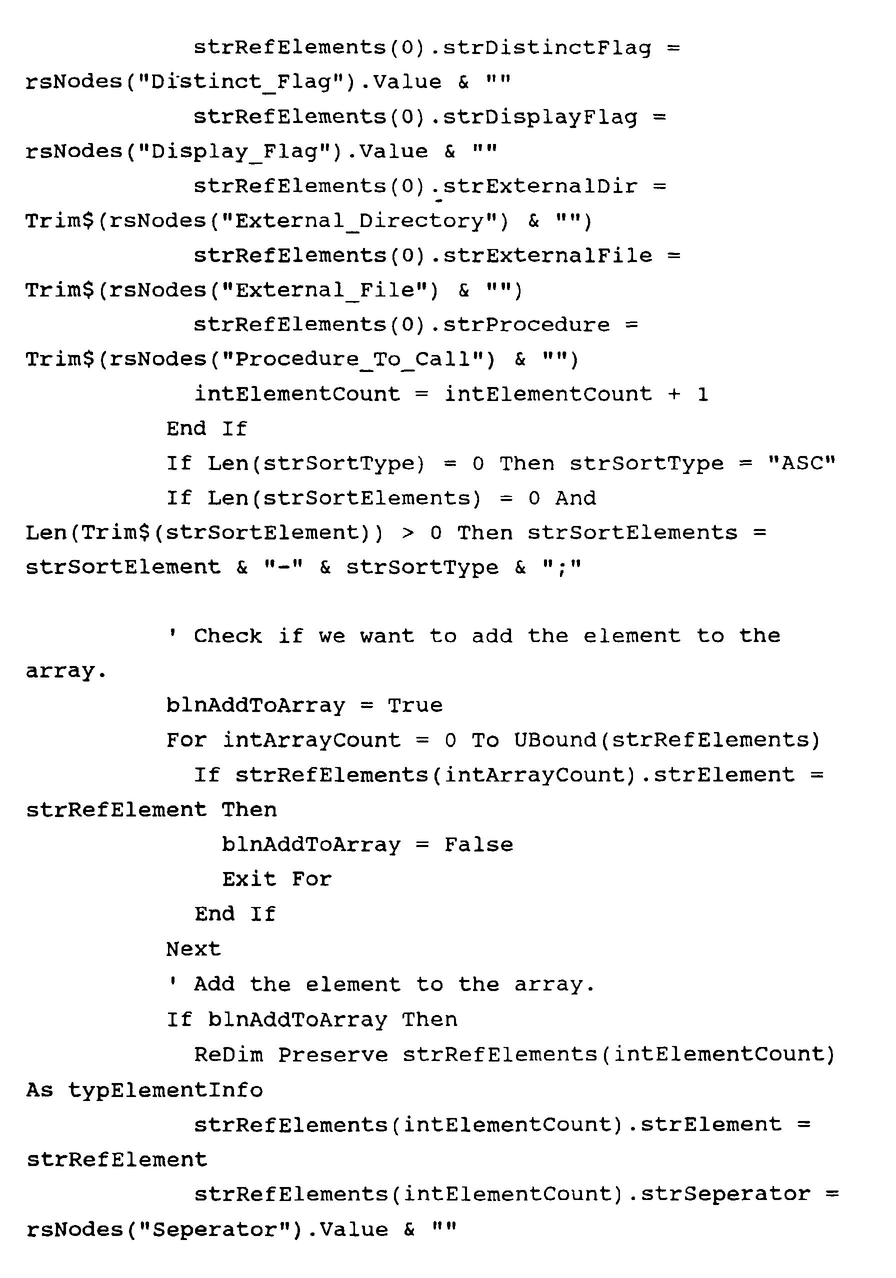

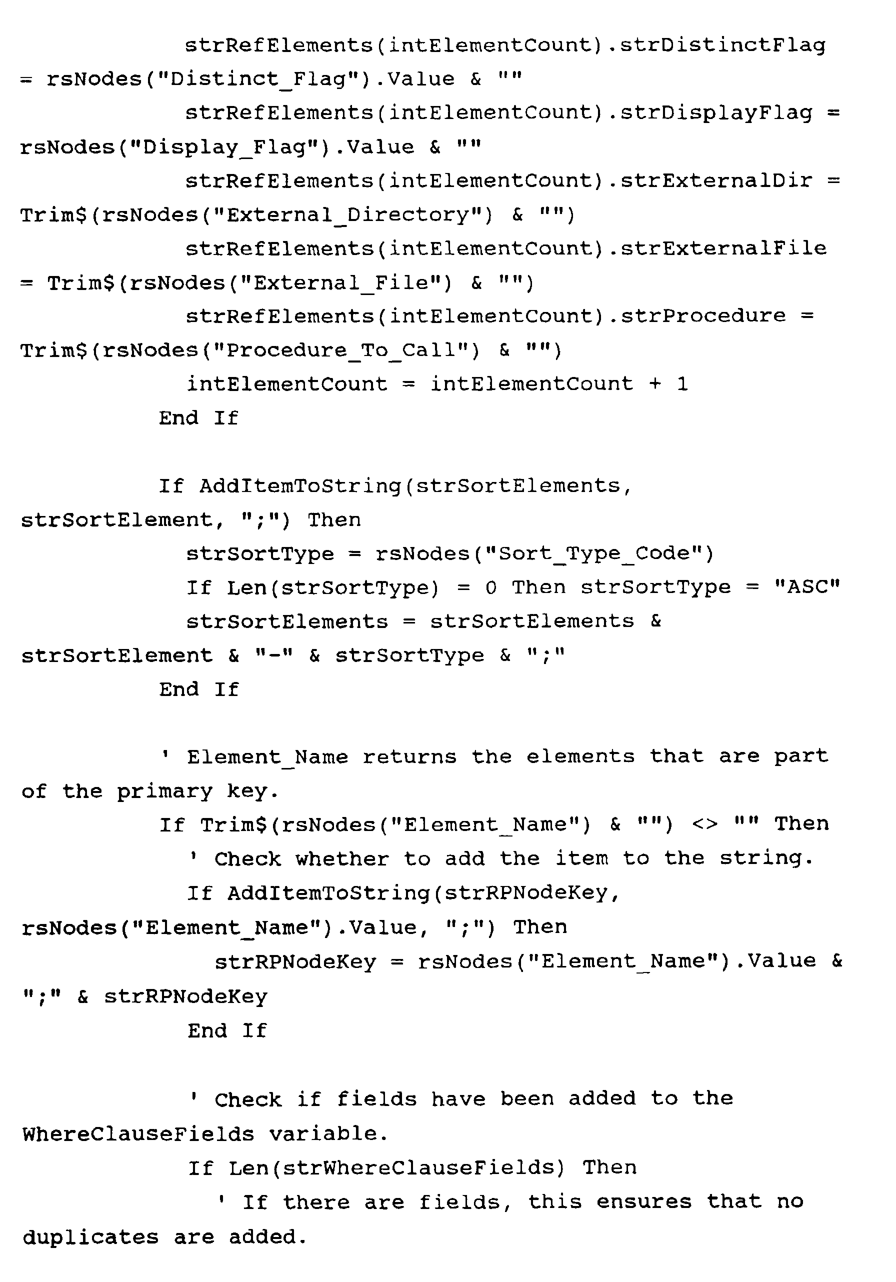

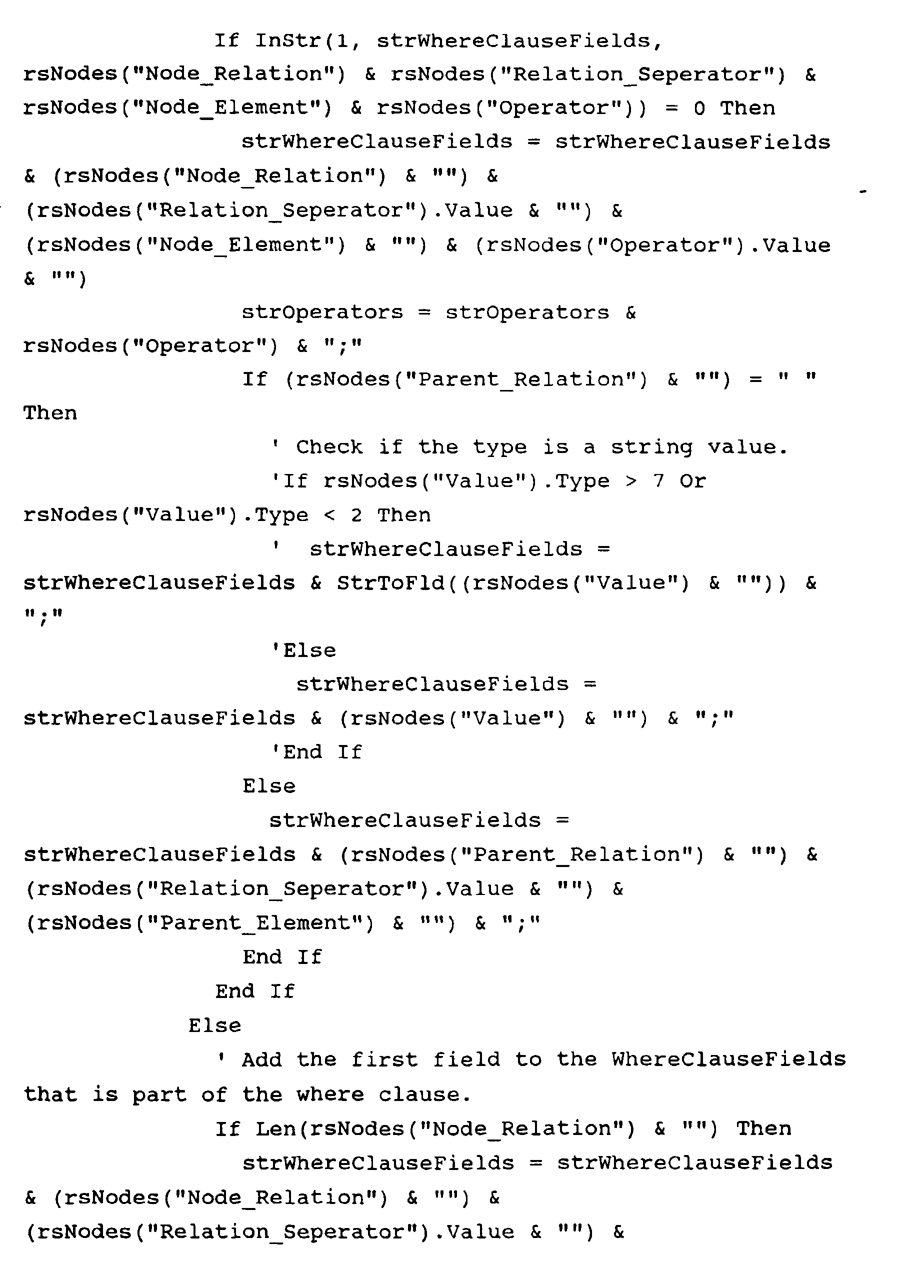

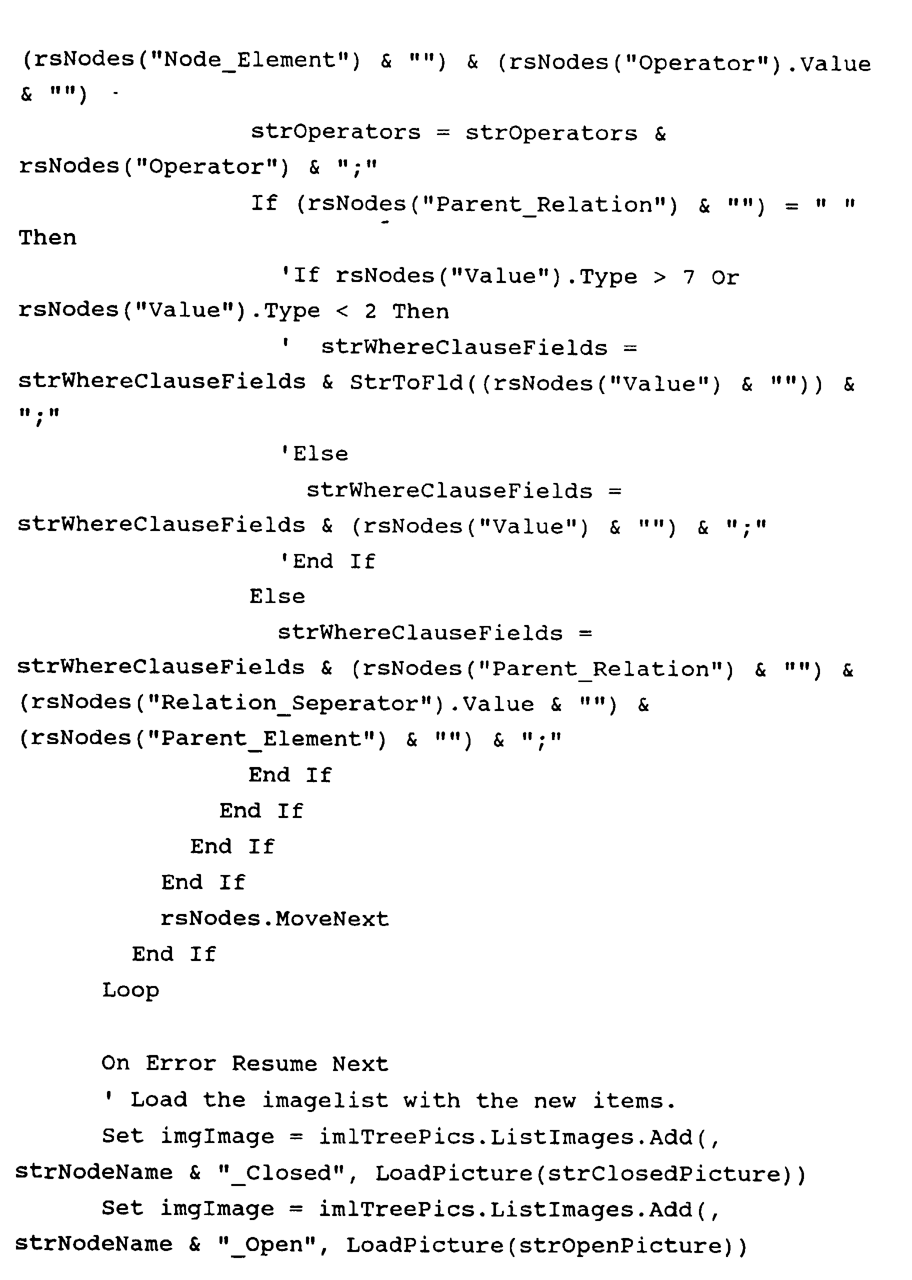

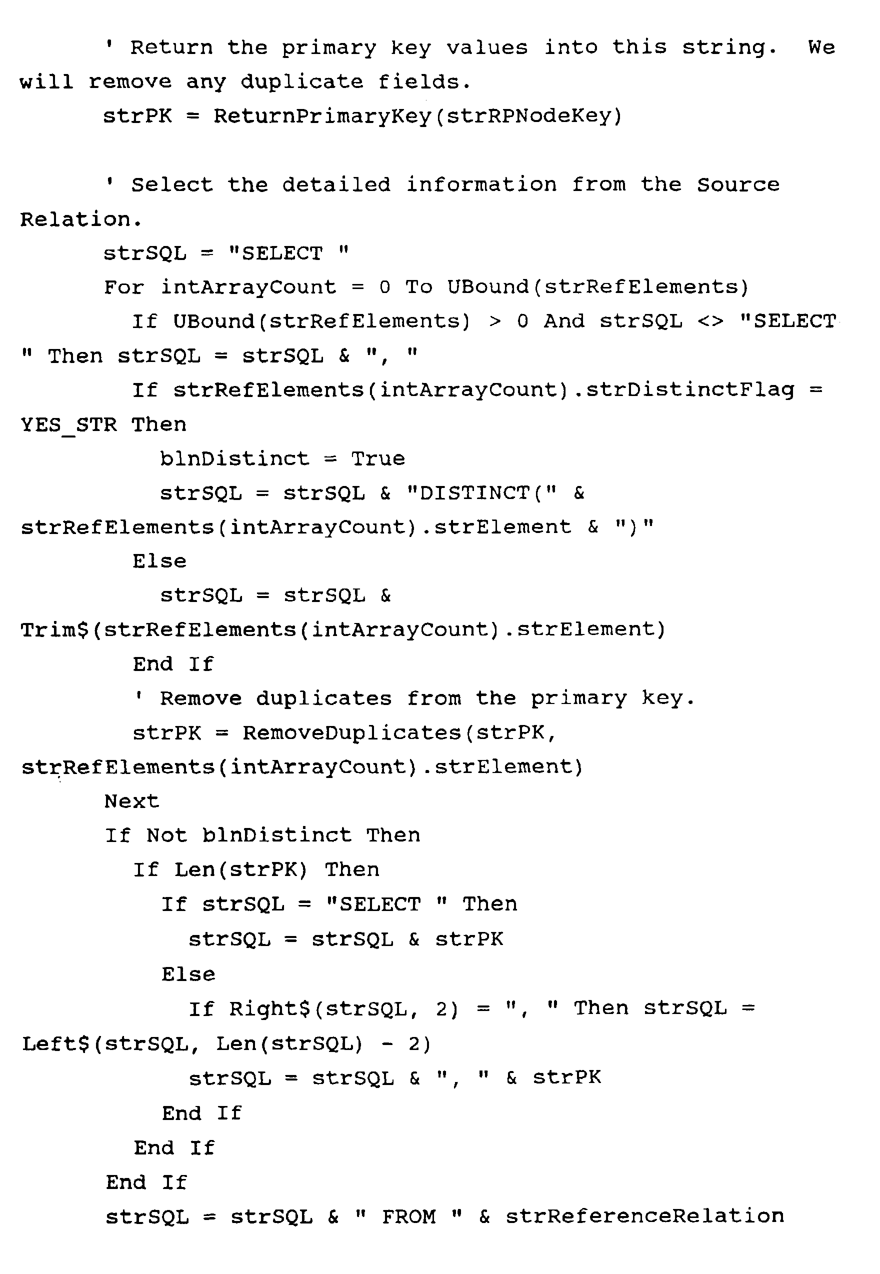

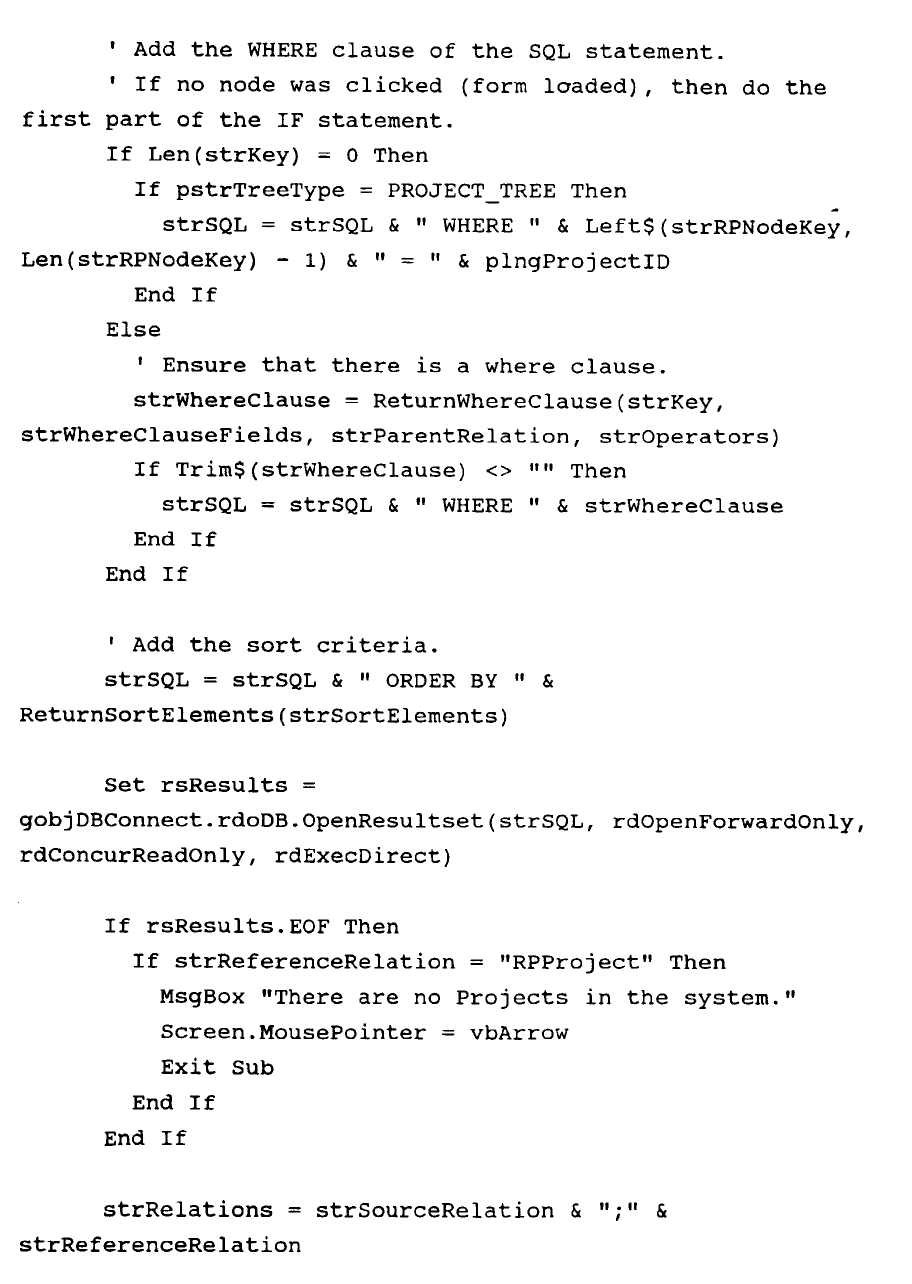

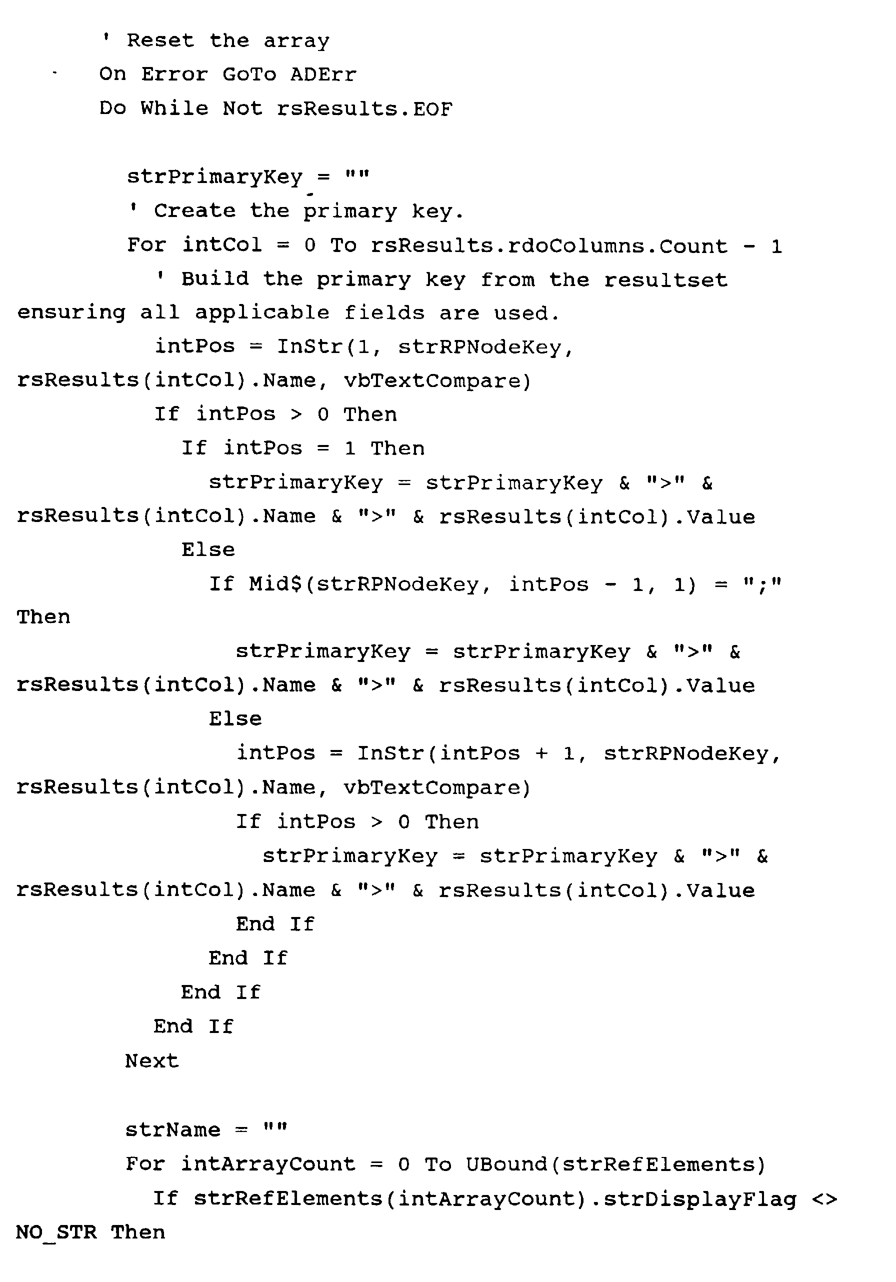

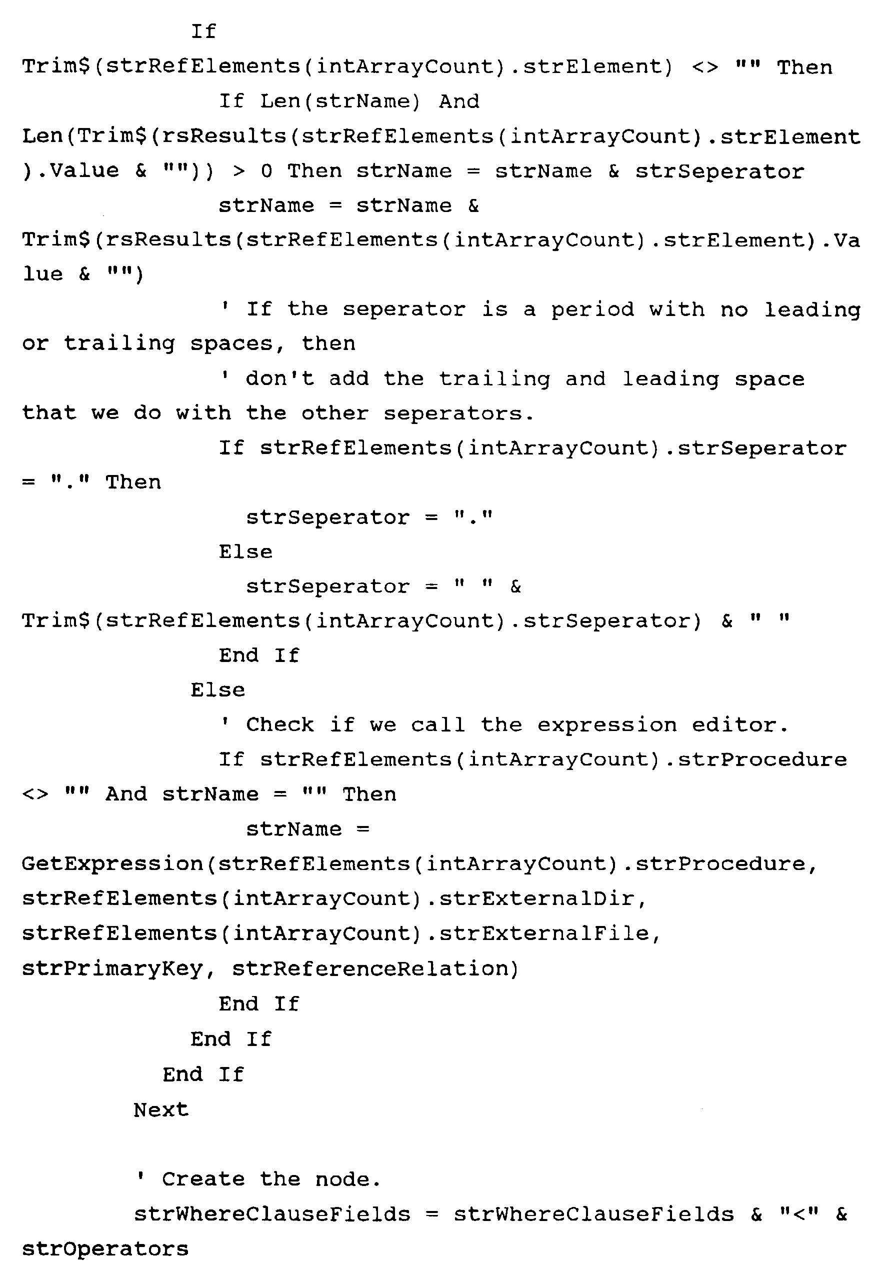

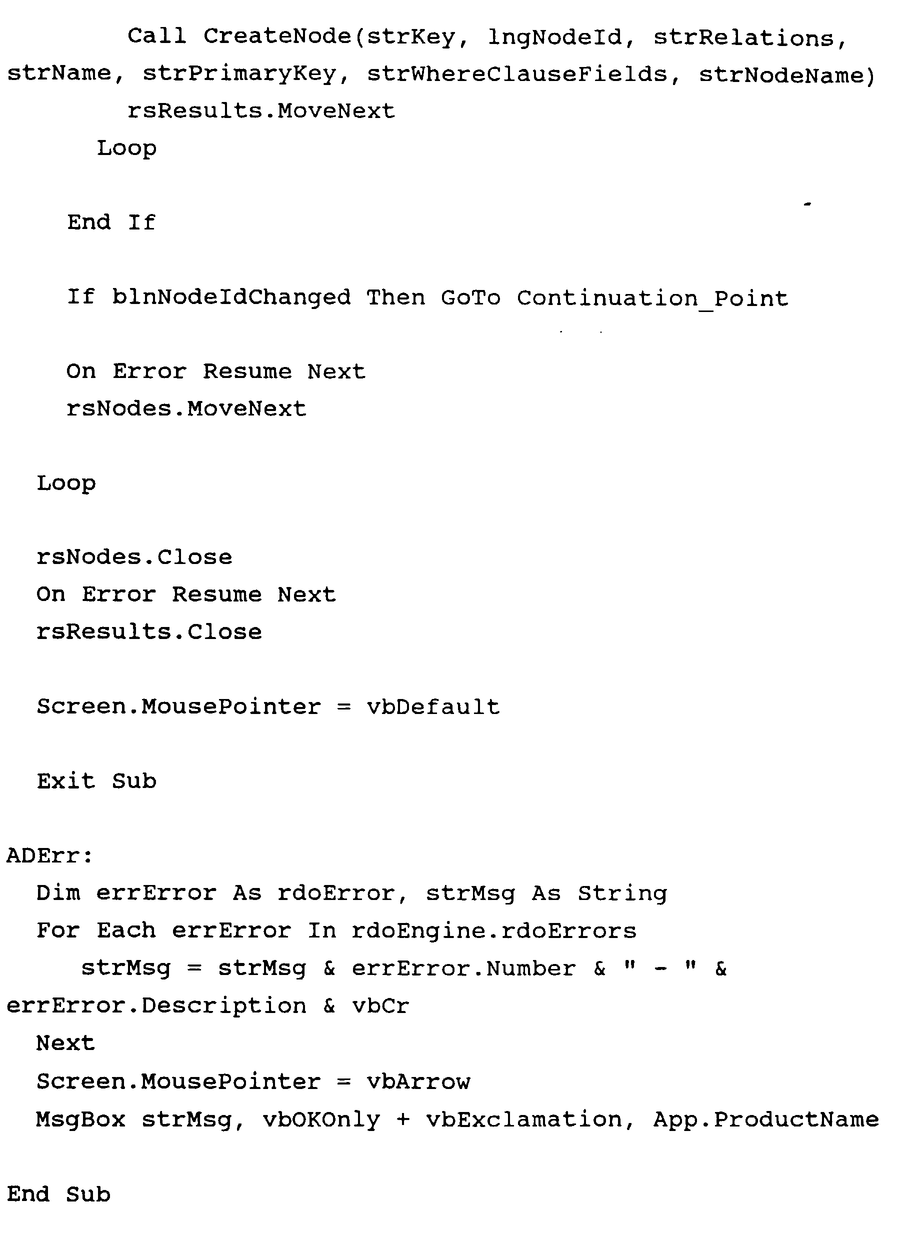

The following code is preferably used to create the node (Physically) in the treeview.

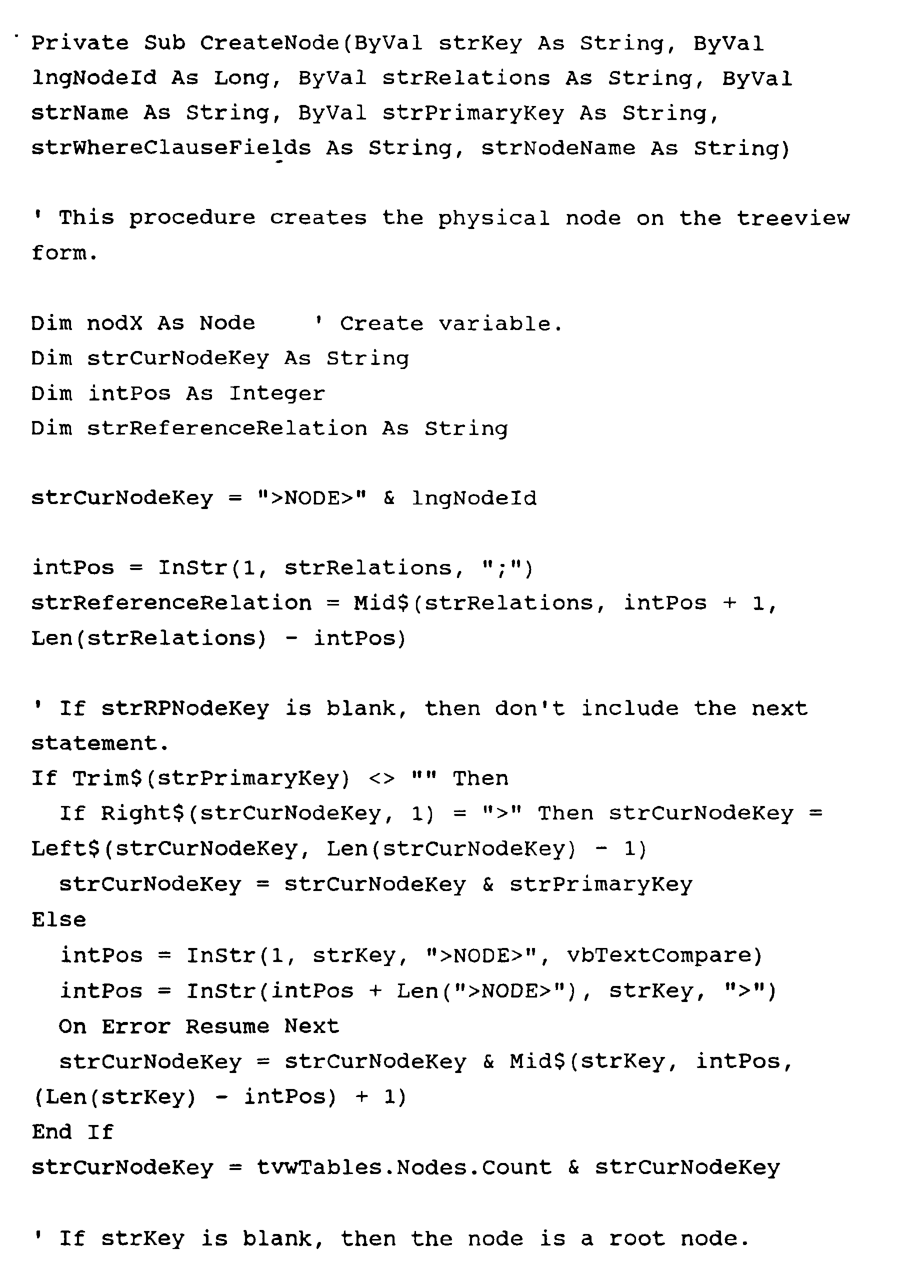

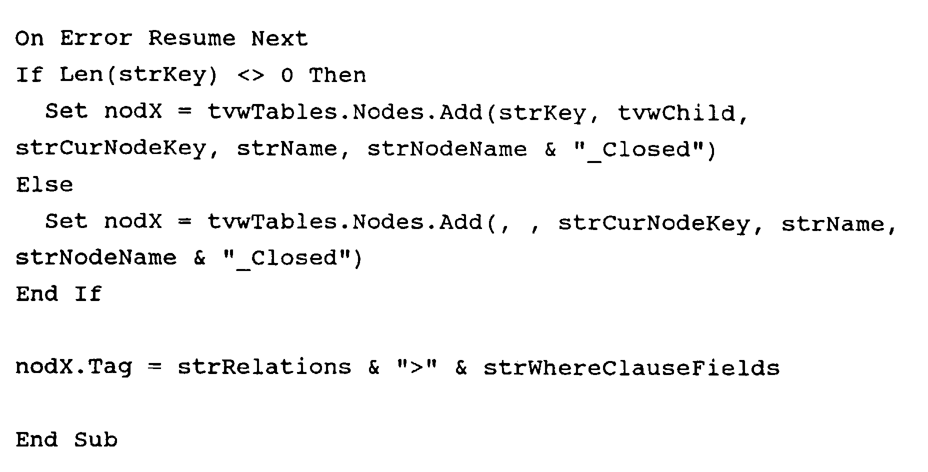

### J. Visual Basic Dynamic Property Sheet

The following code dynamically creates a Property Sheet for the preferred embodiment of the invention.

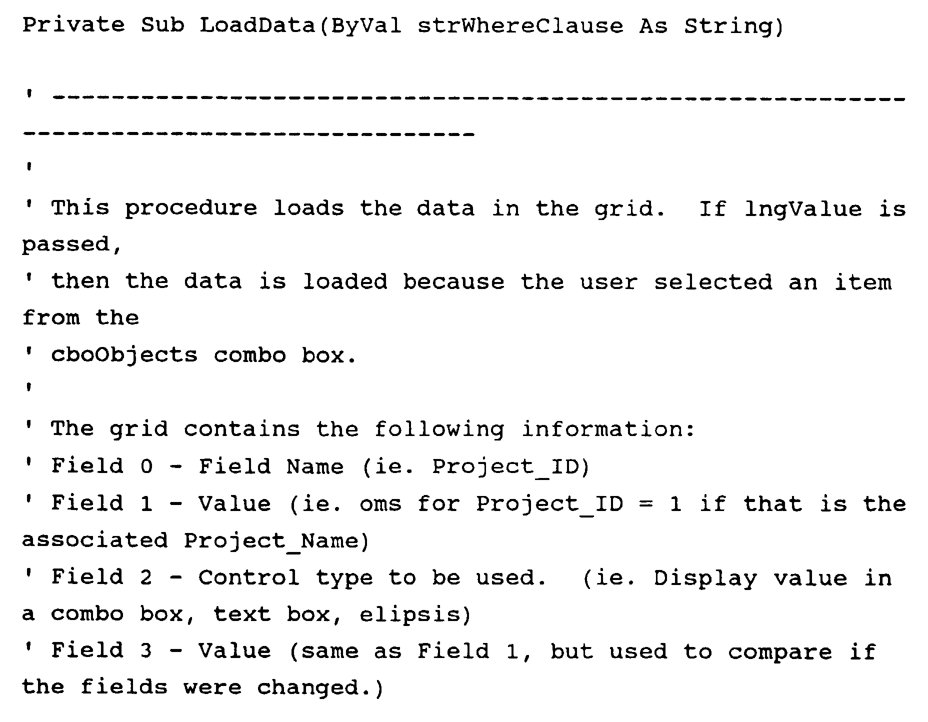

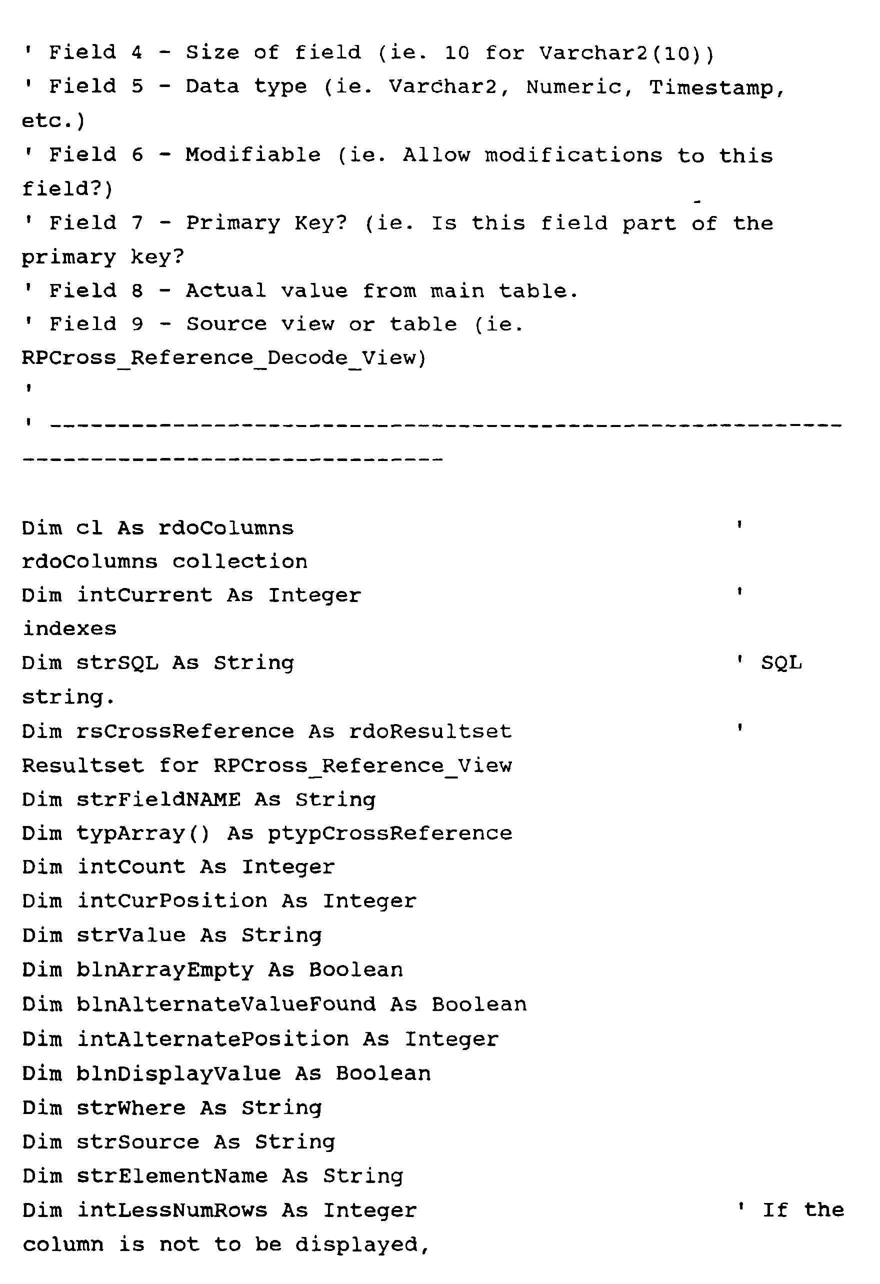

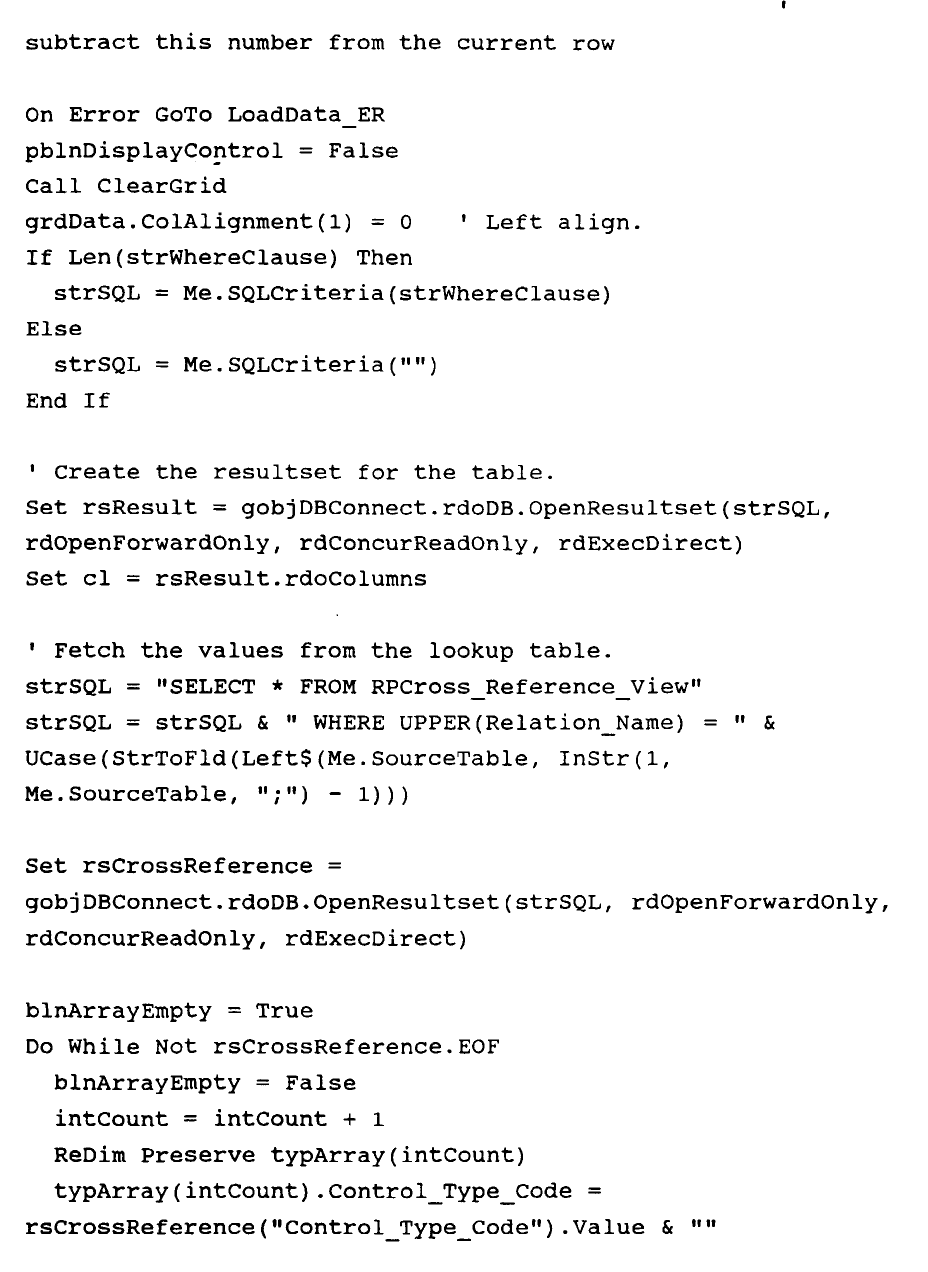

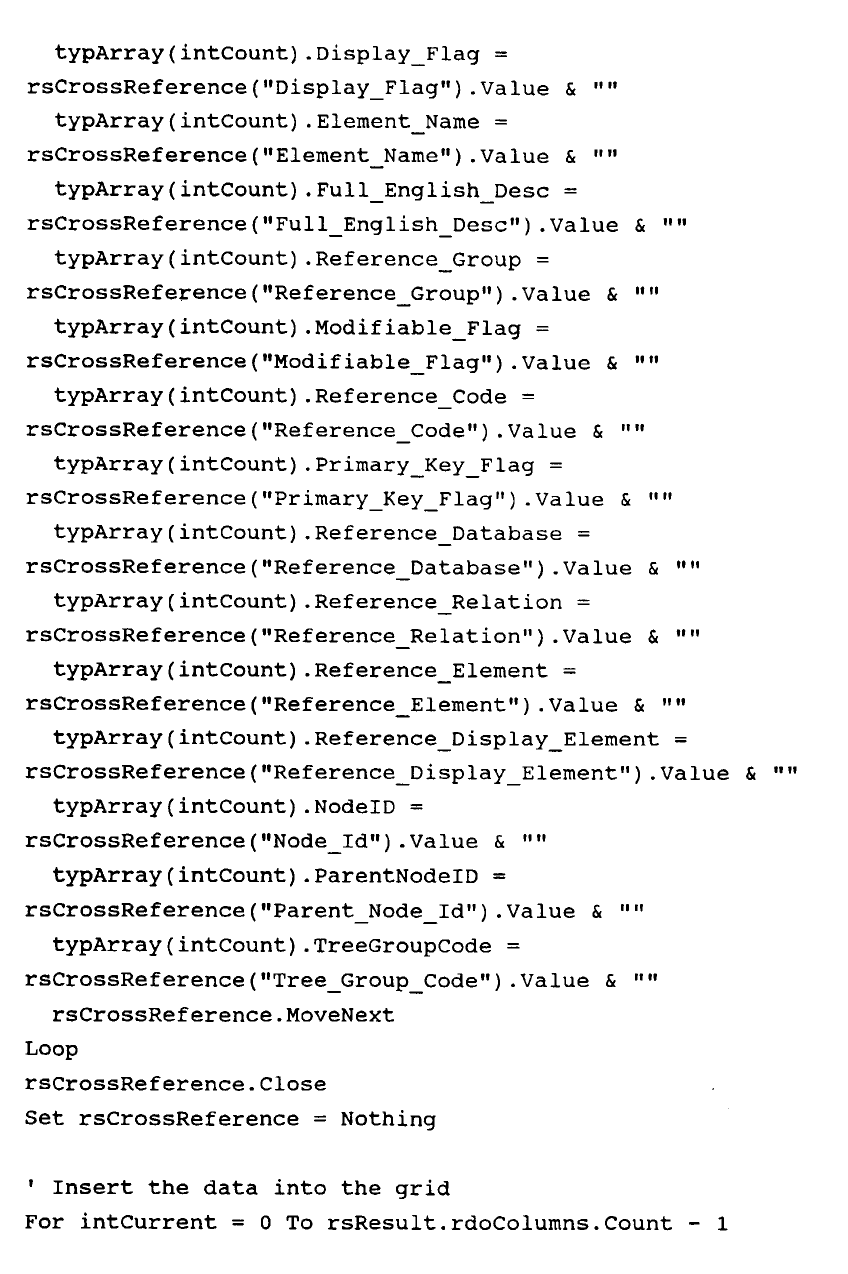

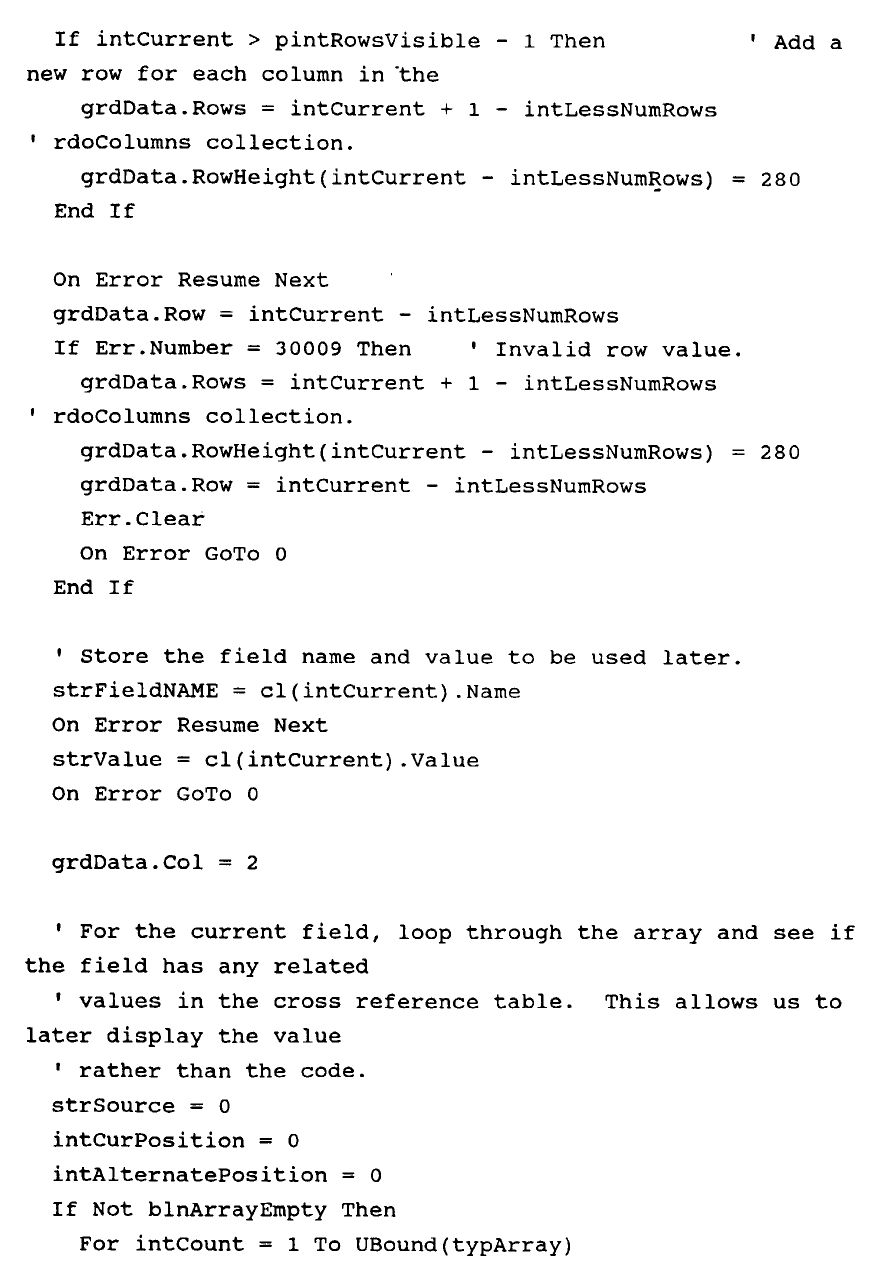

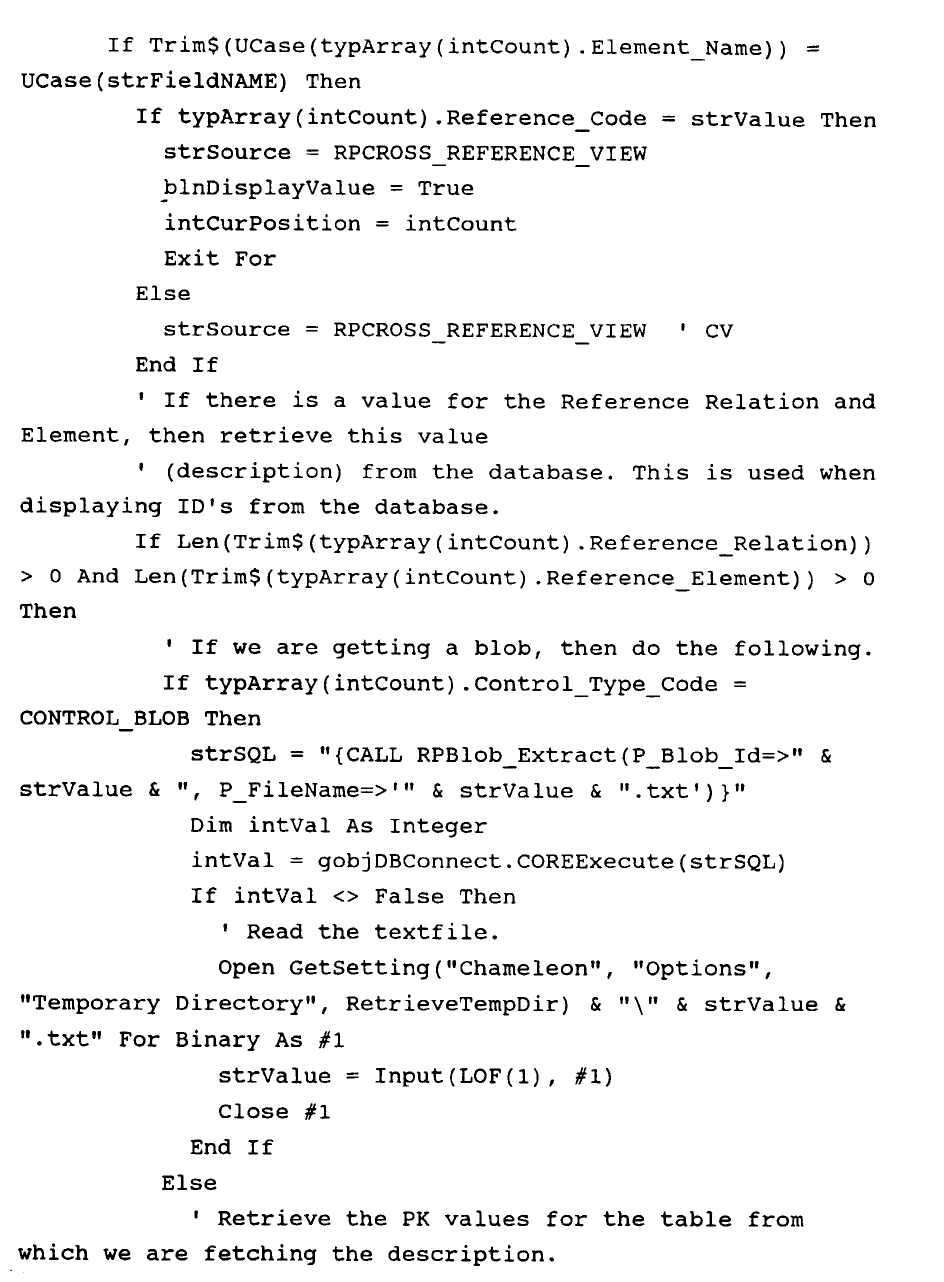

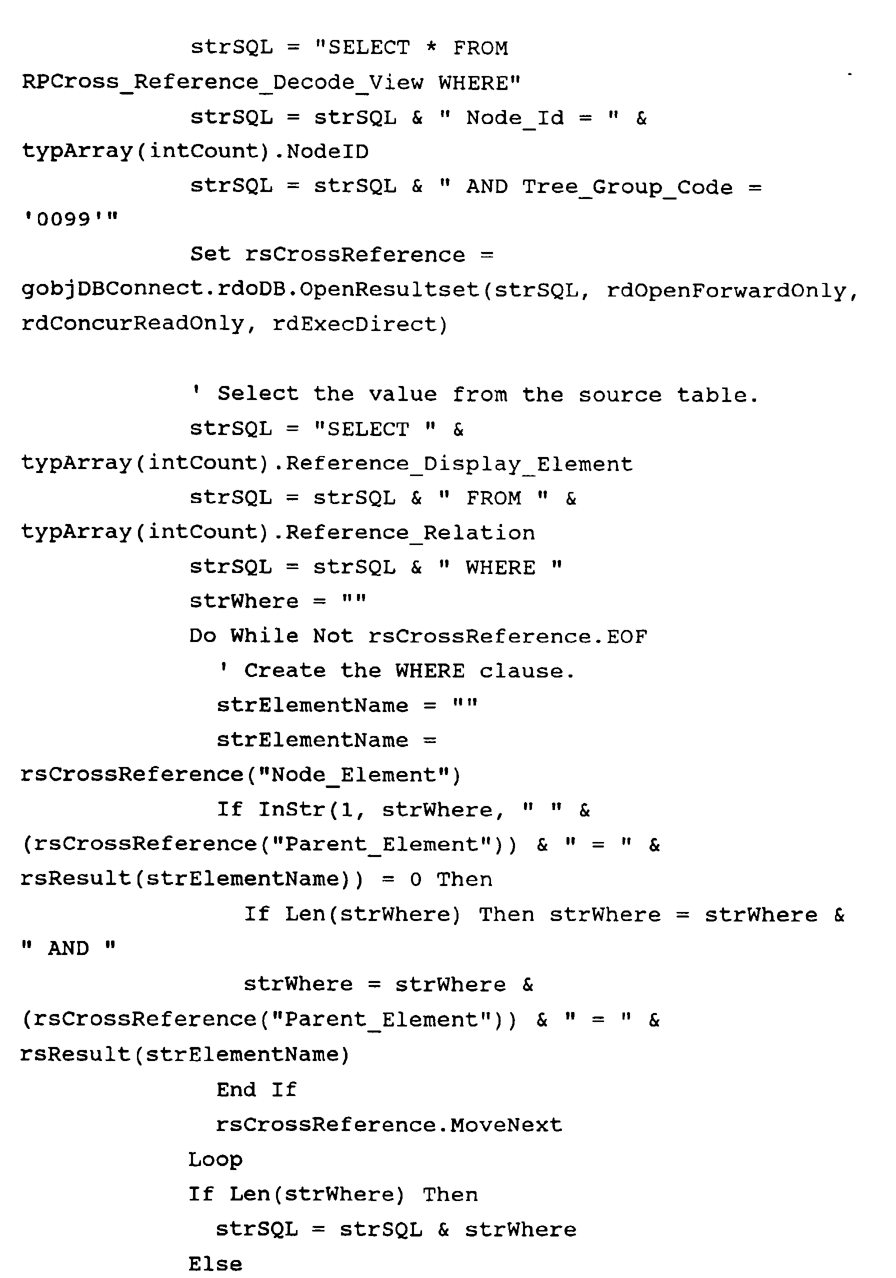

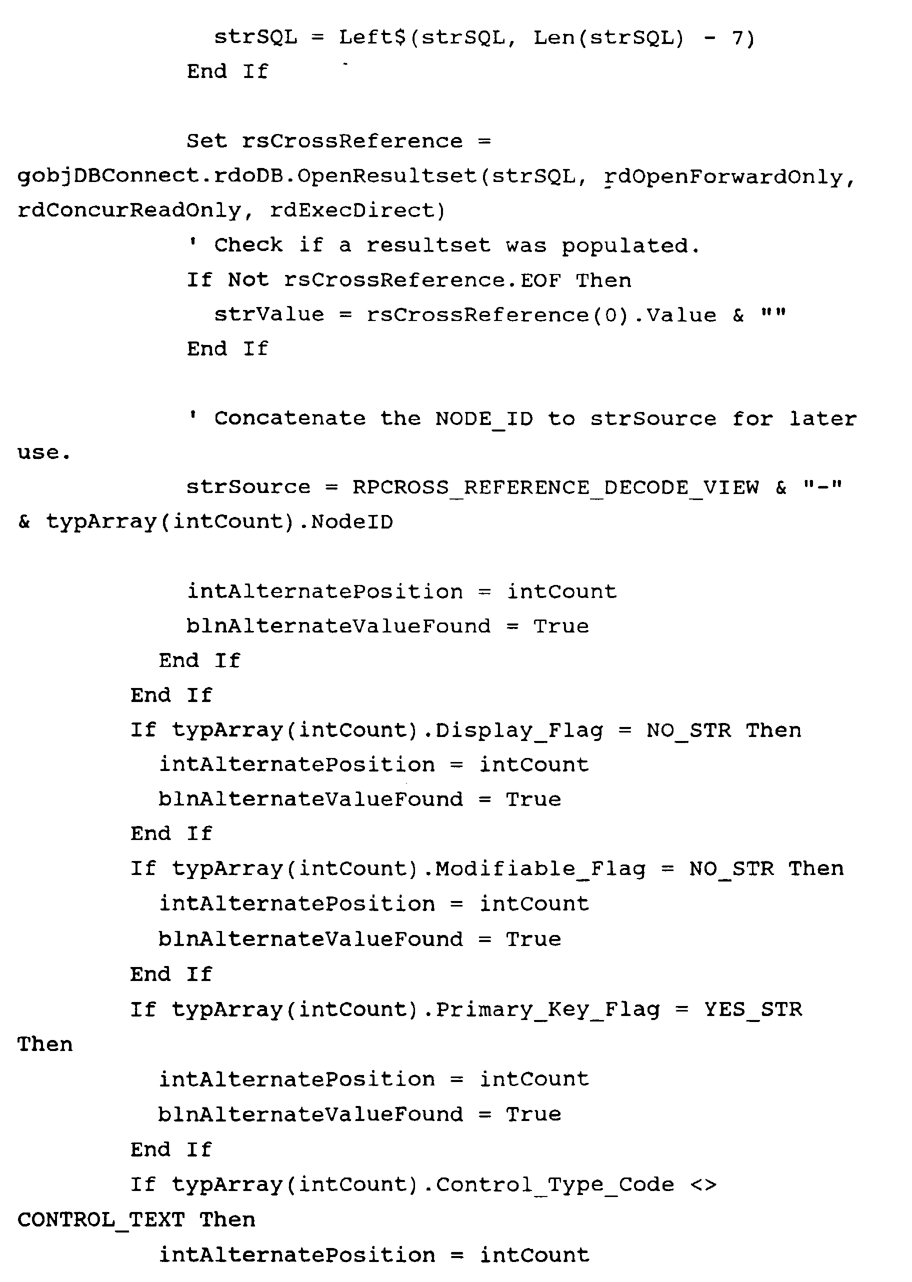

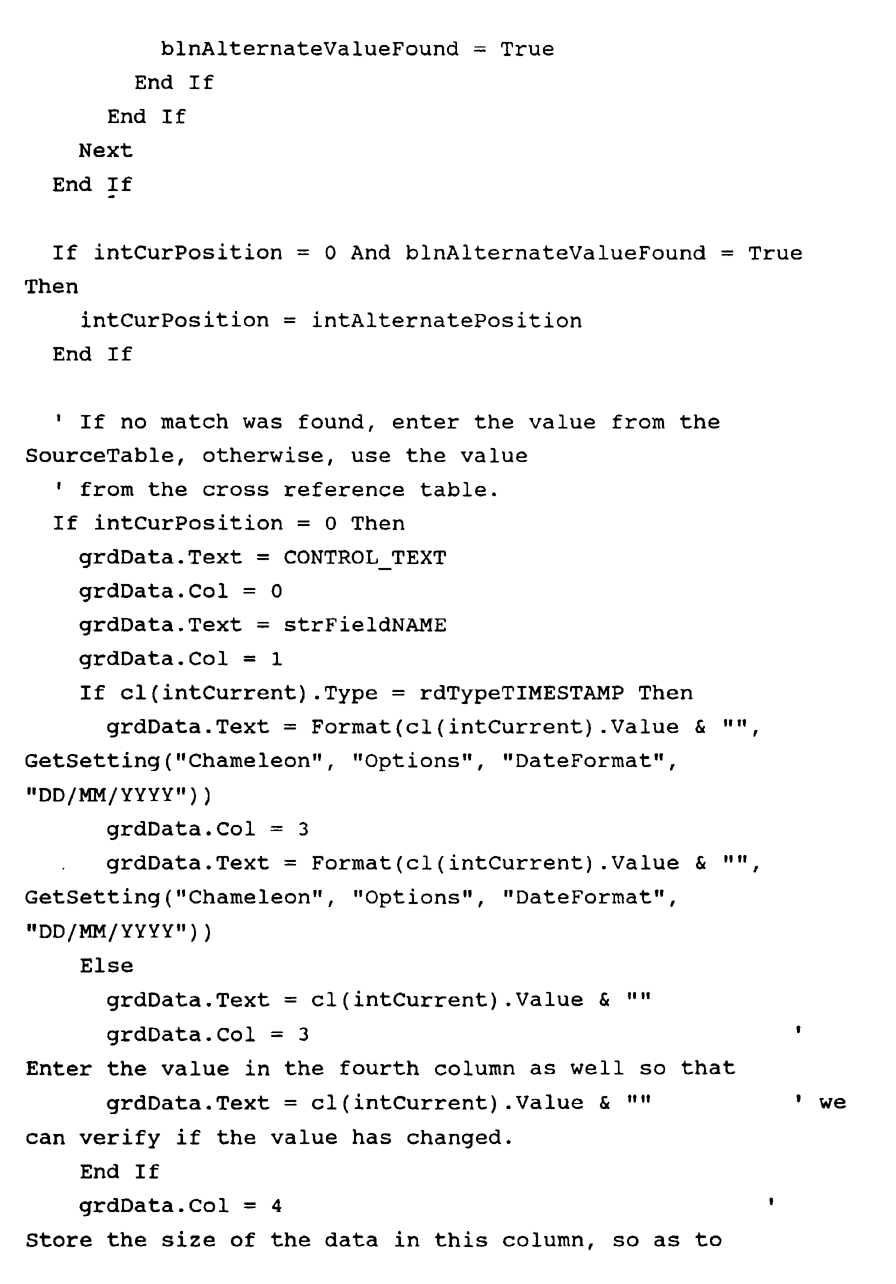

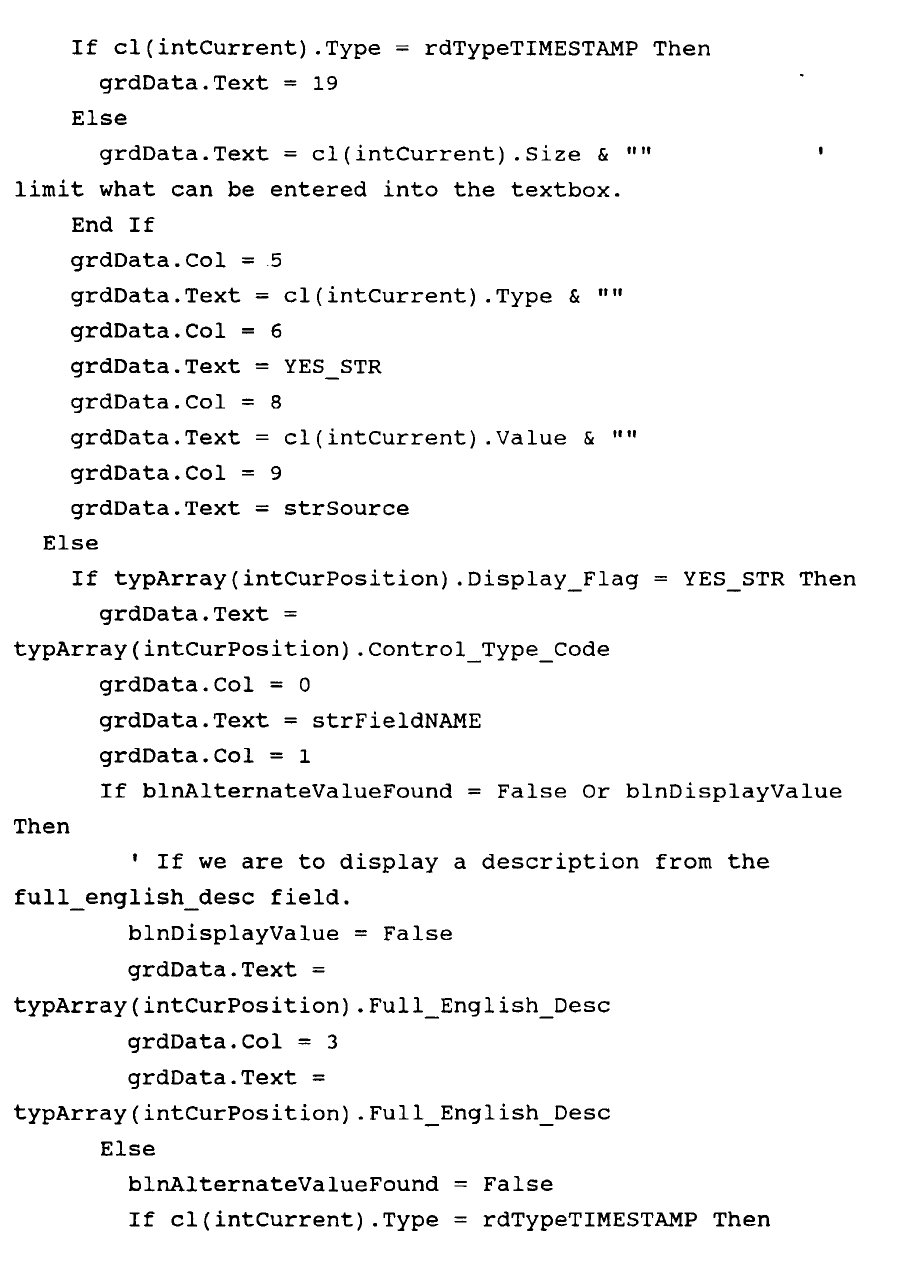

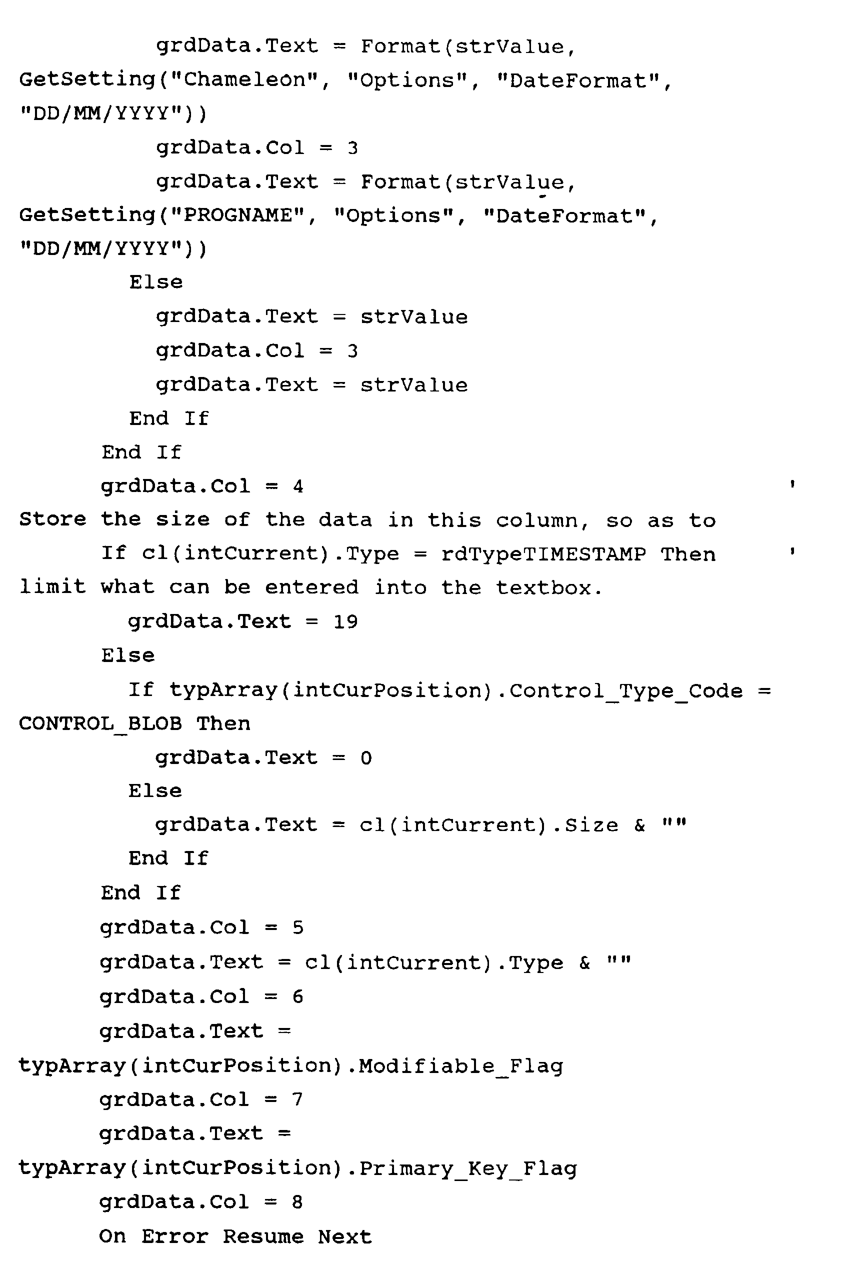

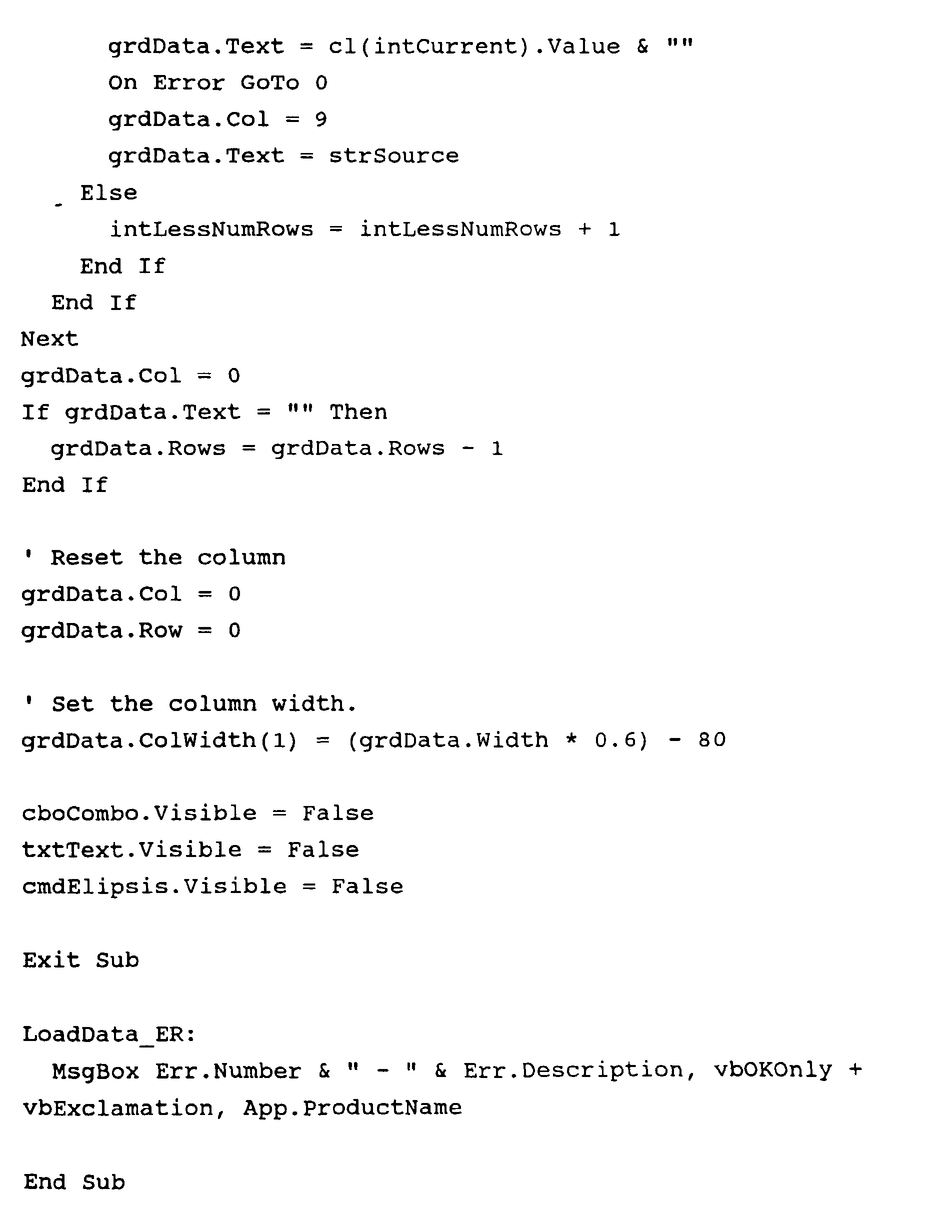

### K. Code Segment for Forward Engineering Component

The following code manages dynamically generates PL/SQL source code based on the objects that have been design recovered and stored in the CORE Chameleon repository. This specific excerpt is designed to create the equivalent SQL "SELECT" statement component if the newly generated Oracle PL/SQL report.

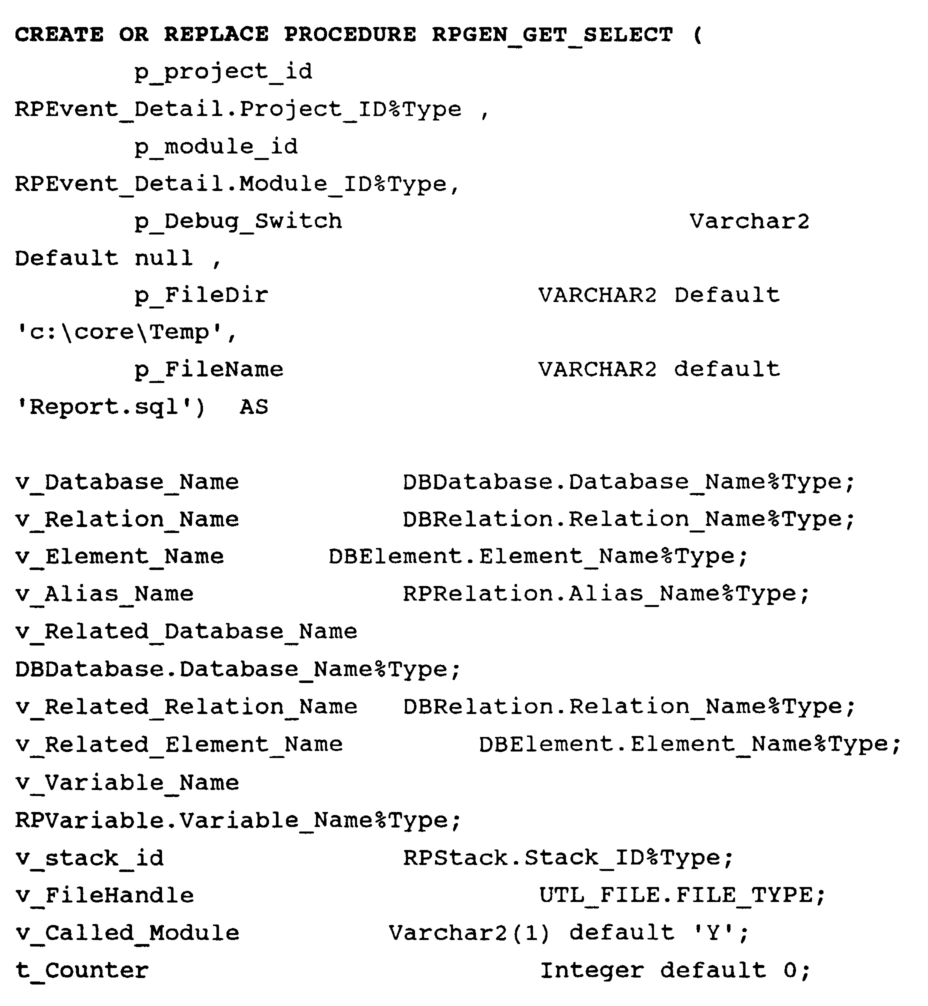

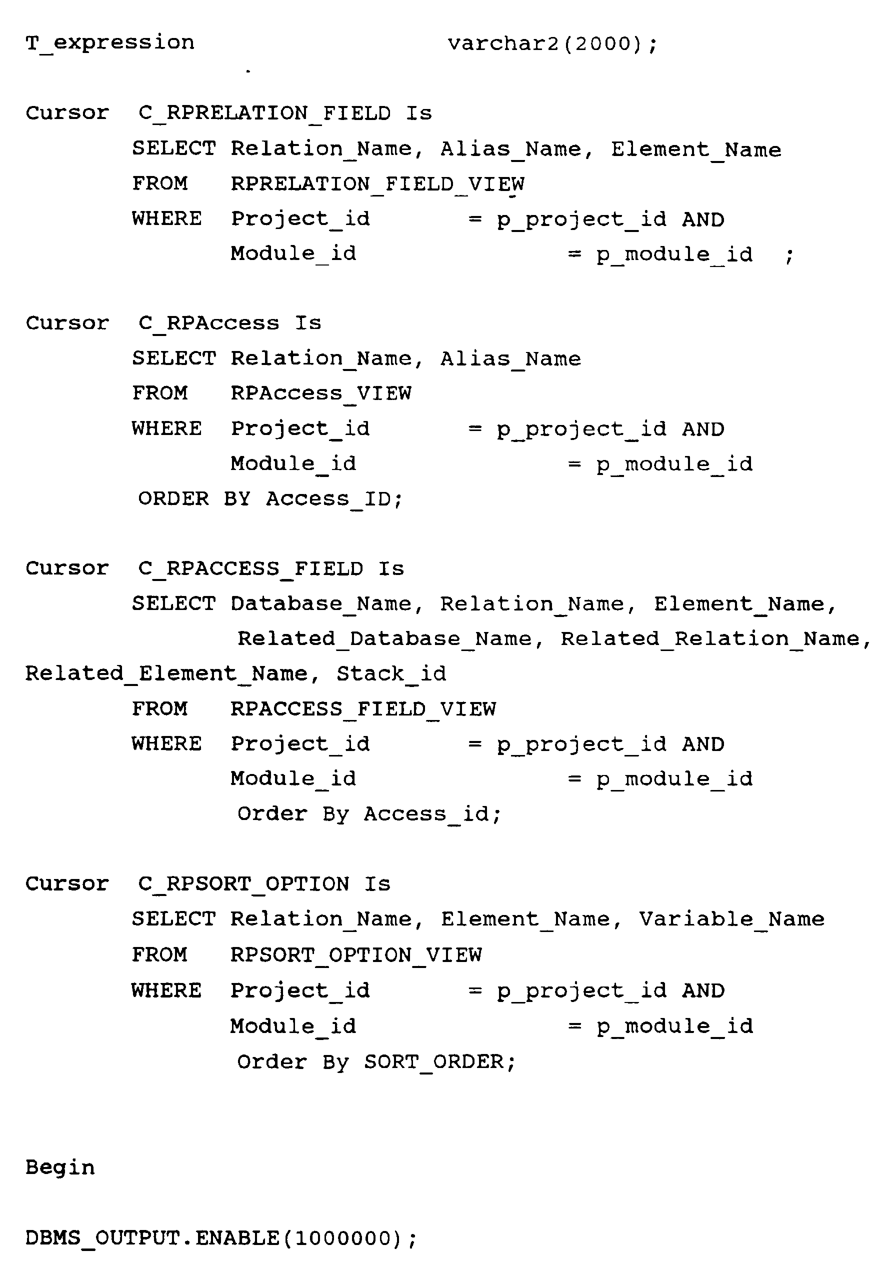

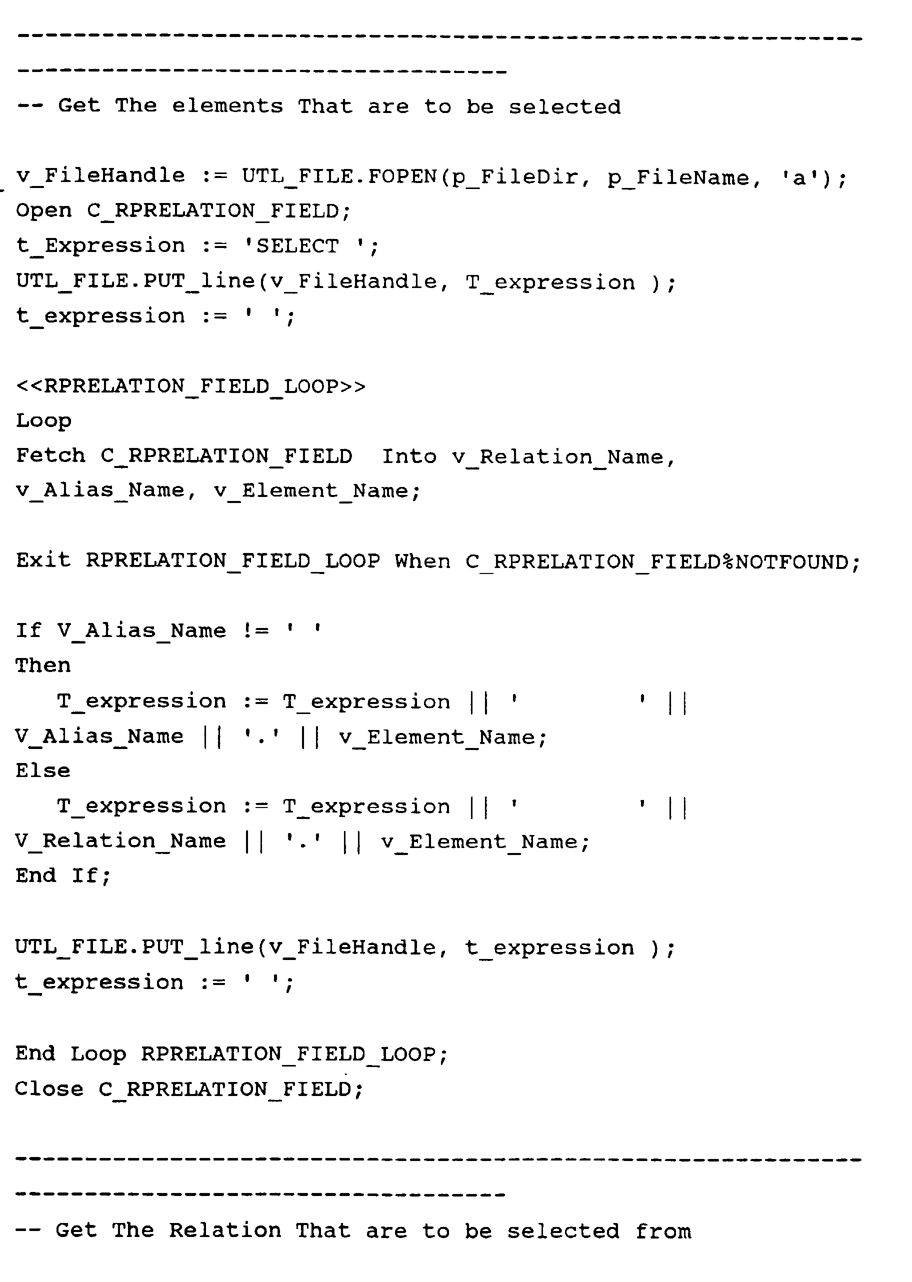

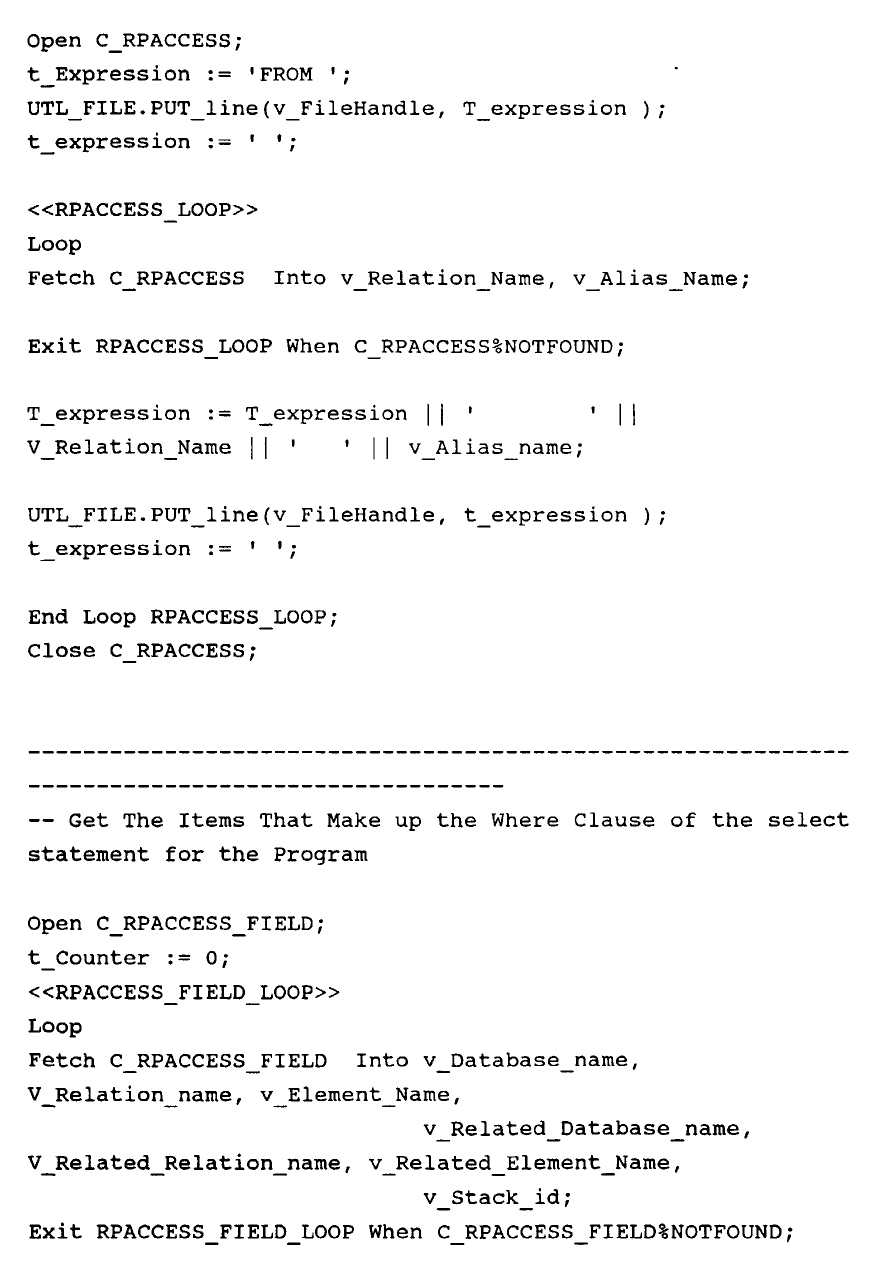

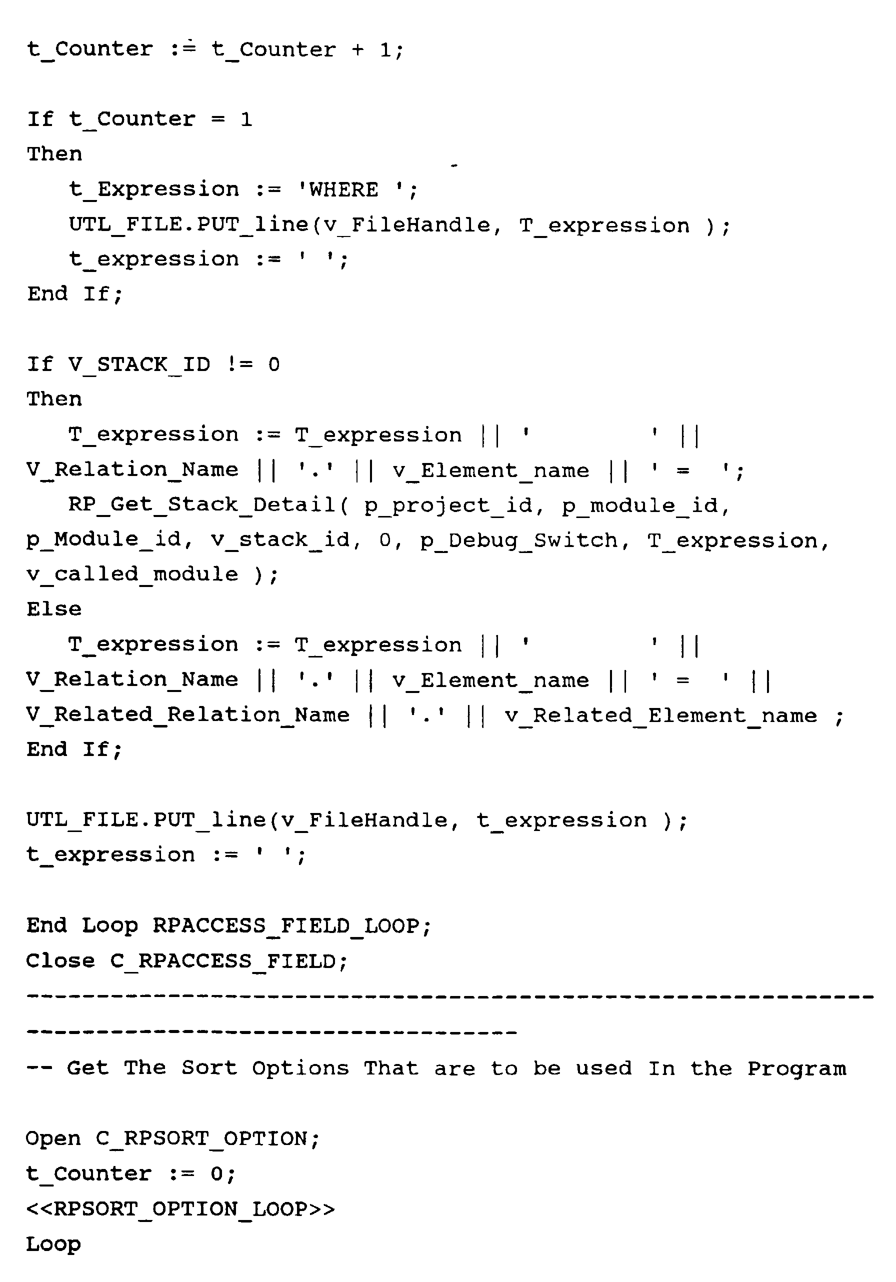

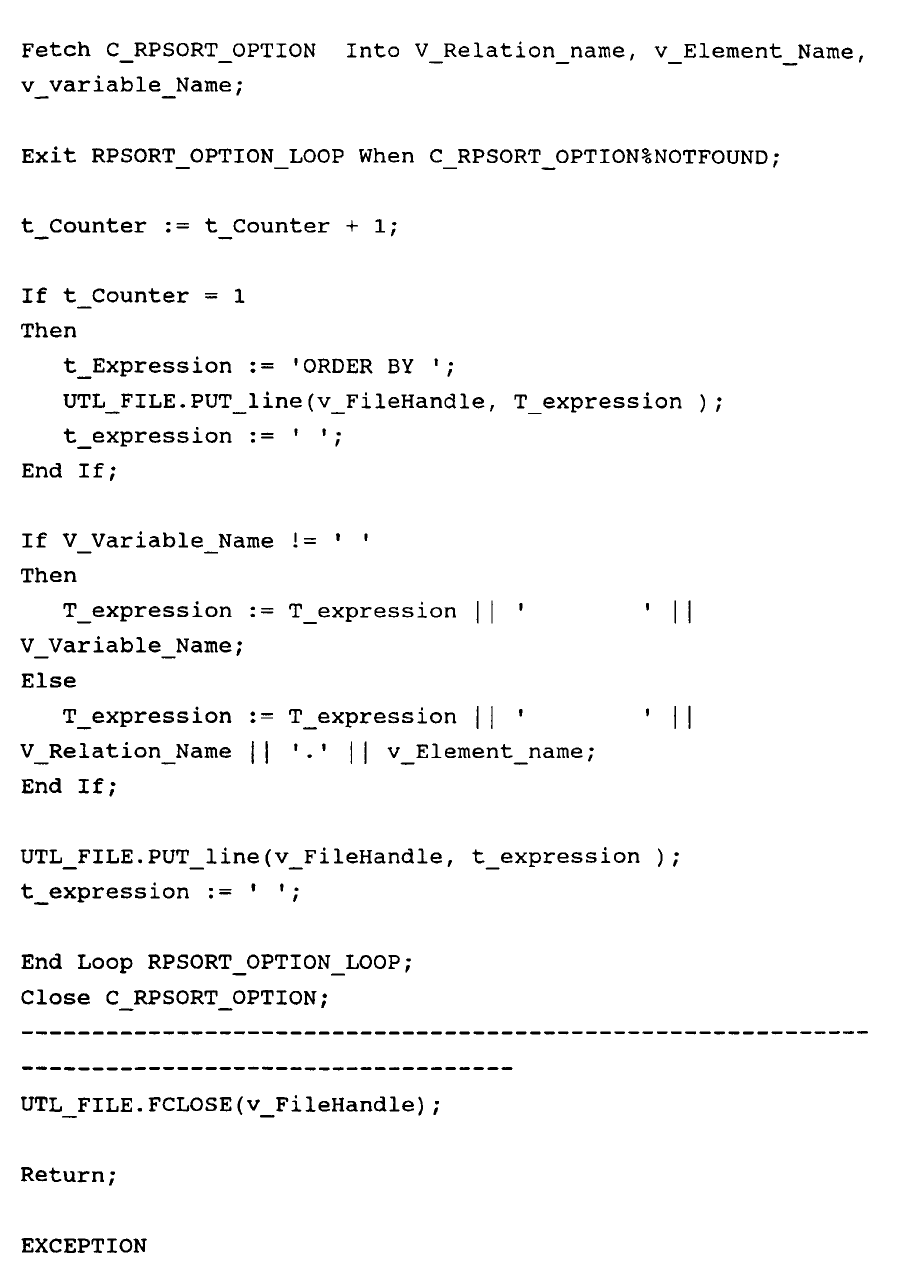

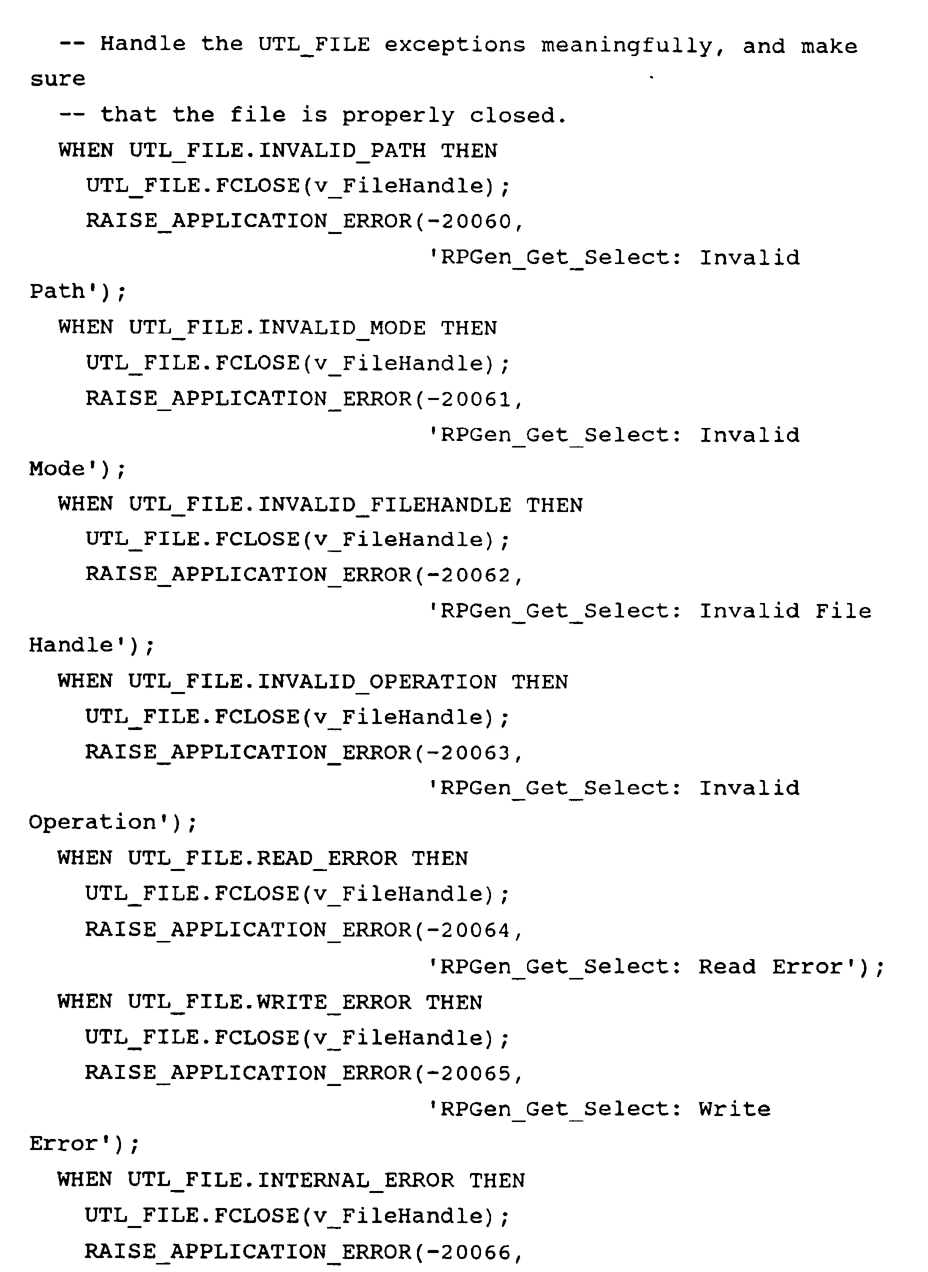

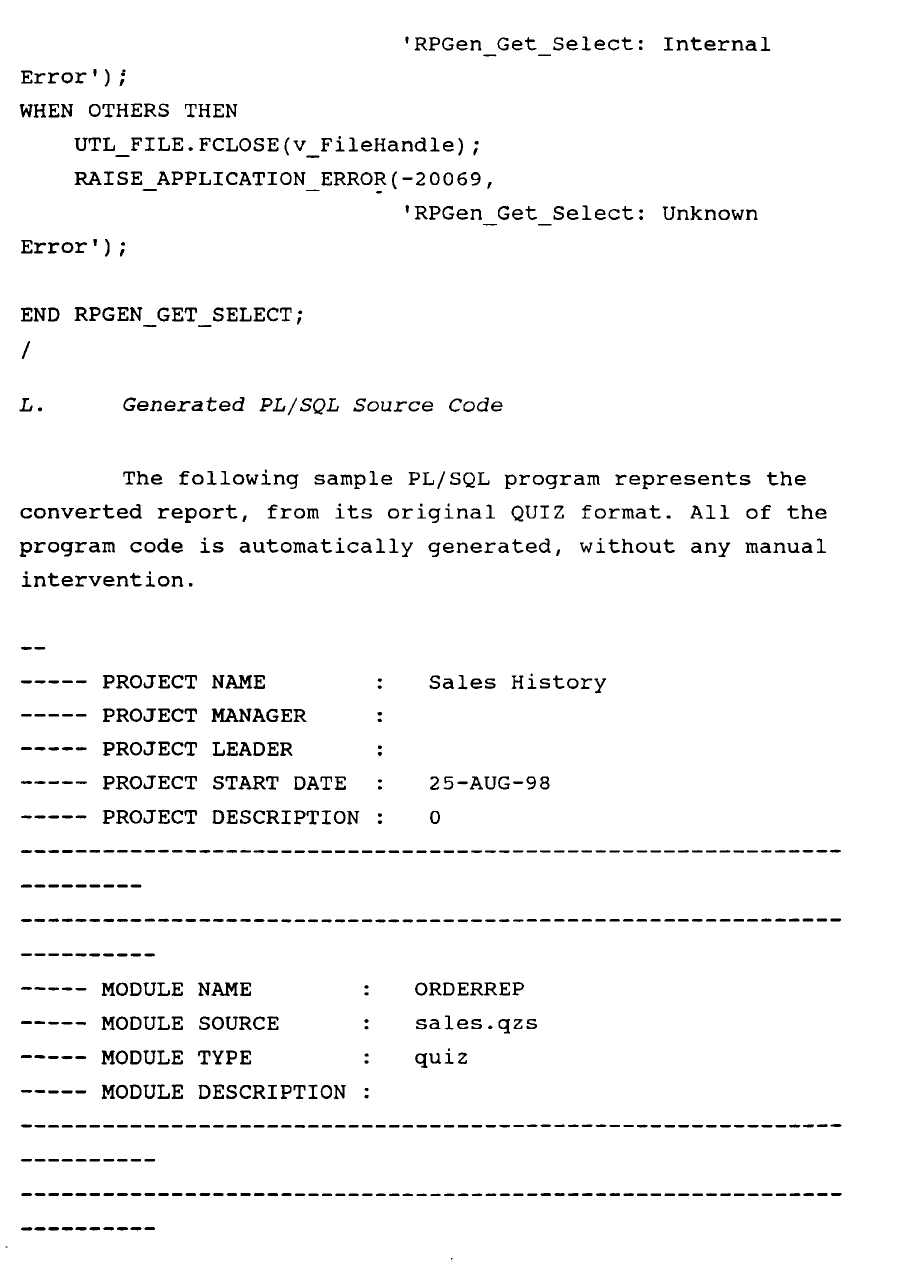

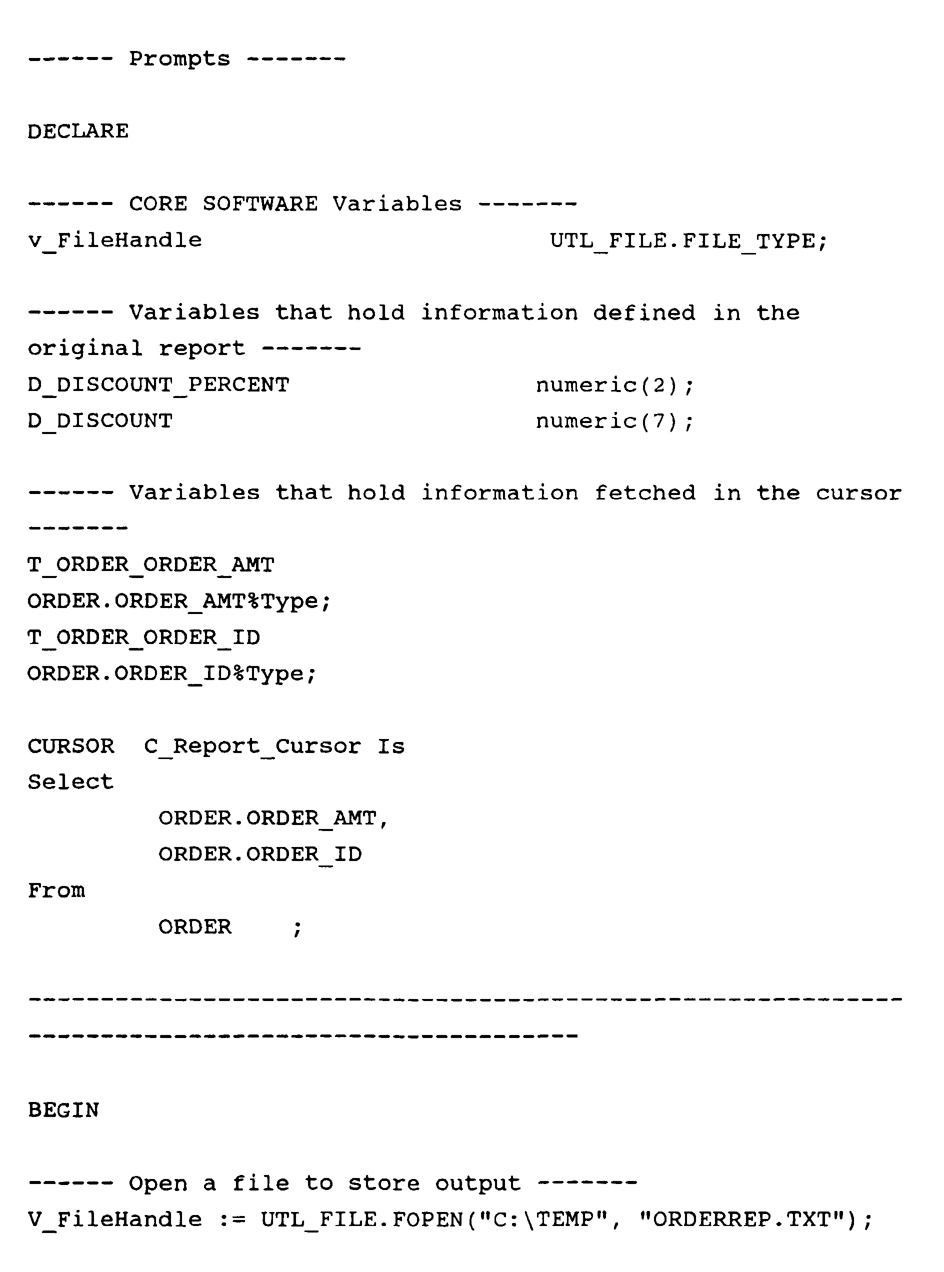

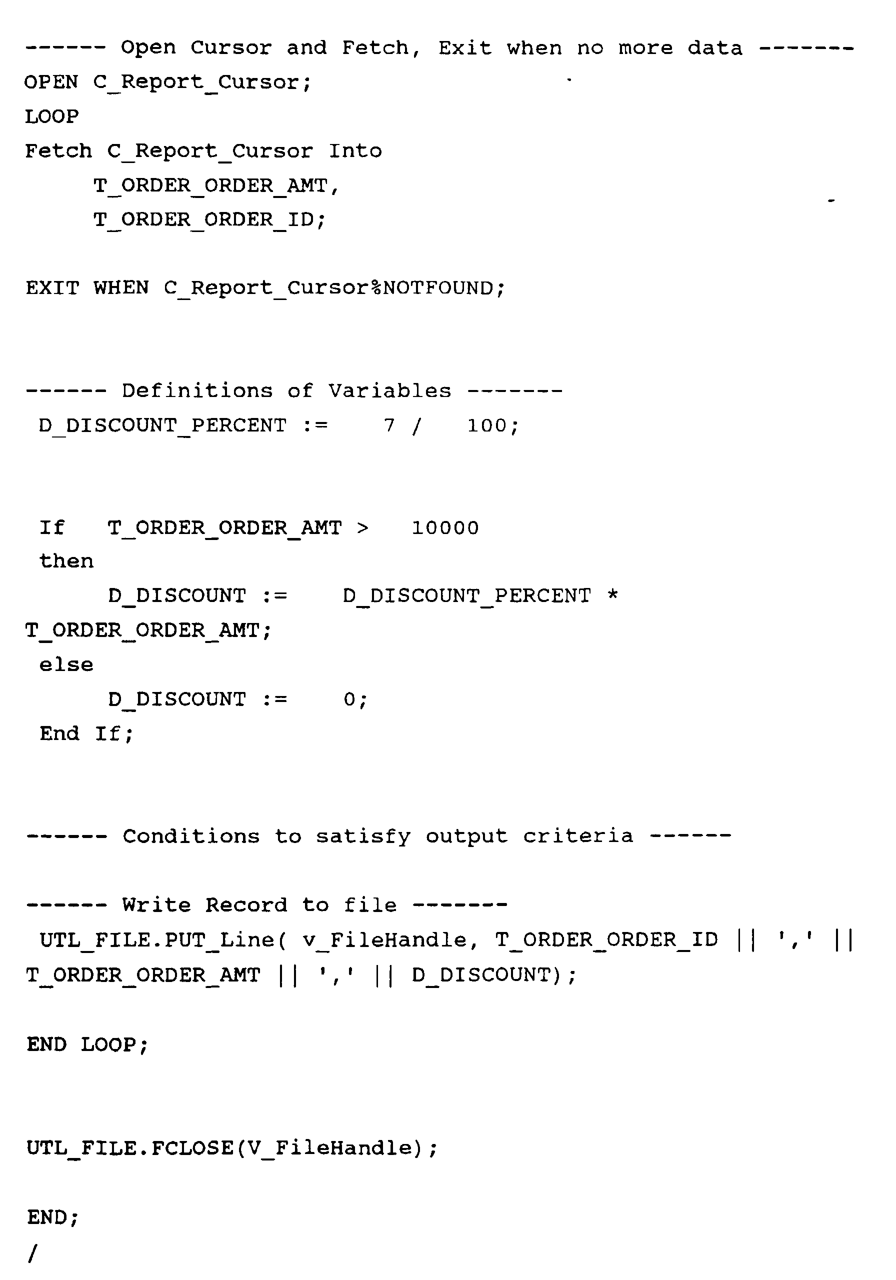

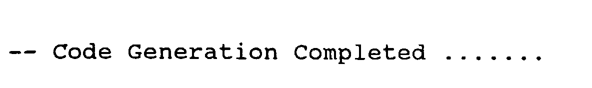

The above has thus described a method of recovering design information of a legacy application program using a common set of tokens to represent corresponding elements of a plurality of different application programs which are in the same or in different languages, and using a set of the tokens relating to a particular legacy application program to display aspects of the legacy application program or to construct another application program in the same or in a different language which is similar to or is modified from the legacy application program.

A person understanding this invention may now conceive of alternate embodiments and enhancements using the principles described herein. All such embodiments and enhancements are considered to be within the spirit and scope of this invention as defined in the claims appended hereto.

## Claims

1. A method of recovering design information of a legacy application program comprising:
(a) parsing an application program to obtain plural parsed program parts,
(b) storing plural tokens which are common to similarly functioning program parts of various computer languages in a database,
(c) mapping the parsed program parts to corresponding ones of the common tokens in the database, and storing the map in the database, and
(d) using the mapped tokens to generate a modified legacy application, a new application in a same language as the legacy application, a new application in a language different from the legacy application, or for display of aspects of the legacy or new application via a user interface.

2. A method as defined in claim 1, in which the modified legacy application or either new application contains substantially the same objects, methods and business rules as contained in the legacy application program, devoid of syntax specific aspects thereof.

3. A method as defined in claim 1 including storing a distinct knowledge database for each of plural program languages, and using one of the knowledge databases and a corresponding one of plural parsers to carry out the parsing step in respect of a source code language used in the legacy application.

4. A method as defined in claim 3, in which the step of storing the map includes selecting ones of the common tokens which correspond to parsed program parts and storing copies thereof in a separate database or record related to the legacy application program.

5. A method as defined in claim 3, in which the step of storing the map includes selecting ones of the common tokens which correspond to parsed program parts and storing pointers to the selected ones of the common tokens in a separate database or record related to the legacy application program.

6. A method as defined in claim 1 including searching the mapped tokens for a particular string, and generating a modified legacy application using a modified string in place of the particular string.

7. A method as defined in claim 6 in which the particular string is comprised of a two character year designation, and substituting a four character year designation in place of the two character year designation as the modified string.

8. A method as defined in claim 1 in which the database is a relational database.

9. A method of recovering design information of a legacy application program comprising using a common set of tokens to represent corresponding elements of a plurality of different application programs which are in the same or in different languages, and using a set of the tokens relating to a particular legacy application program to display aspects of the legacy application program or to construct another application program in the same or in a different language which is similar to or is modified from the legacy application program.

10. A method of recovering design information of a legacy application program comprising translating the legacy application program into tokens representing elements of the program, and automatically rewriting the legacy application program using the tokens to define elements to be included in the rewritten program.

11. A method as defined in claim 10 including rewriting the legacy application program in a computer language which is different from that of the legacy application program.

12. A method as defined in claim 10 including modifying at least one parameter of the legacy application program prior to or as it is being rewritten.
